# EUROPEAN PATENT APPLICATION

(11) **EP 2 930 622 A1**
(43) Date of publication of application: **14.10.2015**
(21) Application number: 13861402.9
(22) Date of filing: 27.11.2013
(51) Int. Cl.: G06F 11/00, G01C 21/00, H04M 11/00

(54) **COMMUNICATION DEVICE, ELECTRONIC EQUIPMENT, COMMUNICATION METHOD AND VEHICLE KEY**

(30) Priority: 05.12.2012 JP 2012266690; 05.12.2012 JP 2012266688; 05.12.2012 JP 2012266689
(71) Applicant: Panasonic Intellectual Property Management Co., Ltd., Osaka-shi, Osaka 540-6207 (JP)
(72) Inventor: HARUMOTO, Hideaki, Osaka-shi, Osaka 540-6207 (JP)
(74) Representative: Grünecker Patent- und Rechtsanwälte PartG mbB
(86) International application number: PCT/JP2013/006981
(87) International publication number: WO 2014/087613

(57) **Abstract**

A narrow-area IF 74 is connectable to an electronic device. A wide-area IF 72 is connectable to a server apparatus. A version information acquisition unit 80 acquires information regarding the version of software stored in the electronic device. An update data acquisition unit 76 acquires update data from the server apparatus based on the information regarding the version. An update unit 78 outputs the update data to the electronic device. After outputting the update data to the electronic device, the update data acquisition unit 76 acquires the information regarding the version of the software stored in the electronic device.

## Description

### [TECHNICAL FIELD]

The present disclosure relates to a communication technology, and more particularly, to a communication apparatus, an electronic device, a communication method, and a key for a vehicle that communicate predetermined data.

### [BACKGROUND ART]

A navigation system is mounted in a vehicle for selecting a route for vehicles and guiding the vehicle to a desired destination. The navigation system is configured to include software and accesses map data. The map data is updated in accordance with the laying of a new road, etc. The map data that has been updated is to be transferred to the navigation system, and the user is in charge of the transfer. As a result, it is troublesome for the user to update the navigation system. To deal with this, a memory in which the map data is stored is mounted in a key of the vehicle. The navigation system uses the data stored in the memory of the key of the vehicle and updates the map data (for example, see Patent document No. 1).

[Patent document No. 1] Japanese Unexamined Patent Application Publication No. 2011-053205

### [DISCLOSURE OF THE INVENTION]

### [PROBLEM TO BE SOLVED BY THE INVENTION]

Regardless of the navigation system, a case arises where access to an electronic device becomes necessary. In that case, the access to the electronic device is desirably easy.

In this background, a purpose of the present disclosure is to provide a technology for facilitating access to an electronic device.

### [MEANS TO SOLVE THE PROBLEM]

A communication apparatus according to one embodiment of the present disclosure includes: a first interface that is connectable, via a first network, to an electronic device that stores software subject to update; a second interface that is connectable, via a second network that is different from the first network, to a server apparatus that stores update data for updating the software stored in the electronic device to which the first interface is connectable; a first acquisition unit that acquires information regarding the version of the software stored in the electronic device from the electronic device to which the first interface is connected and stores the information regarding the version in a memory; a second acquisition unit that acquires the update data from the server apparatus to which the second interface is connected based on the information regarding the version stored in the memory even when the first interface is not connected to the electronic device and stores the update data in the memory; and an update unit that outputs the update data stored in the memory to the electronic device to which the first interface is connected even when the second interface is not connected to the server apparatus.

Optional combinations of the aforementioned constituting elements and implementations of the invention in the form of methods, apparatuses, systems, recording mediums, and computer programs may also be practiced as additional modes of the present disclosure.

### [ADVANTAGE OF THE INVENTION]

According to the present disclosure, access to an electronic device can be facilitated.

### [BRIEF DESCRIPTION OF THE DRAWINGS]

Fig. 1 is a diagram illustrating the configuration of a communication system according to a first embodiment of the present disclosure;
Fig. 2 is a diagram illustrating the configuration of a server apparatus shown in Fig. 1;
Fig. 3 is a diagram illustrating a data structure of a management record shown in Fig. 2;
Fig. 4 is a diagram illustrating the configuration of a communication apparatus shown in Fig. 1;
Fig. 5 is a diagram illustrating the configuration of a vehicle-mounted apparatus shown in Fig. 1;
Fig. 6 is a sequence diagram illustrating a procedure of an initial process performed by a communication system shown in Fig. 1;
Fig. 7 is a sequence diagram illustrating a procedure of a download process performed by the communication system shown in Fig. 1;
Fig. 8 is a sequence diagram illustrating a procedure of an update process performed by the communication system shown in Fig. 1;
Fig. 9 is a flowchart illustrating a procedure of a communication process performed by the communication apparatus shown in Fig. 4;
Fig. 10 is a flowchart illustrating a procedure of a communication process that follows that of Fig. 9;
Fig. 11 is a flowchart illustrating a procedure of a communication process performed by the server apparatus shown in Fig. 2;
Fig. 12 is a flowchart illustrating a procedure of a communication process that follows that of Fig. 11;
Fig. 13 is a flowchart illustrating a procedure of a communication process performed by the vehicle-mounted apparatus shown in Fig. 5;
Fig. 14 is a sequence diagram illustrating a procedure of an update process performed by a communication system according to a second embodiment of the present disclosure;
Fig. 15 is a flowchart illustrating a procedure of a communication process performed by a communication apparatus according to the second embodiment of the present disclosure;
Fig. 16 is a flowchart illustrating a procedure of a communication process that follows that of Fig. 15;
Fig. 17 is a flowchart illustrating a procedure of a communication process performed by a vehicle-mounted apparatus according to the second embodiment of the present disclosure;
Fig. 18 is a diagram illustrating the configuration of a communication system according to a third embodiment of the present disclosure;
Fig. 19 is a diagram illustrating the configuration of a server apparatus shown in Fig. 18;
Fig. 20 is a diagram illustrating the data structure of a management record shown in Fig. 19;
Fig. 21 is a diagram illustrating the configuration of a communication apparatus shown in Fig. 18;
Fig. 22 is a diagram illustrating the configuration of a vehicle-mounted apparatus shown in Fig. 18;
Fig. 23 is a sequence diagram illustrating a procedure of an initial process performed by the communication system shown in Fig. 18;
Fig. 24 is a sequence diagram illustrating a procedure of an update process performed by the communication system shown in Fig. 18;
Fig. 25 is a flowchart illustrating a procedure of a communication process performed by the communication apparatus shown in Fig. 21;
Fig. 26 is a flowchart illustrating a procedure of a communication process that follows that of Fig. 25;
Fig. 27 is a flowchart illustrating a procedure of a communication process that follows that of Fig. 26;
Fig. 28 is a flowchart illustrating a procedure of a communication process performed by the server apparatus shown in Fig. 19;
Fig. 29 is a flowchart illustrating a procedure of a communication process that follows that of Fig. 28;
Fig. 30 is a flowchart illustrating a procedure of a communication process performed by the vehicle-mounted apparatus shown in Fig. 22;
Fig. 31 is a diagram illustrating the configuration of a server apparatus according to a forth embodiment of the present disclosure;
Fig. 32 is a diagram illustrating a data structure of a management record shown in Fig. 31;
Fig. 33 is a diagram illustrating a state transition in the server apparatus shown in Fig. 31;
Fig. 34 is a diagram illustrating the configuration of a communication apparatus according to the forth embodiment of the present disclosure;
Fig. 35 is a diagram illustrating the configuration of a vehicle-mounted apparatus according to the forth embodiment of the present disclosure;
Fig. 36 is a sequence diagram illustrating a procedure of an initial process performed by a communication system according to the forth embodiment of the present disclosure;
Fig. 37 is a sequence diagram illustrating a procedure of data communication performed by the communication system according to the forth embodiment of the present disclosure;
Fig. 38 is a sequence diagram illustrating a procedure of a communication apparatus changing process performed by a communication system according to the forth embodiment of the present disclosure;
Fig. 39 is a sequence diagram illustrating a procedure of a process performed when a vehicle key is lost by the communication system according to the forth embodiment of the present disclosure;
Fig. 40 is a sequence diagram illustrating a procedure of a ticket updating process performed by the communication system according to the fourth embodiment of the present disclosure;
Fig. 41 is a flowchart illustrating a procedure of a communication process performed by a communication apparatus shown in Fig. 33;
Fig. 42 is a flowchart illustrating a procedure of a communication process that follows that of Fig. 41;
Fig. 43 is a flowchart illustrating a procedure of a communication process performed by the server apparatus shown in Fig. 31;
Fig. 44 is a flowchart illustrating a procedure of a communication process performed by a vehicle-mounted apparatus shown in Fig. 34;
Fig. 45 is a sequence diagram illustrating a procedure of an initial process performed by a communication system according to a fifth embodiment of the present disclosure;
Fig. 46 is a diagram illustrating the configuration of a communication apparatus according to an exemplary variation of the first or second embodiment of the present disclosure;
Fig. 47 is a diagram illustrating the configuration of a vehicle-mounted apparatus according to the exemplary variation of the first or second embodiment of the present disclosure;
Fig. 48 is a sequence diagram illustrating a procedure of an initial process performed by a communication system according to the exemplary variation of the first or second embodiment of the present disclosure;
Fig. 49 shows a sequence illustrating a procedure of an update process performed by a communication system according to the exemplary variation of the first or second embodiment of the present disclosure and is a diagram illustrating differences from Fig. 8;
Fig. 50 shows a sequence illustrating a procedure of an update process performed by a communication system according to an exemplary variation of the first or second embodiment of the present disclosure and is a diagram illustrating differences from Fig. 14;
Fig. 51 is a flowchart illustrating a procedure of a communication process performed by the communication apparatus shown in Fig. 46 and is a diagram illustrating differences from Fig. 9;
Fig. 52 is a flowchart illustrating a procedure of the communication process performed by the communication apparatus shown in Fig. 46 and is a diagram illustrating differences from Fig. 15;
Fig. 53 is a flowchart illustrating a procedure of a communication process performed by the vehicle-mounted apparatus shown in Fig. 47 and is a diagram illustrating differences from Fig. 13;
Fig. 54 is a flowchart illustrating a procedure of the communication process performed by the vehicle-mounted apparatus shown in Fig. 47 and is a diagram illustrating differences from Fig. 17; and
Fig. 55 is a flowchart illustrating a procedure of transmitting a ticket that permits access to a communication apparatus from the vehicle-mounted apparatus according to the exemplary variation of the first or second embodiment of the present disclosure.

### [BEST MODE FOR CARRYING OUT THE INVENTION]

### (First embodiment)

Before a specific explanation of a first embodiment of the present disclosure is given, an explanation will be given regarding knowledge on which the first embodiment is based. An example of a vehicle-mounted apparatus is a car navigation apparatus. It may become necessary to update a program or software for map data or the like of a vehicle-mounted apparatus after a vehicle is sold. In order to deal with this, methods are commonly practiced where rewriting is manually performed by a mechanic after bringing the vehicle to a car dealer, where rewriting is performed by the user after sending a DVD medium or the like by mail to the owner of the vehicle, and where rewriting is performed via the Internet while having a mobile phone modem mounted in the vehicle in advance. In the first method, it is troublesome for the owner to bring his/her car to the car dealer every time, and a workload on the mechanic is also large. In the second method, time and cost for distributing media to all the users become an issue. In the third method, it is necessary for the user to have a contract for a mobile phone line dedicated to the vehicle, and the cost for the owner is high.

In order to deal with this, a memory device is mounted in a vehicle key, and new software is written therein in advance. When the vehicle key is brought in the vehicle and inserted in a key cylinder, software update is performed. A vehicle key is always used being paired with the body of a vehicle and is brought into a house by the owner of the vehicle. Thus, a vehicle key is suitable as a medium for carrying update software to the vehicle. However, it is necessary for a maker or a car dealer of the vehicle to make an announcement to the owner every time a reason for updating the software arises and for the owner to rewrite update software every time after downloading the update software to a PC via the Internet. Thus, this is troublesome. Also, if a vehicle key is configured such that the vehicle key has a network function that allows for automatic acquisition, the vehicle key may become large and heavy, and the battery of the vehicle key may be heavily consumed.

The first embodiment of the present disclosure relates to a communication system for updating software of a vehicle-mounted apparatus via a communication apparatus such as a mobile phone terminal. In the embodiment, a dedicated application that allows software of a vehicle-mounted apparatus to be updated is downloaded in a communication apparatus possessed by the owner of a vehicle. An example of the communication apparatus is a smartphone. The dedicated application acquires update data that is suitable for the vehicle from a server apparatus via a wide area network of the communication apparatus and stores the update data. When the communication apparatus and the vehicle-mounted apparatus are connected to each other in order for charging, music reproduction, or the like, the update data stored in the communication apparatus is transferred to the vehicle-mounted apparatus as a background process, and the software of the vehicle-mounted apparatus is updated.

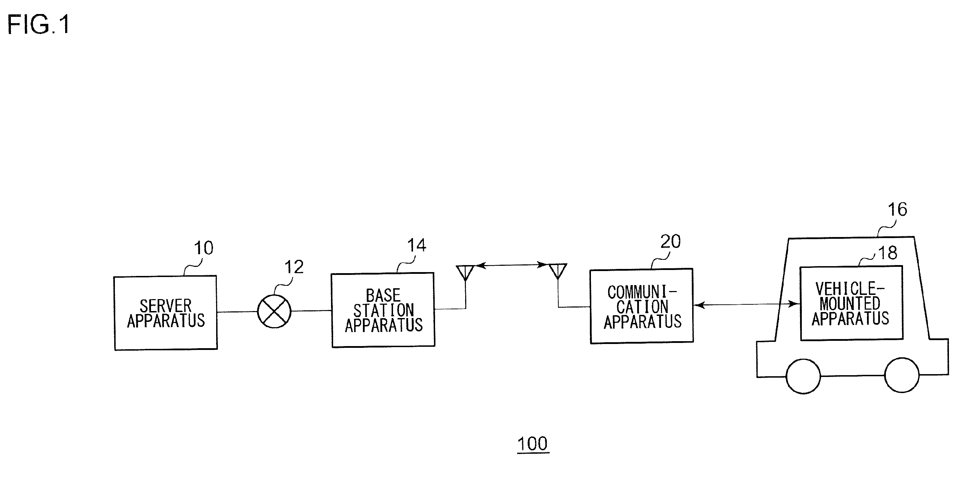

Fig. 1 illustrates the configuration of a communication system 100 according to the first embodiment of the present disclosure. The communication system 100 includes a server apparatus 10, a network 12, a base station apparatus 14, a vehicle-mounted apparatus 18, and a communication apparatus 20. The vehicle-mounted apparatus 18 is mounted in a vehicle 16.

The vehicle-mounted apparatus 18 is an electronic device such as a navigation apparatus or the like. The vehicle-mounted apparatus 18 stores software for operating the vehicle-mounted apparatus 18. The software includes firmware of the vehicle-mounted apparatus 18, software for realizing a navigation function, and map data, and these are updated appropriately. In other words, the software is subject to update. The communication apparatus 20 is a wireless apparatus such as a mobile phone terminal, a smartphone, or the like. The communication apparatus 20 is connectable to the vehicle-mounted apparatus 18 via a narrow-area network, which is a first network. An example of the narrow-area network is a universal serial bus (USB). The narrow-area network may have wireless communication such as Bluetooth (registered trademark) and wireless local area network (wireless LAN).

The base station apparatus 14 is connected to the communication apparatus 20 on one end side and is connected to the network 12 on the other end side. As a result, the communication apparatus 20 is connected to the server apparatus 10 via the base station apparatus 14 and the network 12. The connection between the server apparatus 10 and the communication apparatus 20 is achieved via a wide-area network, which is a second network. An example of the wide-area network is a mobile phone line network. The wide-area network between the base station apparatus 14 and the communication apparatus 20 may be a wireless LAN. The server apparatus 10 stores update data for updating software stored in the vehicle-mounted apparatus 18. There does not always need to be one server apparatus 10. The server apparatus 10 may be formed by a cloud system that is formed of a plurality of server groups.

In such a configuration, the communication apparatus 20 acquires information regarding the version of software (hereinafter, referred to as "version information") stored in the vehicle-mounted apparatus 18 from the vehicle-mounted apparatus 18 connected via the narrow-area network and stores the version information in a memory. Even when the communication apparatus 20 is not connected to the vehicle-mounted apparatus 18, the communication apparatus 20 acquires update data from the server apparatus 10 connected via the wide-area network based on the version information stored in the memory and stores the update data in the memory. Even when the communication apparatus 20 is not connected to the server apparatus 10, the communication apparatus 20 outputs the update data stored in the memory to the vehicle-mounted apparatus 18 connected via the narrow-area network. The vehicle-mounted apparatus 18 updates the software by using the update data. After outputting the update data to the vehicle-mounted apparatus 18, the communication apparatus 20 acquires the version information of the software stored in the vehicle-mounted apparatus 18 and stores the version information in the memory.

In performing software update, unrestricted access to the vehicle-mounted apparatus 18 by a communication apparatus other than that of the owner of the vehicle is not desirable in terms of security and also in terms of charges for the communication fee due to the use by a plurality of communication apparatuses. Therefore, by transmitting a passcode that is unique to the vehicle-mounted apparatus 18 from the communication apparatus 20 and checking the validity by the vehicle-mounted apparatus 18 when the communication apparatus 20 is connected to the vehicle-mounted apparatus 18 via the narrow-area network, the communication apparatus 20 is assured to be a personal possession of the owner of the vehicle.

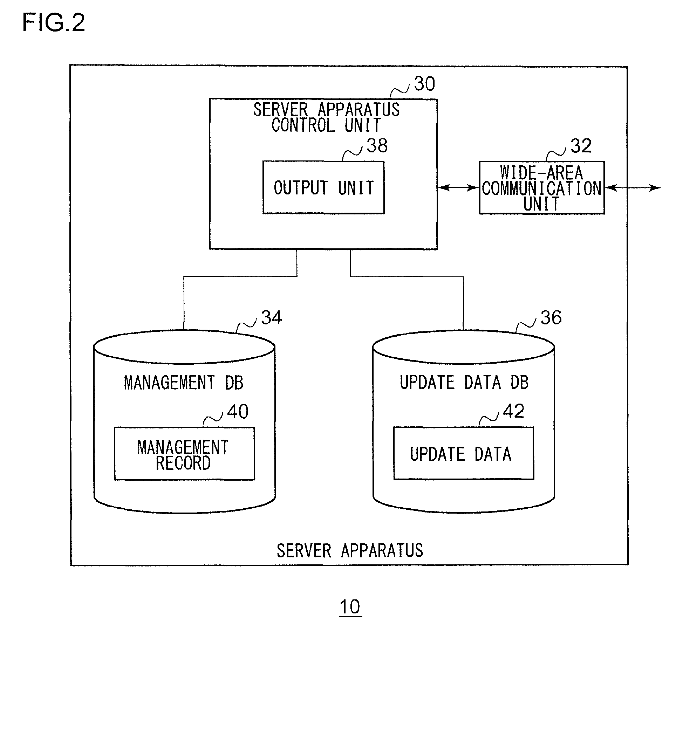

Fig. 2 illustrates the configuration of the server apparatus 10. The server apparatus 10 includes a server apparatus control unit 30, a wide-area communication unit 32, a management DB 34, and update data DB 36. The server apparatus control unit 30 includes an output unit 38. The management DB 34 includes a management record 40. The update data DB 36 includes update data 42.

The wide-area communication unit 32 is connectable to the communication apparatus 20 via the network 12 and the base station apparatus 14. In other words, the wide-area communication unit 32 is provided with a communication function that corresponds to a wide-area network. As described previously, the communication apparatus 20 is connectable via a narrow-area network to the vehicle-mounted apparatus 18 that stores software subject to update and is also connectable to the server apparatus 10 via a wide-area network that is different from the narrow-area network. In the following, the configuration of the server apparatus 10 will be explained in the following order: (1) initial process; (2) download process and update process; and (3) deletion process.

### (1) Initial process

This corresponds to the initial registration of the communication apparatus 20 in order for the communication apparatus 20 to download an application for update that is used for updating the software of the vehicle-mounted apparatus 18. The application for update is application software that is downloaded to the communication apparatus 20. By operating the application for update, the communication apparatus 20 acquires data (hereinafter, referred to as "update data") necessary for the software update of the vehicle-mounted apparatus 18 from the server apparatus 10 and transfers the data to the vehicle-mounted apparatus 18. When a person who is becoming the owner of a vehicle 16 makes a contract for purchasing the vehicle at a car dealer, a vehicle-mounted apparatus 18 that is specified in a contract document is mounted in the vehicle 16 at a car maker or the car dealer. The version of software mounted in the vehicle-mounted apparatus 18 at this time is initial software.

Next, when the vehicle 16 is handed over to the owner, the owner downloads an application for update onto a communication apparatus 20 from the server apparatus 10. In response to this, a server apparatus control unit 30 receives information for identifying the communication apparatus 20 (hereinafter, referred to as "communication apparatus ID") from the communication apparatus 20 via a wide-area communication unit 32. A predetermined password may be received at that time. The server apparatus control unit 30 generates a management record 40 based on the communication apparatus ID and stores the management record 40 in a management DB 34. This corresponds to the registration of the communication apparatus 20 in the server apparatus 10.

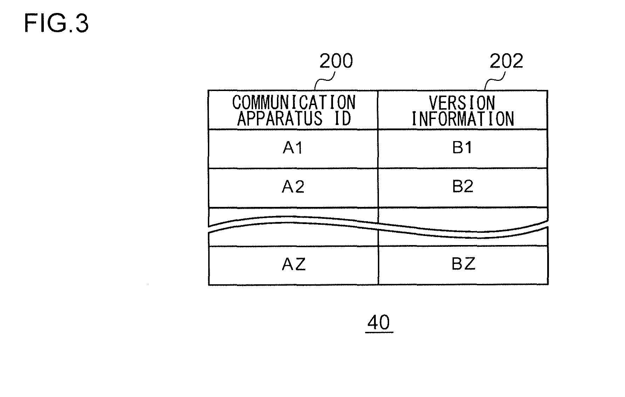

Fig. 3 illustrates a data structure of the management record 40. As illustrated in the figure, the data structure includes a communication apparatus ID column 200 and a version information column 202. A communication apparatus ID is stored in the communication apparatus ID column 200. The version information column 202 shows the version of software stored in a vehicle-mounted apparatus 18 to which the communication apparatus 20 identified by the communication apparatus ID is connectable. In an initial stage, the version information may be blank or may be an initial version. Different from Fig. 3, a management record 40 may be generated for each communication apparatus 20. After registering the communication apparatus 20, the output unit 38 outputs software for updating to the communication apparatus 20 from the wide-area communication unit 32. As a result, the software for updating is stored in the communication apparatus 20. Fig. 2 is referred back.

### (2) Download process and update process

These processes correspond to a process that occurs when a reason for updating the software of the vehicle-mounted apparatus 18 arises. The software update is performed, for example, when a bug in the software of the vehicle-mounted apparatus 18 is found after the release or when there is update for map data for navigation. When a reason for updating the software arises, the server apparatus control unit 30 searches the management DB 34 and selects at least one communication apparatus 20 that requires software update. The output unit 38 provides, via the wide-area communication unit 32, simultaneous notification indicating the generation of a difference that is addressed to a communication apparatus ID that has been selected. If a communication ID is a mobile phone number, an SMS (short message) may be used for notification. This notification is received by the software for updating in the communication apparatus 20.

Subsequently, the server apparatus control unit 30 receives a list of software that needs update from the communication apparatus 20 via the wide-area communication unit 32. Even when the wide-area communication unit 32 is not connected to the communication apparatus 20, this list is generated based on the version information of software acquired from the vehicle-mounted apparatus 18 in the communication apparatus 20. Data for updating the software shown in the list corresponds to the update data 42. The server apparatus control unit 30 identifies the update data 42 to be transmitted. The output unit 38 transmits the update data 42 to the communication apparatus 20 via the wide-area communication unit 32. This corresponds to the outputting of the update data to the communication apparatus 20 based on the version information stored in the communication apparatus 20 and the storing of the update data in the communication apparatus 20 by the server apparatus control unit 30, even when the communication apparatus 20 is not connected to the vehicle-mounted apparatus 18. The downloading of the update data by the software for updating of the communication apparatus 20 is performed as a background process. Since this is a background process, no problem is caused by the operation of another application other than the software for updating on the communication apparatus 20 during the distribution.

The server apparatus control unit 30 receives the version information of the software stored in the vehicle-mounted apparatus 18 from the communication apparatus 20 via the wide-area communication unit 32. The server apparatus control unit 30 stores the version information that has been received in the management record 40. The version information that has been updated is linked with the communication apparatus ID and stored in the management record 40.

### (3) Deletion process

This corresponds to the deletion of the registration of a communication apparatus ID from the management DB 34. In a case such as a case where the owner is selling the vehicle 16 as a used car, the registration related to the communication apparatus 20 of the owner should be deleted from the management DB 34. By using the communication apparatus 20, the original owner operates a command of the software for updating so as to delete the registration. When the server apparatus control unit 30 receives a request for deletion from the communication apparatus 20 via the wide-area communication unit 32, the server apparatus control unit 30 deletes a communication apparatus ID that corresponds to the request for deletion from the update data 42. Alternatively, the original owner or a new owner may directly apply to a car dealer, and a server manager may delete the communication apparatus ID stored in the management DB 34.

The configuration is implemented in hardware by any CPU of a computer, memory or other LSI's, and in software by a program or the like loaded into the memory. Fig. 2 depicts functional blocks implemented by the cooperation of hardware and software. Thus, a person skilled in the art should appreciate that there are many ways of accomplishing these functional blocks in various forms in accordance with the components of hardware only or the combination of hardware and software.

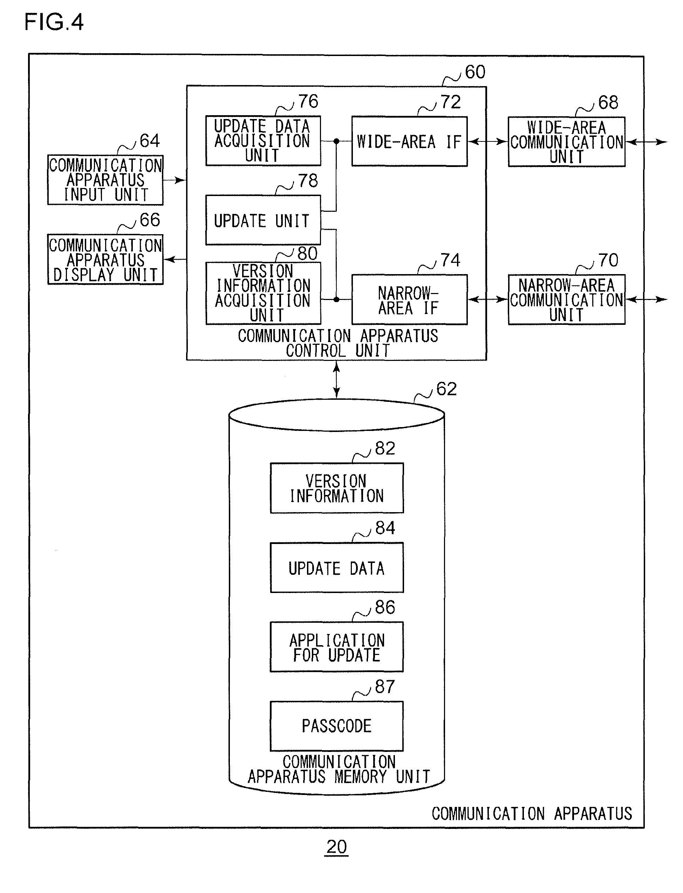

Fig. 4 illustrates the configuration of the communication apparatus 20. The communication apparatus 20 includes a communication apparatus control unit 60, a communication apparatus memory unit 62, a communication apparatus input unit 64, a communication apparatus display unit 66, a wide-area communication unit 68, and a narrow-area communication unit 70. The communication apparatus control unit 60 includes a wide-area IF 72, a narrow-area IF 74, an update data acquisition unit 76, an update unit 78, and a version information acquisition unit 80. The communication apparatus memory unit 62 includes version information 82, update data 84, an application 86 for update, and a passcode 87.

The narrow-area communication unit 70 communicates with the vehicle-mounted apparatus 18 via the narrow-area network. The narrow-area communication unit 70 is provided with a communication function that corresponds to a narrow-area network. Via the narrow-area communication unit 70, the narrow-area IF 74 is connectable to the vehicle-mounted apparatus 18 that stores software subject to update, through the narrow-area network. In other words, the narrow-area IF 74 is an interface for connecting to the narrow-area communication unit 70 and is also an interface for connecting to the vehicle-mounted apparatus 18 via the narrow-area communication unit 70. Such a narrow-area IF 74 may be referred to as a first interface.

The wide-area communication unit 68 directly communicates with the base station apparatus 14 and also communicates with the server apparatus 10 via the base station apparatus 14 and the network 12. The wide-area communication unit 68 is provided with a function that corresponds to a wide-area network. Via the wide-area communication unit 68, the wide-area IF 72 is connectable to the server apparatus 10 that stores update data for updating the software stored in the vehicle-mounted apparatus 18, through the wide-area network. In other words, the wide-area IF 72 is an interface for connecting to the wide-area communication unit 68 and is also an interface for connecting to the server apparatus 10 via the wide-area communication unit 68. Such a wide-area IF 72 may be referred to as a second interface. The communication apparatus input unit 64 receives an instruction to the communication apparatus 20 from the user. The communication apparatus input unit 64 is formed with a button or the like. The communication apparatus input unit 64 outputs the instruction that has been received to the communication apparatus control unit 60. The communication apparatus display unit 66 is provided with a display and displays, on the display, an image, text, or the like according to the instruction from the communication apparatus control unit 60. In the following, the configuration of the communication apparatus 20 will be explained in the following order: (1) initial process; (2) download process; and (3) update process.

### (1) Initial process

When the person who is becoming the owner of a vehicle 16 makes a contract for purchasing the vehicle at a car dealer, a vehicle-mounted apparatus 18 that is specified in a contract document is mounted in the vehicle 16 at a car maker or the car dealer. The version of software mounted in the vehicle-mounted apparatus 18 at this time is initial software. Next, a description will be made regarding a step that occurs after the vehicle 16 is handed over to the owner. In order for a communication apparatus control unit 60 to download an application for update from a communication apparatus 20, a wide-area communication unit 68 outputs a communication apparatus ID to the communication apparatus 20 from a wide-area IF 72. A password may be output along with the communication apparatus ID at that time. Subsequently, the wide-area IF 72 receives the application for update from a server apparatus 10 via the wide-area communication unit 68. A communication apparatus control unit 60 stores the application for update in a communication apparatus memory unit 62. The communication apparatus control unit 60 performs installation for the application for update so that the application for update is in an executable state. This corresponds to an application 8 for update of the communication apparatus memory unit 62.

When the software for updating is installed in the communication apparatus 20, the communication apparatus control unit 60 displays a message stating "Please connect to a vehicle-mounted apparatus." on the communication apparatus display unit 66. Upon confirming this display, the owner of the communication apparatus 20 brings the communication apparatus 20 inside the vehicle 16 and connects the communication apparatus 20 to the vehicle-mounted apparatus 18 via a narrow-area network.

A request for inputting a passcode that proves that the communication apparatus 20 is a communication apparatus that is personally owned by the owner of the vehicle (or a "specified communication apparatus" that is equivalent thereto) is displayed on the communication apparatus display unit 66 at this time. The passcode is a secret code unique to the vehicle-mounted apparatus 18 that is provided to the owner from the car dealer at the time of purchasing the vehicle, and the owner needs to manage the passcode so that the passcode will not be leaked. When the owner inputs the passcode through a communication apparatus input unit 64, the passcode is transmitted to the vehicle-mounted apparatus 18 via a narrow-area network. The vehicle-mounted apparatus 18 checks, in an authentication unit 152, the passcode that has been input against a passcode 156 saved in a vehicle-mounted apparatus memory unit 132 so as to confirm the validity of the passcode. If the checking of the passcode is OK, the vehicle-mounted apparatus 18 recognizes as follows: "the communication apparatus 20 is a communication apparatus personally owned by the owner of the vehicle," and notifies the communication apparatus 20 that the confirmation of the validity is OK.

If the passcode is not correctly input, the vehicle-mounted apparatus 18 determines that the communication terminal is a possession of somebody other than the owner of the vehicle (or that the communication terminal is not a communication terminal specified for software update) and does not perform the acquisition of the version information of the software, the download of update data, or the like. However, since the communication apparatus 20 may be brought inside the vehicle 16 for a reason of charging, music reproduction, or the like, any operation other than the download of the update data (charging and music reproduction) may be permitted, or a restriction may be separately provided.

When the checking of the passcode is OK, the version information acquisition unit 80 acquires, from the vehicle-mounted apparatus 18 to which a narrow-area IF 74 is connected, the version information of the software stored in the vehicle-mounted apparatus 18 and stores the version information in a communication apparatus memory unit 62 as version information 82. Information related to the type of the software may be acquired along with the version information. The version information acquisition unit 80 may be referred to as a first acquisition unit, and the communication apparatus memory unit 62 may be referred to as a memory.

If the owner inputs the passcode once, followed by the confirmation of the validity thereof, when the communication apparatus 20 is connected to the vehicle-mounted apparatus 18 via the narrow-area network after the software for updating is installed in the communication apparatus 20, the communication apparatus 20 stores the passcode in the passcode 87 and transmits the passcode stored by the communication apparatus 20 to the vehicle-mounted apparatus 18 without the owner inputting the passcode every time the communication apparatus 20 is connected to the vehicle-mounted apparatus 18 thereafter. Alternatively, a method may be employed where the vehicle-mounted apparatus 18 issues a ticket for the communication apparatus 20 when the validity is confirmed instead of storing the passcode and the authentication is performed using the ticket at the time of the connection thereafter.

### (2) Download process

The update data acquisition unit 76 receives notification indicating the generation of a difference from the server apparatus 10 via the wide-area IF 72. The update data acquisition unit 76 may be referred to as a second acquisition unit. Upon receiving the notification indicating the generation of a difference, the update data acquisition unit 76 checks the version information 82 stored in the communication apparatus memory unit 62 and checks the type of the software, thereby listing which software needs to be updated. If the update is the first update after the vehicle 16 is sold by the car dealer, the type and version information of the software of the vehicle-mounted apparatus 18 does not need to be already stored in the communication apparatus memory unit 62. This is because the server apparatus 10 stores the type or version of the software at the time of the shipment of the vehicle and the server apparatus 10 always has a newer version of update data.

The update data acquisition unit 76 outputs a list of software that needs update to the server apparatus 10 via the wide-area IF 72. Subsequently, the communication apparatus control unit 60 displays a message stating "There is update software for the vehicle-mounted apparatus on the server. Would you like to download?" on the communication apparatus display unit 66. This prompts the owner of the vehicle to press a "download" button on a touch panel screen that constitutes the communication apparatus input unit 64. When the owner presses down the "download" button, the update data acquisition unit 76 starts downloading the update data via the wide-area IF 72. The update data acquisition unit 76 may download the update data automatically without asking the owner every time.

As described, even when the narrow-area IF 74 is not connected to the vehicle-mounted apparatus 18, the update data acquisition unit 76 acquires update data from the server apparatus 10 to which the wide-area IF 72 is connected based on the version information 82 stored in the communication apparatus memory unit 62. Further, the update data acquisition unit 76 stores the update data in the communication apparatus memory unit 62 as update data 84. As described above, the download of the update data is performed as a background process. When all the necessary update data is received, the communication apparatus control unit 60 displays a message such as "The update software is ready. Please connect the smartphone to the vehicle-mounted apparatus." on the communication apparatus display unit 66 and prompts the owner to connect the communication apparatus 20 to the vehicle-mounted apparatus 18.

### (3) Update process

After a screen prompting the connection to the vehicle-mounted apparatus 18 is displayed by the communication apparatus display unit 66, the owner connects the communication apparatus 20 with the vehicle-mounted apparatus 18 through the narrow-area network. As described above, the connection may be realized not only for a case where the update data is transferred but also a case where the owner merely wishes to reproduce music data stored in the communication apparatus 20 via the vehicle-mounted apparatus 18 and a case where the owner wishes to charge the communication apparatus 20 via a USB. When the narrow-area IF 74 is connected via the narrow-area network, the update unit 78 reads out information such as a model name, the version of software that is mounted, and the like from the vehicle-mounted apparatus 18. At that time, log information for errors that have occurred in the past in the vehicle-mounted apparatus 18 and the like may be read out at the same time. The version information that has been read out is stored in the communication apparatus memory unit 62 as the version information 82.

The update unit 78 determines the necessity of outputting the update data by comparing the version information of the software acquired from the vehicle-mounted apparatus 18 with the version information of the update data 84 stored in the communication apparatus memory unit 62. Giving a detailed description, if the version of the update data 84 is newer than that in the version information 82, the update unit 78 notifies the vehicle-mounted apparatus 18 accordingly via the narrow-area IF 74. Subsequently, the software of the vehicle-mounted apparatus 18 displays announcement indicating "Would you like to update the software of the vehicle-mounted apparatus?" to the owner. When the owner presses down an "update" button displayed on the vehicle-mounted apparatus 18, the update unit 78 outputs the update data 84 stored in the communication apparatus memory unit 62 to the vehicle-mounted apparatus 18 via the narrow-area IF 74. This outputting is also performed as a background process. As described, even when the wide-area IF 72 is not connected to the server apparatus 10, the update unit 78 outputs the update data 84 stored in the communication apparatus memory unit 62 to the vehicle-mounted apparatus 18 to which the narrow-area IF 74 is connected.

When the vehicle-mounted apparatus 18 updates the software by the outputting of the update data to an electronic device by the update unit 78, the version information acquisition unit 80 acquires the version information of the software stored in the vehicle-mounted apparatus 18. This corresponds to the acquisition of updated version information. The version information acquisition unit 80 updates the version information 82 stored in the communication apparatus memory unit 62 by the version information that has been acquired. Further, the update unit 78 outputs notification of the completion of the software update of the vehicle-mounted apparatus 18 to the server apparatus 10 via the wide-area IF 72. The version information may be attached at that time. In response to this, the server apparatus 10 updates the registered information in the management record 40 in the management DB 34. Thereby, the server apparatus 10 is able to store the latest state of the vehicle-mounted apparatus 18, and a vehicle-mounted apparatus 18 subject to update can be easily found out when a next reason for updating software arises.

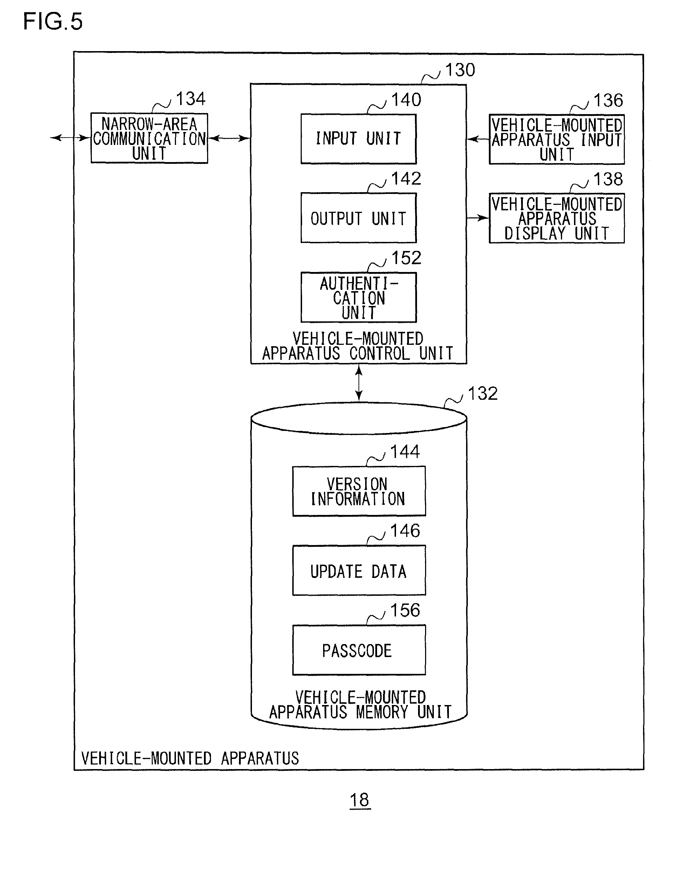

Fig. 5 illustrates the configuration of the vehicle-mounted apparatus 18. The vehicle-mounted apparatus 18 includes a vehicle-mounted apparatus control unit 130, a vehicle-mounted apparatus memory unit 132, a narrow-area communication unit 134, a vehicle-mounted apparatus input unit 136, and a vehicle-mounted apparatus display unit 138. The vehicle-mounted apparatus control unit 130 includes an input unit 140, an output unit 142, and an authentication unit 152, and the vehicle-mounted apparatus memory unit 132 includes version information 144, update data 146, and a passcode 156. The passcode saved in the passcode 156 may be designed such that an initial value provided by the car dealer can be changed later by the owner using the vehicle-mounted apparatus input unit 136.

The narrow-area communication unit 134 is connectable to the communication apparatus 20 via the narrow-area network. The narrow-area communication unit 134 is provided with a communication function that corresponds to a narrow-area network. As described previously, the communication apparatus 20 is connectable to the vehicle-mounted apparatus 18 via the narrow-area network and is also connectable to the server apparatus 10 that stores update data for updating the software stored in the vehicle-mounted apparatus 18 via the wide-area network. After the owner connects the communication apparatus 20 with the vehicle-mounted apparatus 18, the output unit 142 outputs the version information 144 of the vehicle-mounted apparatus memory unit 132 to the communication apparatus 20 and stores the version information 144 in the communication apparatus 20. The vehicle-mounted apparatus control unit 130 receives, from the communication apparatus 20 via the narrow-area communication unit 134, notification indicating that the version of the update data stored in the communication apparatus 20 is newer than the version information 144 in the vehicle-mounted apparatus 18.

The vehicle-mounted apparatus control unit 130 displays, on the vehicle-mounted apparatus display unit 138, announcement indicating "Would you like to update the software of the vehicle-mounted apparatus?" to the owner of the vehicle. When the "update" button on the vehicle-mounted apparatus input unit 136 is pressed down by the user, the output unit 142 receives the update data from the communication apparatus 20. In other words, even when the communication apparatus 20 is not connected to the server apparatus 10, the input unit 140 receives the update data from the communication apparatus 20 to which the narrow-area communication unit 134 is connected.

The download of the update data is performed as a background process. Since this is a background process, operation of another application on the vehicle-mounted apparatus 18 during the distribution does not cause problems basically. The update data that is input is stored as the update data 146 in the vehicle-mounted apparatus memory unit 132. When all the necessary update data is input, the vehicle-mounted apparatus control unit 130 displays a message stating "The software has been updated. Please restart the vehicle-mounted apparatus." on the vehicle-mounted apparatus display unit 138. As a result, the owner is prompted to turn off the power of the vehicle-mounted apparatus 18 once and then turn on the power of the vehicle-mounted apparatus 18 again.

When the owner restarts the vehicle-mounted apparatus 18 in accordance with the prompt, the vehicle-mounted apparatus control unit 130 starts new software by using the update data 146. Further, the output unit 142 transmits notification indicating the completion of the software update to the communication apparatus 20 from the narrow-area communication unit 134. In other words, when the software is updated by the update data, the output unit 142 outputs the version information of the new software stored in the vehicle-mounted apparatus 18 to the communication apparatus 20 to which the narrow-area communication unit 134 is connected and stores the new version information in the communication apparatus 20.

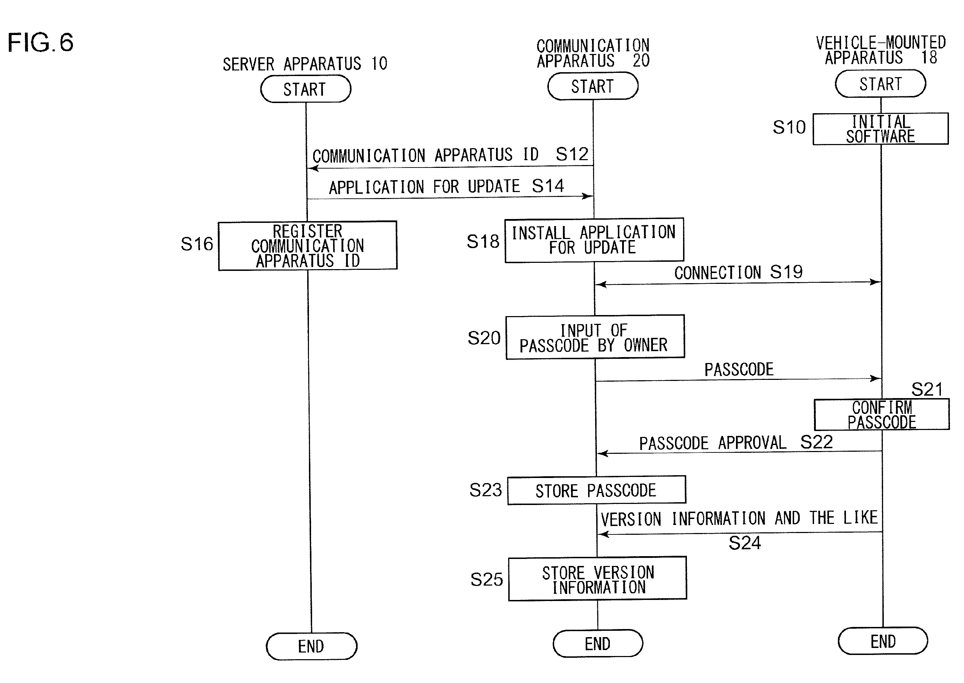

An explanation will be given of the operation of the communication system 100 having the above-stated structure. Fig. 6 is a sequence diagram illustrating a procedure of an initial process performed by the communication system 100. Initial software, which is software of an initial version, is stored in the vehicle-mounted apparatus 18 (S10). The communication apparatus 20 transmits the communication apparatus ID to the server apparatus 10 (S12). The server apparatus 10 transmits the application for update to the communication apparatus 20 (S14). The server apparatus 10 registers the communication apparatus ID (S16), and the communication apparatus 20 installs the application for update (S18). After this, the communication apparatus 20 and the vehicle-mounted apparatus 18 become connected to each other (S19). When the owner inputs the passcode (S20), the vehicle-mounted apparatus 18 confirms whether the communication apparatus 20 is a possession of the owner (S21). When the validity of the passcode is confirmed, the vehicle-mounted apparatus 18 provides the communication apparatus 20 notification indicating that the passcode has been approved (S22), and the communication apparatus 20 stores the passcode input by the owner in the passcode 87 (S23). After this, the vehicle-mounted apparatus 18 performs transmission of the version information to the communication apparatus 20 (S24). The communication apparatus 20 stores the version information (S25). The "notification indicating that the passcode has been approved" and the "transmission of the version information" from the vehicle-mounted apparatus 18 to the communication apparatus 20 in the steps S22 and S24 may be performed at the same time.

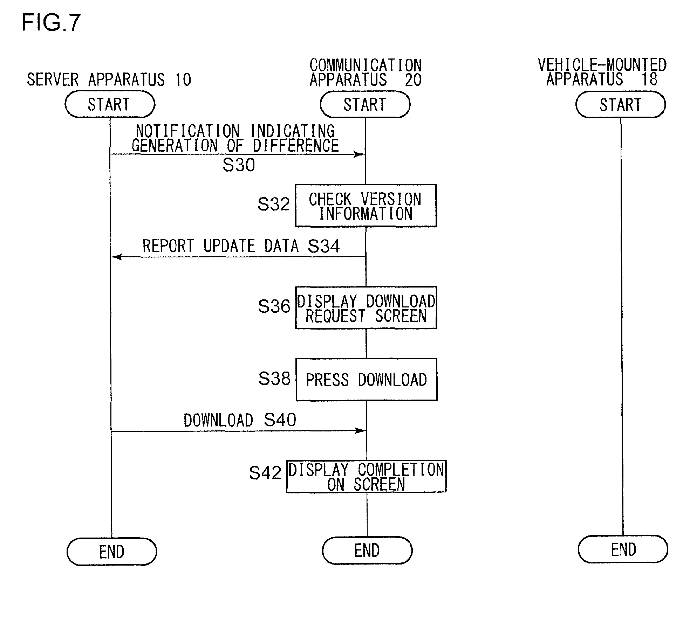

Fig. 7 is a sequence diagram illustrating a procedure of a download process performed by the communication system 100. The server apparatus 10 transmits notification indicating the generation of a difference to the communication apparatus 20 (S30). The communication apparatus 20 checks the version information (S32) and reports the update data to the server apparatus 10 (S34). This corresponds to the outputting of a list of necessary update data. The communication apparatus 20 displays a download request screen (S36), and a download button is pressed down (S38). The server apparatus 10 allows the communication apparatus 20 to download the update data (S40). The communication apparatus 20 displays the completion of the download on a screen (S42).

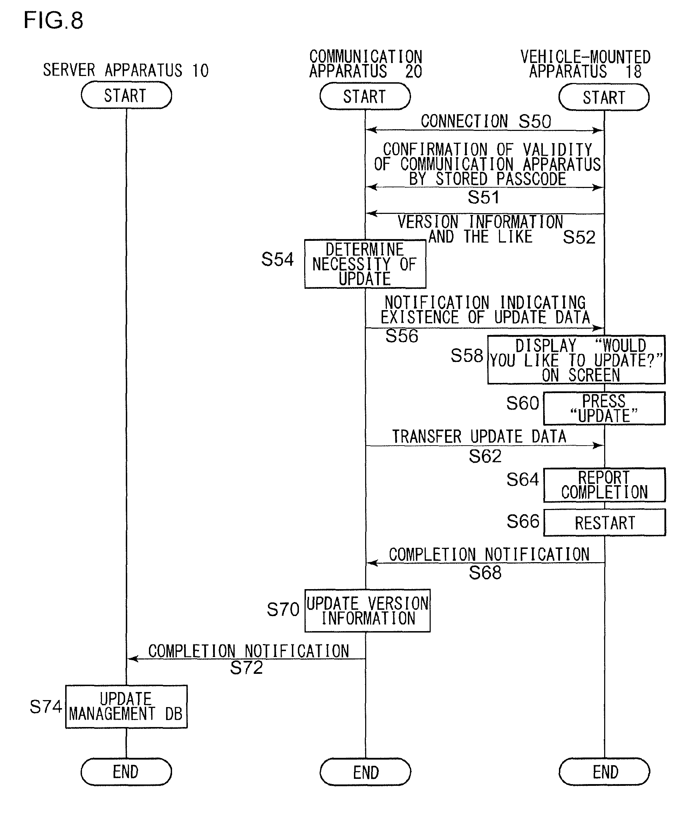

Fig. 8 is a sequence diagram illustrating a procedure of an update process performed by the communication system 100. The communication apparatus 20 and the vehicle-mounted apparatus 18 become connected to each other (S50). The communication apparatus 20 is confirmed as a possession of the owner by the vehicle-mounted apparatus 18 using the passcode that is stored (S51), and the vehicle-mounted apparatus 18 transmits the version information and the like to the communication apparatus 20 (S52). The communication apparatus 20 determines the necessity of update (S54). The communication apparatus 20 notifies the vehicle-mounted apparatus 18 of the existence of the update data (S56). The vehicle-mounted apparatus 18 displays "Would you like to update?" on the screen (S58). When the "update" button is pressed down (S60), the vehicle-mounted apparatus 18 receives the update data transferred from the communication apparatus 20 (S62). The vehicle-mounted apparatus 18 notifies the owner of the completion (S64), and the vehicle-mounted apparatus 18 is restarted (S66). The vehicle-mounted apparatus 18 transmits notification indicating the completion to the communication apparatus 20 (S68). The communication apparatus 20 updates the version information (S70). The communication apparatus 20 transmits notification indicating the completion to the server apparatus 10 (S72). The server apparatus 10 updates the management DB 34 (S74).

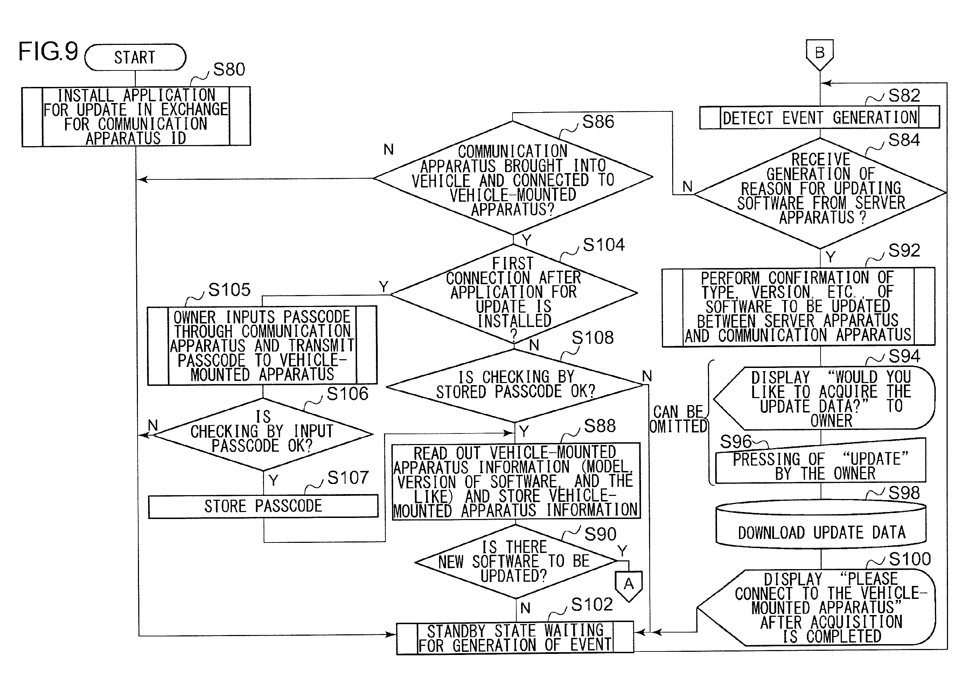

Fig. 9 is a flowchart illustrating a procedure of a communication process performed by the communication apparatus 20. The communication apparatus control unit 60 installs the application for update in exchange for the communication apparatus ID (S80). The communication apparatus 20 then becomes in a standby state waiting for the generation of an event (S102). If the communication apparatus 20 detects the generation of an event (S82) and receives the generation of a reason for updating the software from the server apparatus 10 (Y in S84), the update data acquisition unit 76 performs the confirmation of the type, version, etc., of the software to be updated between the server apparatus 10 and the communication apparatus 20 (S92). The communication apparatus display unit 66 displays a message stating "Would you like to acquire the update data?" to the owner (S94). When the communication apparatus input unit 64 receives the pressing of the "update" by the owner (S96), the update data acquisition unit 76 downloads (in a background process) the update data (S98). The communication apparatus display unit 66 displays a message stating "Please connect to the vehicle-mounted apparatus." after the acquisition is completed (S100). The communication apparatus display unit 66 then becomes in the standby state waiting for the generation of an event (S102).

If the generation of a reason for updating the software is not received from the server apparatus 10 (N in S84) and the communication apparatus 20 is brought into the vehicle 16 and is connected to the vehicle-mounted apparatus 18 (Y in S86), the communication apparatus 20 allows the owner to input the passcode and transmits the passcode to the vehicle-mounted apparatus 18 (S105) if the connection is the first connection after the application for update is installed (Y in S104). If the result of the checking of the passcode in the vehicle-mounted apparatus 18 is OK and the communication apparatus 20 is confirmed to be a possession of the owner (Y in S106), the communication apparatus 20 stores the passcode in the passcode 87 (S107). After that, the version information acquisition unit 80 reads out vehicle-mounted apparatus information (a model, the version of the software, and the like) and stores the vehicle-mounted apparatus information in the communication apparatus memory unit 62 (S88). If the result of the checking of the passcode in the vehicle-mounted apparatus 18 is NG (N in S106), the communication terminal is owned by somebody other than the owner of the vehicle. Thus, the step proceeds to step 102.

If the communication apparatus 20 is brought into the vehicle 16 and is connected to the vehicle-mounted apparatus 18 (Y in S86), the communication apparatus 20 transmits the passcode that is already stored in the passcode 87 to the vehicle-mounted apparatus 18 so as to obtain the result of checking if the connection is not the first connection after the application for update is installed (N in S104). If the checking turns out to be OK (Y in S108), the version information acquisition unit 80 reads out the vehicle-mounted apparatus information and stores the vehicle-mounted apparatus information in the communication apparatus memory unit 62 (S88). If the result of the checking is NG (N in S108), the communication terminal is owned by somebody other than the owner of the vehicle. Thus, the step proceeds to step 102.

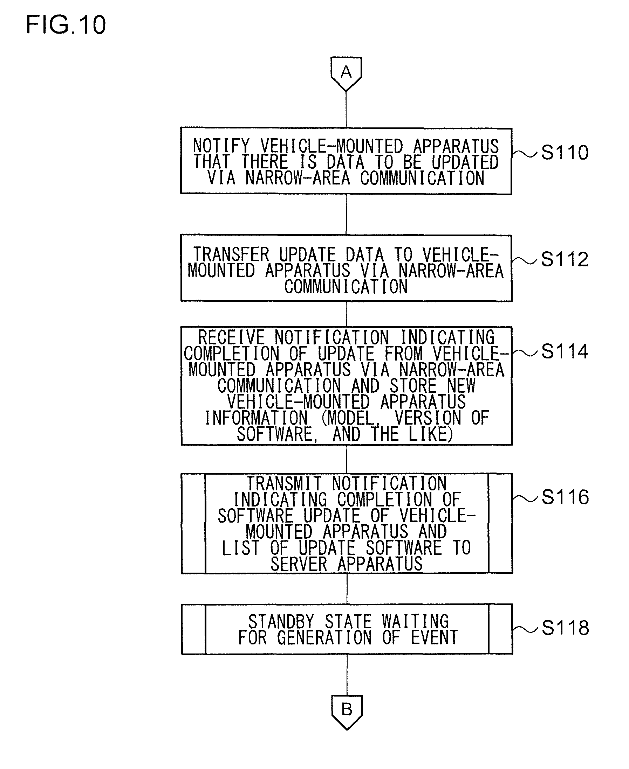

If there is no new software to be updated after the vehicle-mounted apparatus information is read out and stored in step S88 (N in S90), the communication apparatus 20 becomes in the standby state waiting for the generation of an event (S102). If the communication apparatus 20 is not brought into the vehicle 16 so as to be connected to the vehicle-mounted apparatus 18 (N in S86), the step proceeds to step 102. If there is new software to be updated (Y in S90), the step proceeds to step 110 shown in Fig. 10. Also, there is a case where the step proceeds from step 118 shown in Fig. 10 to step 82.

Fig. 10 is a flowchart illustrating a procedure of a communication process that follows that of Fig. 9. The update unit 78 notifies the vehicle-mounted apparatus 18 that there is data to be updated via narrow-area communication (S110). The update unit 78 transfers the update data to the vehicle-mounted apparatus 18 via narrow-area communication (in a background process) (S112). The version information acquisition unit 80 receives notification indicating the completion of update from the vehicle-mounted apparatus 18 via the narrow-area communication and stores new vehicle-mounted apparatus information (a model, the version of the software, and the like) in the communication apparatus memory unit 62 (S114). The update unit 78 transmits the notification indicating the completion of software update of the vehicle-mounted apparatus 18 and a list of update software to the server apparatus 10 (S116). The communication apparatus 20 becomes in a standby state waiting for the generation of an event (S118). After this, the step proceeds to step 82 shown in Fig. 9.

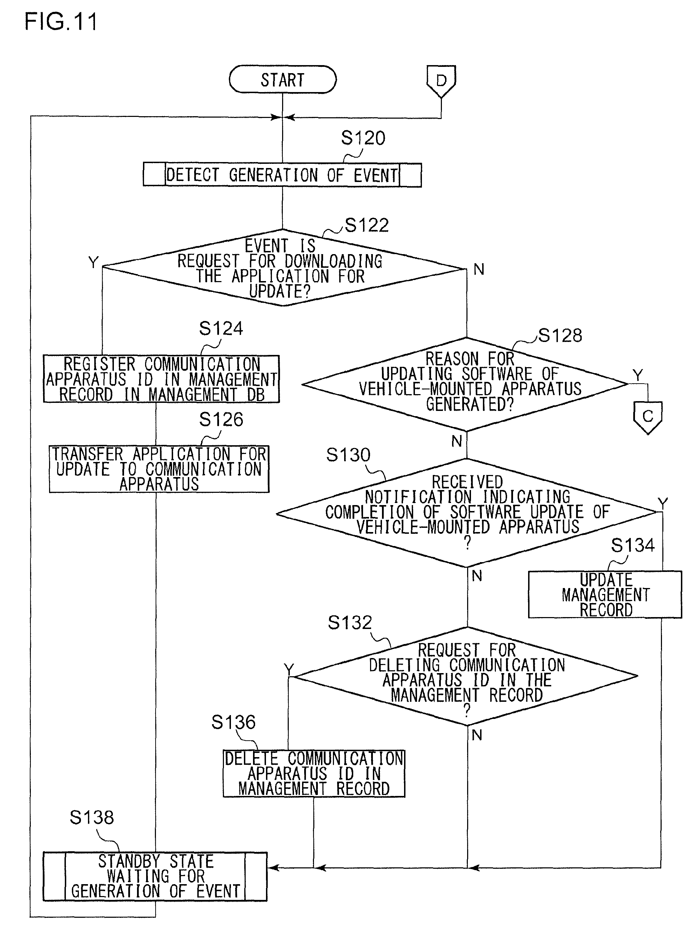

Fig. 11 is a flowchart illustrating a procedure of a communication process performed by the server apparatus 10. If the server apparatus 10 detects the generation of an event (S120) and the event is a request for downloading the application for update (Y in S122), the server apparatus control unit 30 registers the communication apparatus ID in the management record 40 in the management DB 34 (S124). The output unit 38 transfers the application for update to the communication apparatus 20 (S126). The server apparatus 10 then becomes in a standby state waiting for the generation of an event (S138), and the step proceeds to step 120.

If the event is not a request for downloading the application for update (N in S122), a reason for updating the software of the vehicle-mounted apparatus 18 is not generated (N in S128), and no notification indicating the completion of the update of the software of the vehicle-mounted apparatus 18 is given (N in S130), the step proceeds to step 138 if the event is not a request for deleting communication apparatus information in the management record 40 (N in S132). If the event is a request for deleting a communication apparatus ID in the management record 40 (Y in S132), the server apparatus control unit 30 deletes a corresponding communication apparatus ID in the management record 40 (S136), and the step proceeds to step 138.

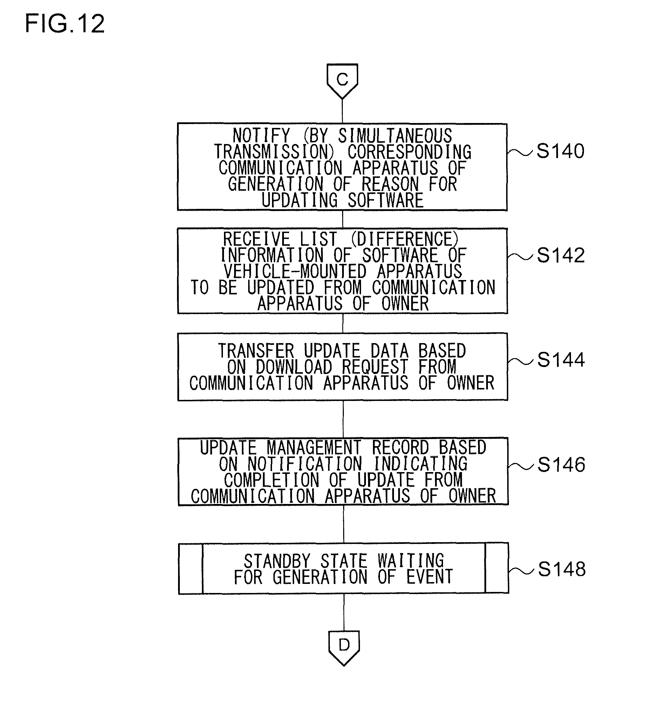

If the server apparatus 10 receives notification indicating the completion of software update of the vehicle-mounted apparatus 18 (Y in S130), the server apparatus control unit 30 updates the management record 40 (S134), and the step proceeds to step 138. If a reason for updating the software of the vehicle-mounted apparatus 18 is generated (Y in S128), the step proceeds to step 140 shown in Fig. 12. Also, there is a case where the step proceeds from step 148 shown in Fig. 12 to step 120.

Fig. 12 is a flowchart illustrating a procedure of a communication process that follows that of Fig. 11. The output unit 38 notifies (by simultaneous transmission) a corresponding communication apparatus 20 of the generation of a reason for updating the software (S140). The server apparatus control unit 30 receives list (difference) information of software of the vehicle-mounted apparatus 18 to be updated from the communication apparatus 20 of the owner (S142). The output unit 38 transfers update data based on a download request from the communication apparatus 20 of the owner (S144). The server apparatus control unit 30 updates the management record 40 based on notification indicating the completion of update from the communication apparatus 20 of the owner (S146). The server apparatus 10 becomes in a standby state waiting for the generation of an event (S148). After this, the step proceeds to step 120 shown in Fig. 11.

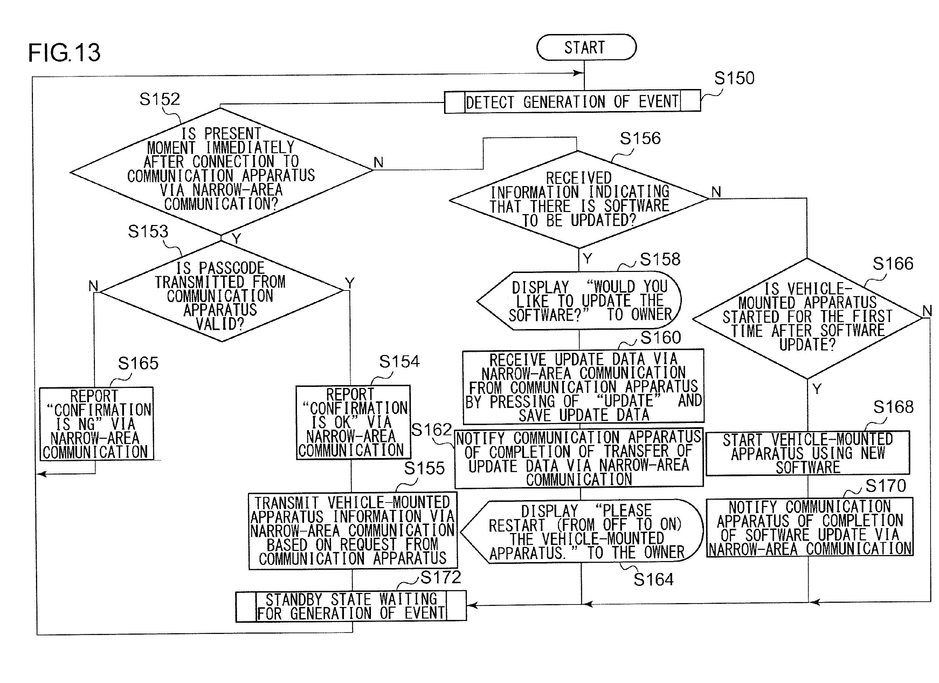

Fig. 13 is a flowchart illustrating a procedure of a communication process performed by the vehicle-mounted apparatus 18. If the vehicle-mounted apparatus 18 detects the generation of an event (S150) and the present moment is immediately after the vehicle-mounted apparatus 18 is connected to the communication apparatus 20 via the narrow-area communication (Y in S152), the vehicle-mounted apparatus 18 confirms whether the communication apparatus 20 is a possession of the owner by checking the passcode transmitted from the communication apparatus 20 against the passcode 156, and if the confirmation turns out to be OK (Y in S153), the vehicle-mounted apparatus 18 notifies the communication apparatus 20 accordingly (S154). After this, the output unit 142 transmits the vehicle-mounted apparatus information via the narrow-area communication based on a request from the communication apparatus 20 (S155). The vehicle-mounted apparatus 18 then becomes in a standby state waiting for the generation of an event (S172), and the step proceeds to step 150. If the confirmation by the passcode checking turns out to be NG (N in S153), the vehicle-mounted apparatus 18 notifies the communication apparatus 20 accordingly (S165) and becomes in the standby state waiting for the generation of an event (S172).

If the present moment is not immediately after the vehicle-mounted apparatus 18 is connected to the communication apparatus 20 via the narrow-area communication (N in S152), the vehicle-mounted apparatus control unit 130 displays a message stating "Would you like to update the software?" to the owner (S158) if the input unit 140 receives, via the narrow-area communication, information indicating that there is software to be updated (Y in S156). The input unit 140 receives update data via the narrow-area communication from the communication apparatus 20 by the pressing of "update" and saves the update data in the vehicle-mounted apparatus memory unit 132 (S160). The output unit 142 notifies the communication apparatus 20 of the completion of the transfer of the update data via narrow-area communication (S162). The vehicle-mounted apparatus display unit 138 displays a message stating "Please restart (from OFF to ON) the vehicle-mounted apparatus." to the owner (S164). After this, the step proceeds to step 172. Being "immediately after" the vehicle-mounted apparatus 18 is connected to the communication apparatus 20 via the narrow-area communication means the moment when the status of the vehicle-mounted apparatus 18 and the communication apparatus 20 is changed from being unconnected to each other to being connected to each other (the same applies to the following explanations).

If the input unit 140 does not receive information indicating that there is software to be updates (N in S156) and the vehicle-mounted apparatus 18 is started for the first time after software update (Y in S166), the vehicle-mounted apparatus control unit 130 starts the vehicle-mounted apparatus 18 using new software (S168). The output unit 142 notifies the communication apparatus 20 of the completion of the software update data via narrow-area communication (S170). After this, the step proceeds to step 172. If the vehicle-mounted apparatus 18 is not started for the first time after the software update (N in S166), steps 168 and 170 are skipped.

According to the embodiment of the present disclosure, the version of software stored in a vehicle-mounted apparatus is stored in a communication apparatus, and update data from a server apparatus is received and is also output to the vehicle-mounted apparatus based on this version. Thus, the update data can be acquired only by the communication apparatus independently of the vehicle-mounted apparatus. Further, since the update data acquired only by the communication apparatus independently of the vehicle-mounted apparatus is output to the vehicle-mounted apparatus, the outputting to the vehicle-mounted apparatus can be facilitated. In the communication apparatus, the necessity of outputting the update data is determined by checking the version. Thus, unnecessary outputting to the vehicle-mounted apparatus can be omitted. The version of the software stored in the vehicle-mounted apparatus is stored in the communication apparatus, and the update data from the server apparatus is input to the communication apparatus and is also output to the vehicle-mounted apparatus from the communication apparatus based on this version. Thus, the outputting to the vehicle-mounted apparatus can be facilitated.

Also, regardless of whether or not the owner is in a vehicle or whether or not the ignition of the vehicle is ON, the update data of the vehicle-mounted apparatus can be acquired in a stable manner only with a contract for a line for the communication apparatus that is being used by the owner. Further, when the communication apparatus is connected to the vehicle when the owner gets in the vehicle by an occasion that can happen on a daily basis such as USB charging of the communication apparatus, the software of the vehicle-mounted apparatus can be updated in a background process thereof. Also, when a reason for updating the software of the vehicle-mounted apparatus arises, necessary update data is listed precisely according to each vehicle, and the software of the vehicle-mounted apparatus can be updated without troubling the owner too much. Further, since necessary data can be acquired by choosing the necessary data from the server apparatus according to the situation of each vehicle, difference update for, for example, only a part of a library or map data can be performed as well as all software simultaneous update (full installation).

### (Second embodiment)

A second embodiment of the present disclosure also relates to a communication system for updating software of a vehicle-mounted apparatus via a communication apparatus in the same way as in the first embodiment. In the first embodiment, a communication apparatus compares the version of software stored in a vehicle-mounted apparatus with the version of update data. On the other hand, a vehicle-mounted apparatus performs this comparison in the second embodiment. A communication system 100, a server apparatus 10, a communication apparatus 20, and a vehicle-mounted apparatus 18 according to the second embodiment are similar in type to those in Figs. 1, 2, 4, and 5. A description will be made mainly regarding the difference from the previous explanations.

When the communication apparatus 20 shown in Fig. 4 detects that the narrow-area communication unit 70 is connected to the vehicle-mounted apparatus 18, the vehicle-mounted apparatus 18 confirms whether the communication apparatus 20 is a possession of the owner by passcode checking in the same way as in the first embodiment. After the confirmation is obtained, the update unit 78 outputs the version information of the update data 84 stored in the communication apparatus memory unit 62 to the vehicle-mounted apparatus 18 to which the narrow-area IF 74 is connected. This is for the purpose of allowing the vehicle-mounted apparatus 18 to determine the necessity of outputting the update data.

In the vehicle-mounted apparatus 18 shown in Fig. 5, the input unit 140 acquires the type or version information of the update data 84 stored in the communication apparatus memory unit 62 via the narrow-area communication unit 134. The vehicle-mounted apparatus control unit 130 compares the version information that has been acquired with the type or version information of software of the vehicle-mounted apparatus 18. If the version of the update data is newer than the version of the current software, the vehicle-mounted apparatus control unit 130 displays, on the vehicle-mounted apparatus display unit 138, announcement indicating "Would you like to update the software of the vehicle-mounted apparatus?" to the owner. When the owner presses the "update" button on the vehicle-mounted apparatus input unit 136, the vehicle-mounted apparatus control unit 130 requests the communication apparatus 20 to output the update data. As a result, the input unit 140 downloads the update data from the communication apparatus 20 via the narrow-area communication unit 134 in a background process. The update data that has been downloaded is stored as the update data 146 in the vehicle-mounted apparatus memory unit 132. The same as described for the first embodiment applies to the subsequent processes. Thus, the explanation thereof is omitted.

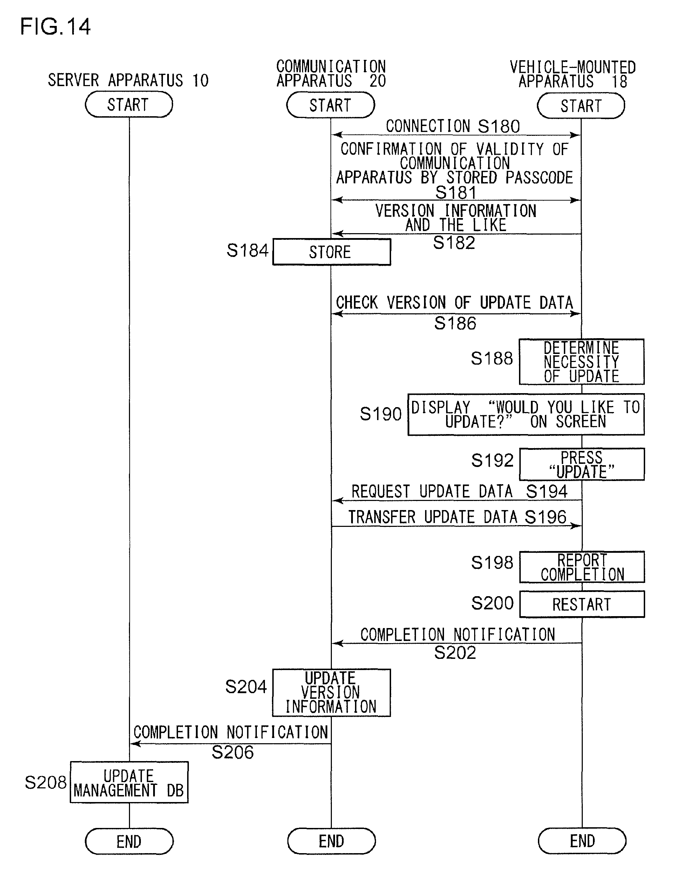

An explanation will be given of the operation of the communication system 100 having the above-stated structure. Fig. 14 is a sequence diagram illustrating a procedure of an update process performed by the communication system 100 according to the second embodiment of the present disclosure. The communication apparatus 20 and the vehicle-mounted apparatus 18 become connected to each other (S180). By the passcode stored in the passcode 87, the vehicle-mounted apparatus 18 confirms whether the communication apparatus 20 is a possession of the owner (S181). The vehicle-mounted apparatus 18 transmits the version information and the like to the communication apparatus 20 (S182). The communication apparatus 20 stores the version information and the like (S184). The communication apparatus 20 notifies the vehicle-mounted apparatus 18 of the version of the update data saved in the communication apparatus 20. Thereby, the communication apparatus 20 and the vehicle-mounted apparatus 18 check the version of the update data (S186). The vehicle-mounted apparatus 18 determines the necessity of update (S188). The vehicle-mounted apparatus 18 displays "Would you like to update?" on the screen (S190). When the "update" button is pressed down (S192), the vehicle-mounted apparatus 18 requests the update data to the communication apparatus 20 (S194). The communication apparatus 20 transfers the update data to the vehicle-mounted apparatus 18 (S196). The vehicle-mounted apparatus 18 reports the completion (S198), and the vehicle-mounted apparatus 18 is restarted (S200). The vehicle-mounted apparatus 18 transmits notification indicating the completion to the communication apparatus 20 (S202). The communication apparatus 20 updates the version information (S204). The communication apparatus 20 transmits notification indicating the completion to the server apparatus 10 (S206). The server apparatus 10 updates the management DB 34 (S208).

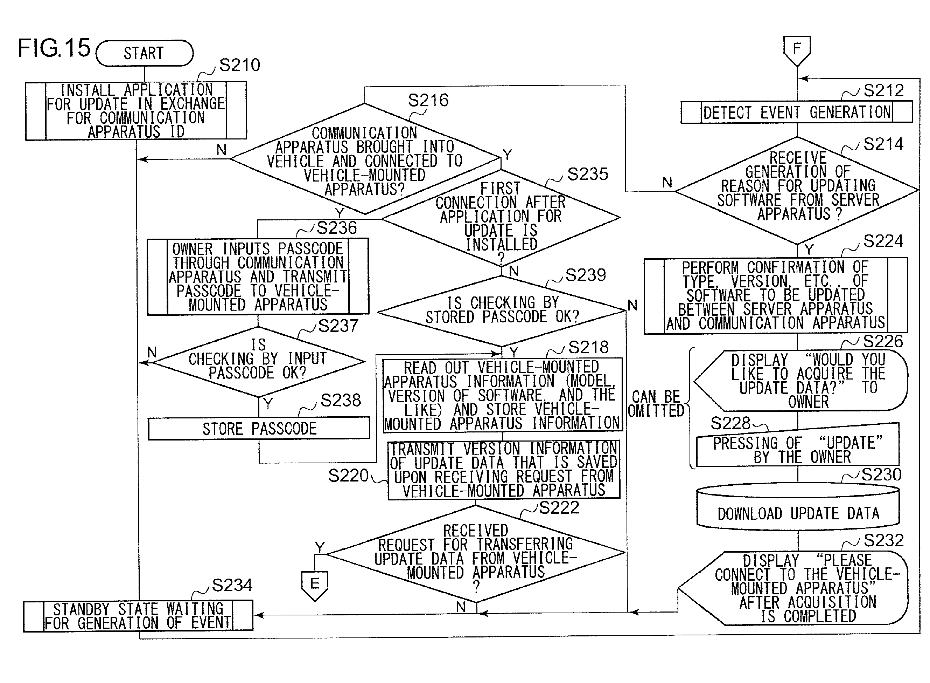

Fig. 15 is a flowchart illustrating a procedure of a communication process performed by the communication apparatus 20 according to the second embodiment of the present disclosure. The communication apparatus control unit 60 installs the application for update in exchange for the communication apparatus ID (S210), and the communication apparatus 20 then becomes in a standby state waiting for the generation of an event (S234). If the communication apparatus 20 detects the generation of an event (S212) and receives the generation of a reason for updating the software from the server apparatus 10 (Y in S214), the update data acquisition unit 76 performs the confirmation of the type, version, etc., of the software to be updated between the server apparatus 10 and the communication apparatus 20 (S224). The communication apparatus display unit 66 displays a message stating "Would you like to acquire the update data?" to the owner (S226). When the communication apparatus input unit 64 receives the pressing of the "update" by the owner (S228), the update data acquisition unit 76 downloads the update data (S230). The communication apparatus display unit 66 displays a message stating "Please connect to the vehicle-mounted apparatus." after the acquisition is completed (S232). The communication apparatus 20 then becomes in a standby state waiting for the generation of an event (S234), and the step goes back to step 212.

If the generation of a reason for updating the software is not received from the server apparatus 10 (N in S214) and the communication apparatus 20 is brought into the vehicle 16 and is connected to the vehicle-mounted apparatus 18 (Y in S216), the communication apparatus 20 allows the owner to input the passcode and transmits the passcode to the vehicle-mounted apparatus 18 (S236) if the connection is the first connection after the application for update is installed (Y in S235). If the result of the checking of the passcode in the vehicle-mounted apparatus 18 is OK and the communication apparatus 20 is confirmed to be a possession of the owner (Y in S237), the communication apparatus 20 stores the passcode in the passcode 87 (S238). After that, the version information acquisition unit 80 reads out vehicle-mounted apparatus information (a model, the version of the software, and the like) and stores the vehicle-mounted apparatus information in the communication apparatus memory unit 62 (S218). If the result of the checking of the passcode in the vehicle-mounted apparatus 18 is NG (N in S237), the communication terminal is owned by somebody other than the owner of the vehicle. Thus, the step proceeds to step 234.

If the communication apparatus 20 is brought into the vehicle 16 and is connected to the vehicle-mounted apparatus 18 (Y in S216) and the connection is not the first connection after the application for update is installed (N in S235), the communication apparatus 20 transmits the passcode that is already stored in the passcode 87 to the vehicle-mounted apparatus 18 so as to obtain the result of checking (S239). If the checking turns out to be OK (Y in S239), the version information acquisition unit 80 reads out the vehicle-mounted apparatus information and stores the vehicle-mounted apparatus information in the communication apparatus memory unit 62 (S218). If the result of the checking is NG (N in S239), the communication terminal is owned by somebody other than the owner of the vehicle. Thus, the step directly proceeds to step 234.

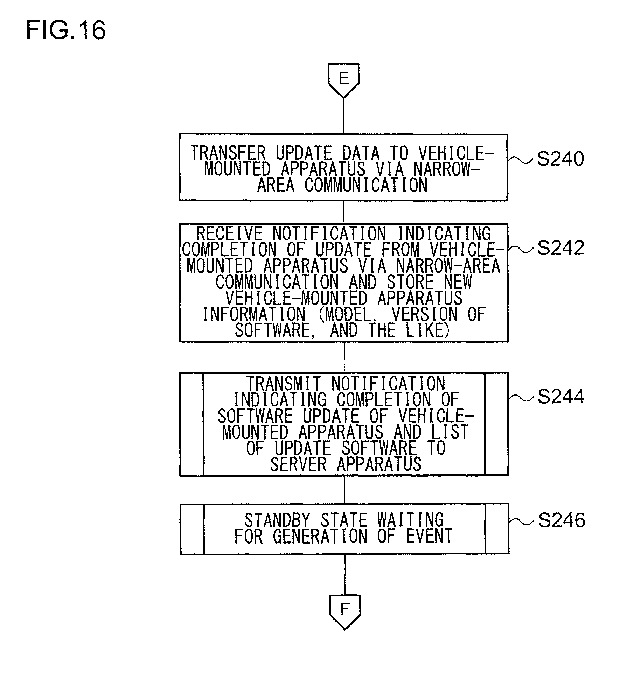

After the vehicle-mounted apparatus information is read out and stored when the checking turns out to be OK (S218), the communication apparatus control unit 60 transmits the version information of the update data that is saved upon receiving a request from the vehicle-mounted apparatus 18 (S220). If a request for transferring the update data is not received from the vehicle-mounted apparatus 18 (N in S222), the step proceeds to step 234. If the communication apparatus 20 is not brought into the vehicle 16 so as to be connected to the vehicle-mounted apparatus 18 (N in S216), the step proceeds to step 234. If a request for transferring the update data is received from the vehicle-mounted apparatus 18 (Y in S222), the step proceeds to step 240 shown in Fig. 16. Also, there is a case where the step proceeds from step 246 shown in Fig. 16 to step 212.

Fig. 16 is a flowchart illustrating a procedure of a communication process that follows that of Fig. 15. The update unit 78 transfers the update data to the vehicle-mounted apparatus 18 via narrow-area communication (S240). The version information acquisition unit 80 receives notification indicating the completion of update from the vehicle-mounted apparatus 18 via the narrow-area communication and stores new vehicle-mounted apparatus information (a model, the version of the software, and the like) in the communication apparatus memory unit 62 (S242). The update unit 78 transmits the notification indicating the completion of software update of the vehicle-mounted apparatus 18 and a list of update software to the server apparatus 10 (S244). The communication apparatus 20 becomes in a standby state waiting for the generation of an event (S246). After this, the step proceeds to step 212 shown in Fig. 15.

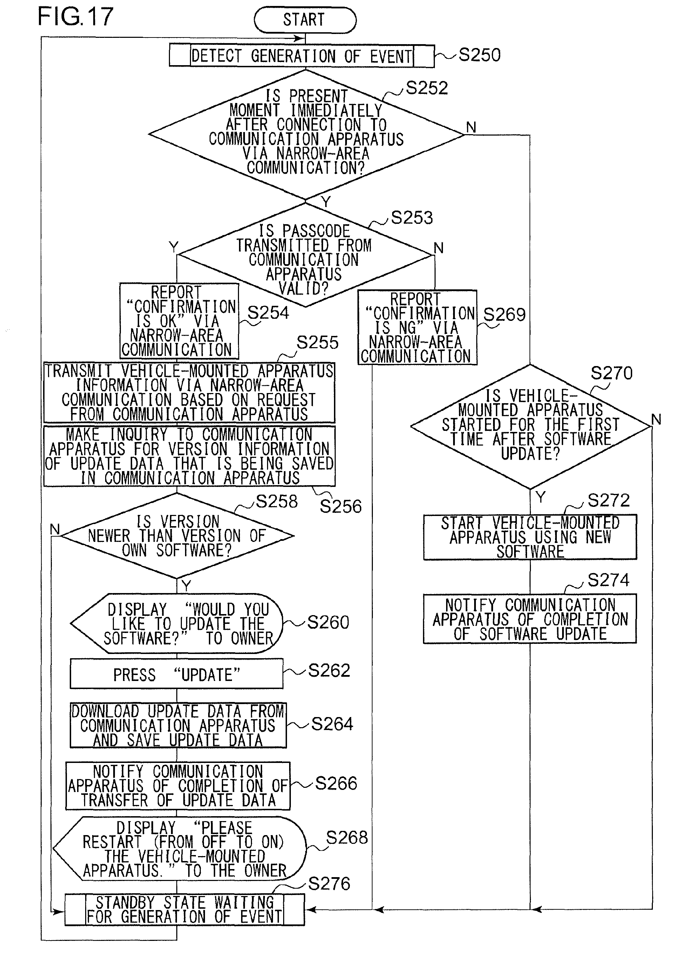

Fig. 17 is a flowchart illustrating a procedure of a communication process performed by the vehicle-mounted apparatus 18 according to the second embodiment of the present disclosure. If the vehicle-mounted apparatus 18 detects the generation of an event (S250) and the present moment is immediately after the vehicle-mounted apparatus 18 is connected to the communication apparatus 20 via the narrow-area communication (Y in S252), the vehicle-mounted apparatus 18 confirms whether the communication apparatus 20 is a possession of the owner by checking the passcode transmitted from the communication apparatus 20 against the passcode 156, and if the confirmation turns out to be OK (Y in S253), the vehicle-mounted apparatus 18 notifies the communication apparatus 20 accordingly (S254). Then, the output unit 142 transmits the vehicle-mounted apparatus information via the narrow-area communication based on a request from the communication apparatus 20 (S255). The vehicle-mounted apparatus control unit 130 makes an inquiry to the communication apparatus 20 for the version information of the update data that is being saved (S256). If the version information that has been acquired represents a version that is newer than that of the own software (Y in S258), the vehicle-mounted apparatus display unit 138 displays a message stating "Would you like to update the software?" to the owner (S260). The "update" is pressed down in the vehicle-mounted apparatus input unit 136 (S262). The input unit 140 downloads the update data from the communication apparatus 20 and saves the update data in the vehicle-mounted apparatus memory unit 132 (S264). The output unit 142 notifies the communication apparatus 20 of the completion of the transfer of the update data (S266). The vehicle-mounted apparatus display unit 138 displays a message stating "Please restart (from OFF to ON) the vehicle-mounted apparatus." to the owner (S268). The vehicle-mounted apparatus 18 then becomes in a standby state waiting for the generation of an event (S276), and the step proceeds to step 250.

The vehicle-mounted apparatus 18 confirms whether the communication apparatus 20 is a possession of the owner by checking the passcode transmitted from the communication apparatus 20 against the passcode 156 (S253). If the passcode checking turns out to be NG (N in S253), the vehicle-mounted apparatus 18 notifies the communication apparatus 20 accordingly (S269) and then becomes in the standby state waiting for the generation of an event (S276).

If the version information that has been acquired is not newer than the version of the own software (N in S258), the step proceeds to step 276. If the present moment is not immediately after the vehicle-mounted apparatus 18 is connected to the communication apparatus 20 via the narrow-area communication (N in S252) and the vehicle-mounted apparatus 18 is started for the first time after the software update (Y in S270), the server apparatus control unit 30 starts the vehicle-mounted apparatus 18 using new software (S272). The output unit 142 notifies the communication apparatus 20 of the completion of the software update data via narrow-area communication (S274). After this, the step proceeds to step 276. If the vehicle-mounted apparatus 18 is not started for the first time after the software update (N in S270), steps 272 and 274 are skipped.

According to the embodiment of the present disclosure, the necessity of outputting update data is determined by a vehicle-mounted apparatus by checking the version. Thus, processes performed by a communication apparatus can be facilitated. Since the vehicle-mounted apparatus determines the necessity of outputting the update data, the necessity of the outputting can be determined mainly by the vehicle-mounted apparatus.

### (Third embodiment)

A third embodiment of the present disclosure also relates to a communication system for updating software of a vehicle-mounted apparatus via a communication apparatus in the same way as described thus far. The third embodiment is directed to a purpose of enhancing security for downloading update data in addition to a communication system described thus far. In the third embodiment, an application for update is downloaded in a communication apparatus possessed by the owner. A vehicle key stores an owner ID, and this owner ID is transcribed into a dedicated application. An owner ID is information for identifying a vehicle-mounted apparatus. The communication apparatus transmits a combination of the owner ID and a communication apparatus ID to a server apparatus via a wide-area network. The server apparatus registers the communication apparatus by linking the owner ID with the communication apparatus ID and storing the owner ID and the communication apparatus ID. When the communication apparatus is registered by the server apparatus, the application for update acquires update data from the server apparatus via a wide-area network and stores the update data. When the communication apparatus and the vehicle-mounted apparatus are connected to each other, the update data stored in the communication apparatus is transferred to the vehicle-mounted apparatus in a background process thereof. Software stored in the vehicle-mounted apparatus is updated by the update data. A description will be made mainly regarding the difference from the previous explanations.

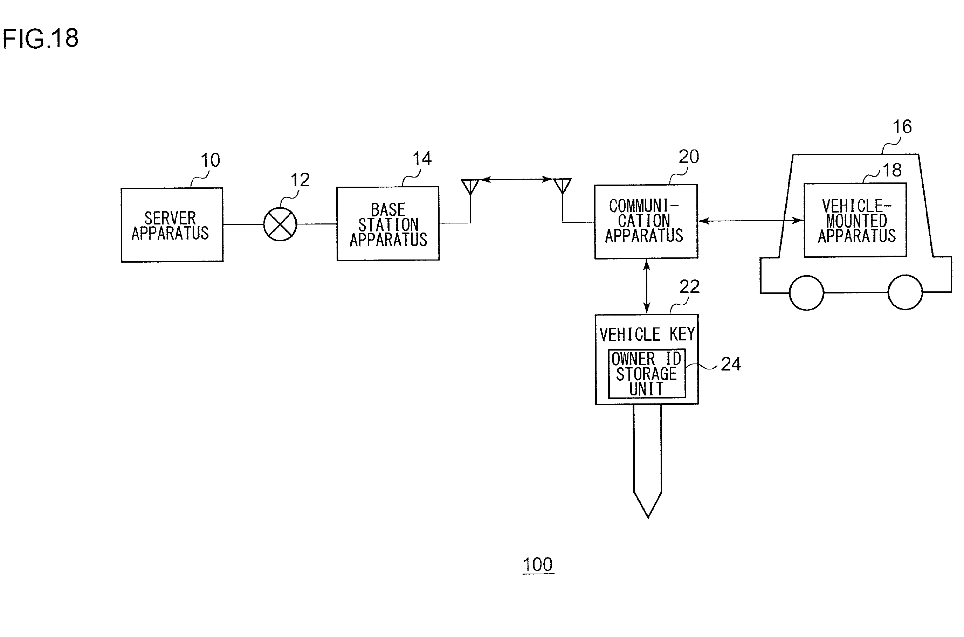

Fig. 18 illustrates the configuration of a communication system 100 according to the third embodiment of the present disclosure. The communication system 100 includes a server apparatus 10, a network 12, a base station apparatus 14, a vehicle-mounted apparatus 18, a communication apparatus 20, and a vehicle key 22. The vehicle key includes an owner ID storage unit 24. The vehicle-mounted apparatus 18 is mounted in a vehicle 16. As in the case of the first embodiment, the server apparatus 10 stores update data for updating software stored in the vehicle-mounted apparatus 18. Further, the server apparatus 10 stores an owner ID for identifying the vehicle-mounted apparatus 18. The owner ID is also an identification code of the vehicle owner and is also referred to as first identification information. Details of an owner ID will be described later.

The vehicle key 22 is also called a key for a vehicle and is used to operate the vehicle 16. The vehicle key 22 includes the owner ID storage unit 24 for storing an owner ID. The owner ID stored in the owner ID storage unit 24 is the same as the owner ID stored in the server apparatus 10. These owner ID's do not need to be the same as long as the owner ID's are associated with each other on a one-to-one basis. The first advantage of storing the owner ID in the vehicle key 22 is that the vehicle key 22 is always paired with the vehicle 16 and is thus less likely to be lost along the way as long as the vehicle key 22 is possessed. The second advantage is that the owner keeps and manages the vehicle key 22 with caution as a valuable and does not lend or show the vehicle key 22 to somebody else without any careful consideration. In this manner, the owner ID of the vehicle key 22 is linked to the owner of the vehicle with very high probability.

Before updating the software of the vehicle-mounted apparatus 18, the owner transcribes the owner ID stored in the vehicle key 22 to the communication apparatus 20 as initial setting. An example of the procedure of the transcription is that the owner ID is written on the surface or the inside of the vehicle key 22 using text information and the owner visually reads the text and manually inputs the text through an input unit of the communication apparatus 20. Another example is that the owner ID is written on the vehicle key 22 using a code that can be easily read mechanically such as a QR code (registered trademark) and the QR code (registered trademark) is read by the communication apparatus 20. Yet another example is that the vehicle key 22 is provided with a proximity wireless transmission and reception function by a non-contact IC and the communication apparatus 20 is also provided with a proximity wireless transmission and reception function by a non-contact IC so that the owner ID is transferred to the communication apparatus 20 from the vehicle key 22 by bringing the vehicle key 22 and the communication apparatus 20 into contact with each other.

As described, the communication apparatus 20 acquires the owner ID from the vehicle key 22 that stores the owner ID. The communication apparatus 20 requests the server apparatus 10 to register the communication apparatus 20 by outputting a combination of the owner ID that has been acquired and a communication apparatus ID that has been stored in advance to the server apparatus 10. The communication apparatus ID is also referred to as second identification information. As a response to the request, the communication apparatus 20 acquires registration notification from the server apparatus 10. Upon acquiring the registration notification, the communication apparatus 20 acquires update data from the server apparatus 10 and stores the update data in a memory. Even when the communication apparatus 20 is not connected to the server apparatus 10, the communication apparatus 20 outputs the update data stored in the memory to the vehicle-mounted apparatus 18 that is connected.

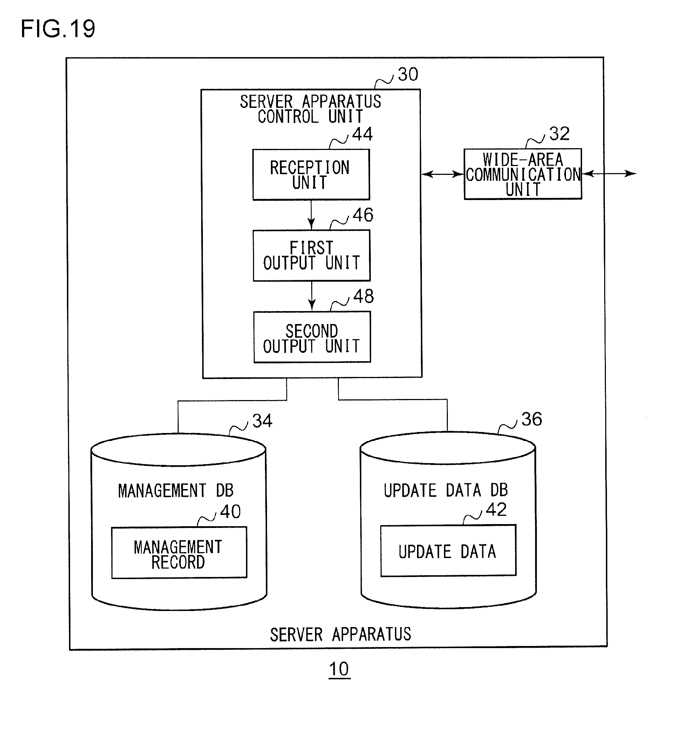

Fig. 19 illustrates the configuration of the server apparatus 10. The server apparatus 10 includes a server apparatus control unit 30, a wide-area communication unit 32, a management DB 34, and update data DB 36. The server apparatus control unit 30 includes a reception unit 44, a first output unit 46, and a second output unit 48. The management DB 34 includes a management record 40. The update data DB 36 includes update data 42. In the following, the configuration of the server apparatus 10 will be explained in the following order: (1) initial process; (2) download process and update process; and (3) deletion process.

### (1) Initial process

As described previously, when a person who is becoming the owner of a vehicle 16 makes a contract for purchasing the vehicle at a car dealer, a vehicle-mounted apparatus 18 that is specified in a contract document is mounted in the vehicle 16 at a car maker or the car dealer. The version of software mounted in the vehicle-mounted apparatus 18 at this time is initial software. Then, a manager at the car maker or the car dealer links an owner ID with the information of the vehicle. The manager assigns an owner ID that is to be shared and stored by the vehicle key 22 and the vehicle-mounted apparatus 18, and the owner ID is stored in an owner ID storage unit 24 and a management DB 34, respectively. The owner ID is stored as electronic data at least in the management DB 34 at this time. Further, the owner ID that has been assigned, the model of the vehicle-mounted apparatus 18, and the version of the software are associated with one another and registered in the management DB 34. The information that has been registered is written in a management record 40. A communication apparatus ID has not been registered in the management record 40 at this time.

Next, when the vehicle 16 is handed over to the owner, the owner downloads an application for update onto a communication apparatus 20 from a server apparatus 10. In order to properly install the application for update that has been downloaded, the owner transcribes the owner ID stored in the vehicle key 22 to the communication apparatus 20. Thereby, the communication apparatus 20 acquires the owner ID from the vehicle key 22. A wide-area communication unit 32 may be unconnected to the communication apparatus 20 at that time. When the owner ID is imported in the application for update, the communication apparatus 20 requests the server apparatus 10 to perform initial registration of the communication apparatus 20 using HTTP or HTTPS communication through a wide-area network.

As a result, even when the communication apparatus 20 is not connected to the vehicle-mounted apparatus 18, a reception unit 44 receives the combination of the owner ID and the communication apparatus ID from the communication apparatus 20 to which the wide-area communication unit 32 is connected. A mobile phone number for which a contract for line has been made, a machine identification number of the communication apparatus 20, or both of these numbers needs to be used as the communication apparatus ID. The mobile phone number is registered in a subscriber identity module (SIM) card. A server apparatus control unit 30 searches the management DB 34 and extracts a corresponding management record 40 based on the owner ID and stores the owner ID and the communication apparatus ID while linking the owner ID with the communication apparatus ID. This corresponds to the registration of the communication apparatus 20. As a response to the request, a first output unit 46 outputs registration notification to the communication apparatus 20 to which the wide-area communication unit 32 is connected. The registration notification serves as acknowledgement indicating that the registration is OK. For example, if the owner ID turns out to represent an abnormal value with no corresponding management record, the first output unit 46 notifies the communication apparatus 20 that the registration is NG.

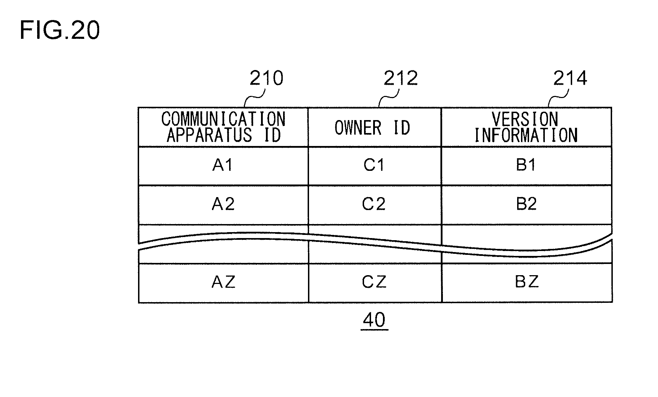

Fig. 20 illustrates a data structure of the management record 40. As illustrated in the figure, the data structure includes a communication apparatus ID column 210, an owner ID column 212, and an owner ID column 212. The communication apparatus ID column 210 and the version information column 214 are the same as the communication apparatus ID column 200 and the version information column 202 shown in Fig. 3. The owner ID is registered in the owner ID column 212. Fig. 19 is referred back.

### (2) Download process and update process

The same as described for the first and second embodiments applies to these processes. Thus, the explanation thereof is omitted. If the first output unit 46 outputs registration notification, the second output unit 48 outputs the update data to the communication apparatus 20 to which the wide-area communication unit 32 is connected and stores the update data in the communication apparatus 20. In other words, the second output unit 48 performs the same operation as that of the output unit 38 shown in Fig. 2.

### (3) Deletion process

The same as described for the first and second embodiments also applies to these processes. Thus, the explanation thereof is omitted.

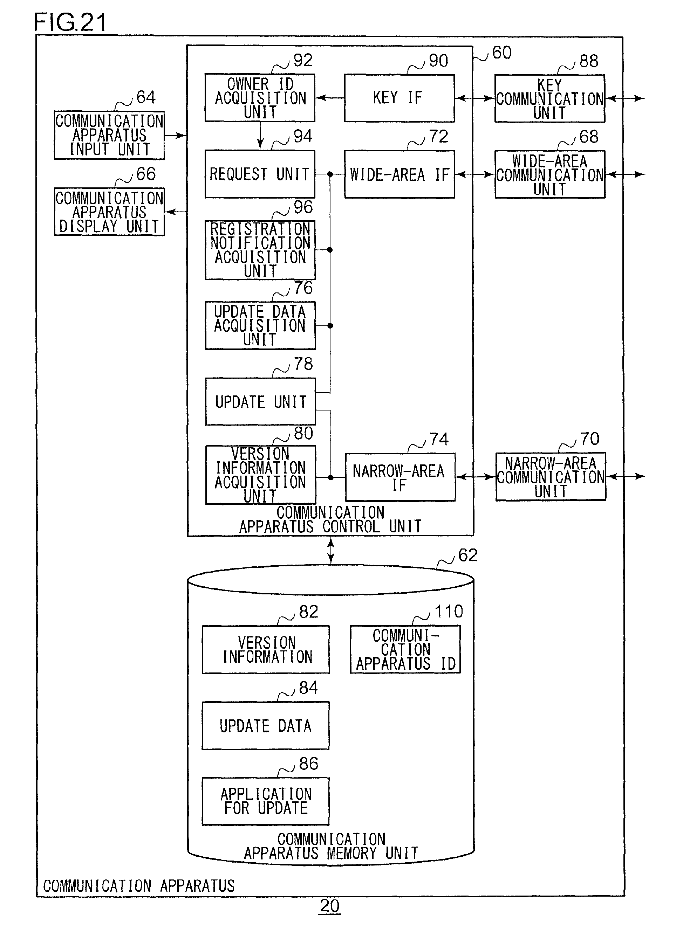

Fig. 21 illustrates the configuration of the communication apparatus 20. The communication apparatus 20 includes a communication apparatus control unit 60, a communication apparatus memory unit 62, a communication apparatus input unit 64, a communication apparatus display unit 66, a wide-area communication unit 68, a narrow-area communication unit 70, and a key communication unit 88. The communication apparatus control unit 60 includes a wide-area IF 72, a narrow-area IF 74, an update data acquisition unit 76, an update unit 78, a version information acquisition unit 80, a key IF 90, an owner ID acquisition unit 92, a request unit 94, and a registration notification acquisition unit 96. The communication apparatus memory unit 62 includes version information 82, update data 84, an application 86 for update, and a communication apparatus ID 110.

The key communication unit 88 acquires the owner ID stored in the owner ID storage unit 24 by communicating with the vehicle key 22. A proximity wireless transmission and reception function by a non-contact IC is used for the transcription from the vehicle key 22 to the communication apparatus 20. The key communication unit 88 is provided with a proximity wireless transmission and reception function. Therefore, the owner ID is translated into digitized information, and the owner ID in the owner ID storage unit 24 is input to the key communication unit 88 by bringing the vehicle key 22 and the key communication unit 88 close to each other. The key IF 90 communicates with the vehicle key 22 via the key communication unit 88. In other words, the key IF 90 is an interface for the connection to the key communication unit 88.

If manual input is used without using a proximity wireless transmission and reception function for the transcription to the communication apparatus 20 from the vehicle key 22, the key communication unit 88 and the key IF 90 may be omitted. The owner ID is a character string readable to a person that is displayed on the surface or inside of the vehicle key 22 at that time, and the owner visually reads the owner ID and manually inputs the owner ID to the communication apparatus input unit 64. If a QR code (registered trademark) is used without using a proximity wireless transmission and reception function for the transcription to the communication apparatus 20 from the vehicle key 22, the key communication unit 88 may be an optical code reader. The owner ID is a code in which a geometric pattern is used that is displayed on the surface or inside of the vehicle key 22 at that time, and the key communication unit 88 optically reads the owner ID and performs a recognition process. In the following, the configuration of the communication apparatus 20 will be explained in the following order: (1) initial process; (2) download process; and (3) update process.

### (1) Initial process

As described previously, a manager at a car maker or a car dealer assigns an owner ID that is to be shared and stored by a vehicle key 22 and a vehicle-mounted apparatus 18, and the owner ID is stored in an owner ID storage unit 24 and a management DB 34, respectively. Next, a description will be made regarding a step that occurs after a vehicle 16 is handed over to the owner. First, the owner downloads software for updating onto a communication apparatus 20 from a server apparatus 10. In order to properly install (activate) the software for updating that has been downloaded, the owner transcribes the owner ID stored in the vehicle key 22 to the communication apparatus 20. As described previously, manual input, QR code (registered trademark) reading, non-contact IC touching are available for the transcription. Non-contact IC touching is assumed to be used here. Through these processes, an owner ID acquisition unit 92 acquires the owner ID from the vehicle key 22 that stores the owner ID, via the owner ID acquisition unit 92 and the key IF 90. The owner ID acquisition unit 92 may be referred to as a first acquisition unit.

When the owner ID is imported in the application for update, a request unit 94 applies for initial registration to the server apparatus 10 using HTTP or HTTPS communication via a wide-area communication unit 68. Explaining more specifically, the request unit 94 requests the server apparatus 10 to register the communication apparatus 20 by outputting the combination of the owner ID acquired by the owner ID acquisition unit 92 and a communication apparatus ID 110 stored in a communication apparatus memory unit 62 to the server apparatus 10. When the server apparatus 10 registers the communication apparatus 20 in response to this request, a registration notification acquisition unit 96 acquires registration notification from the server apparatus 10 via a wide-area communication unit 68 and a wide-area IF 72 as a response to the request from the request unit 94. As described previously, the registration notification serves as acknowledgement indicating that the registration is OK. The registration notification acquisition unit 96 may be referred to as a second acquisition unit. Upon receiving notification indicating the registration is OK, a communication apparatus control unit 60 completes the proper installation. When receiving notification indicating that the registration is NG from the server apparatus 10, the registration notification acquisition unit 96 allows the owner ID to be re-entered.

The request unit 94 transmits a communication apparatus ID in order to request for the registration. Alternatively, the request unit 94 may transmit a mobile phone email address the owner is using for the communication apparatus 20 to the server apparatus 10. In general, one address is assigned for one contract for line, and the address is uniquely linked to a terminal, strictly speaking, a SIM card that is owned in an electronic mail system operated by a mobile phone carrier. In this case, the owner ID and the mobile phone email address are registered in a management record 40.

Hereinafter, a message is transmitted and/or received via an electronic mail between the communication apparatus 20 and the server apparatus 10. For example, a URL for acquiring a Java Script (registered trademark) file from the server apparatus 10 is written in a message to be transmitted by the server apparatus 10 to the communication apparatus 20, and the communication apparatus 20 receives this. The software for updating may be started so that a series of operations associated with the update by update data is performed when the owner operating the communication apparatus 20 clicks this URL. The server apparatus 10 is capable of uniquely recognizing the owner of the vehicle 16 by registering the owner ID and the electronic mail address while linking the owner ID with the electronic mail address.

### (2) Download process

If the registration notification acquisition unit 96 acquires the registration notification, the update data acquisition unit 76 receives notification indicating the generation of a difference via the wide-area IF 72 from the server apparatus 10. The update data acquisition unit 76 is referred to as a second acquisition unit thus far. However, the update data acquisition unit 76 may be referred to as a third acquisition unit here. After that, the update data acquisition unit 76 transmits the owner ID, the communication apparatus ID, and a list of software that needs update to the server apparatus 10 via the wide-area IF 72. Based on the owner ID, the server apparatus 10 searches the management DB 34 for information in a management record 40 that corresponds to this owner ID and checks a communication apparatus ID that is registered against the communication apparatus ID that has been received. As a result, if the communication apparatus 20 is confirmed to be one owned by the owner of the vehicle 16, the server apparatus 10 replies acknowledgement indicating that the authentication is OK to the communication apparatus 20. The update data acquisition unit 76 receives the acknowledgement indicating that the authentication is OK. Subsequently, the update data acquisition unit 76 acquires the update data from the server apparatus 10 and stores the update data in the communication apparatus memory unit 62 as update data 84, in the same way as described thus far.

### (3) Update process

When the communication apparatus 20 and the vehicle-mounted apparatus 18 are connected via a narrow-area network, the update unit 78 outputs the owner ID that is stored to the vehicle-mounted apparatus 18 via the narrow-area IF 74 and the narrow-area communication unit 70. The vehicle-mounted apparatus 18 checks whether the communication apparatus 20 is the communication apparatus 20 that is personally owned by the owner by comparing the owner ID that has been input with the owner ID that has been stored. If the owner ID's match each other and the communication apparatus 20 is confirmed to be personally owned by the owner of the vehicle, acknowledgement indicating that the authentication is OK is transmitted from the vehicle-mounted apparatus 18 to the communication apparatus 20. If the communication apparatus 20 is not confirmed to be a personal possession of the owner, acknowledgement indicating that the authentication is NG is transmitted. When the update unit 78 receives the acknowledgement indicating that the authentication is OK, the version information acquisition unit 80 acquires information such as a model name, the version of software that is mounted, and the like from the vehicle-mounted apparatus 18 via the narrow-area communication unit 70 and the narrow-area IF 74. The version information acquisition unit 80 is also referred to as a fourth acquisition unit. At this time, the version information acquisition unit 80 may read log information for errors that have occurred in the past in the vehicle-mounted apparatus 18 and the like at the same time. The information that has been read out is stored in the communication apparatus memory unit 62 as the version information 82.

If the version of the update data 84 is newer than that in the version information 82, even when the wide-area IF 72 is not connected to the server apparatus 10, the update unit 78 outputs the update data 84 stored in the communication apparatus memory unit 62 to the vehicle-mounted apparatus 18 to which the narrow-area IF 74 is connected, as described previously. As described, when the update unit 78 receives permission for outputting the update data from the vehicle-mounted apparatus 18 by the outputting of the owner ID to the vehicle-mounted apparatus 18, the update unit 78 outputs the update data 84 stored in the communication apparatus memory unit 62. When the vehicle-mounted apparatus 18 updates the software by such a process, the version information acquisition unit 80 acquires the version information of the software stored in the vehicle-mounted apparatus 18 and stores the version information in the communication apparatus memory unit 62 as the version information 82. When outputting notification of the completion of the software update of the vehicle-mounted apparatus 18 to the server apparatus 10 via the wide-area IF 72, the update unit 78 attaches a list of software that has been updated and the owner ID.

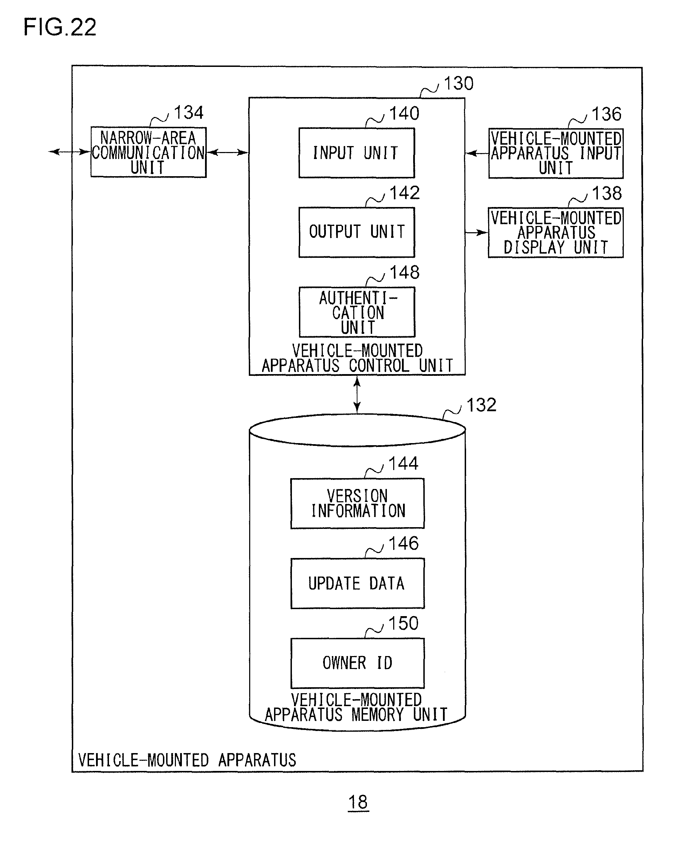

Fig. 22 illustrates the configuration of the vehicle-mounted apparatus 18. The vehicle-mounted apparatus 18 includes a vehicle-mounted apparatus control unit 130, a vehicle-mounted apparatus memory unit 132, a narrow-area communication unit 134, a vehicle-mounted apparatus input unit 136, and a vehicle-mounted apparatus display unit 138. The vehicle-mounted apparatus control unit 130 includes an input unit 140, an output unit 142, and an authentication unit 148, and the vehicle-mounted apparatus memory unit 132 includes version information 144, update data 146, and an owner ID 150.

When the communication apparatus 20 and the narrow-area communication unit 134 are connected via the narrow-area network, the authentication unit 148 receives the owner ID from the communication apparatus 20. The vehicle-mounted apparatus 18 checks whether the communication apparatus 20 is the communication apparatus 20 that is personally owned by the owner by comparing the owner ID that has been input with the owner ID that has been stored in the vehicle-mounted apparatus memory unit 132. This is because there is a case where a passenger other than the owner brings his/her own communication apparatus 20 in the vehicle 16 and connects the communication apparatus 20 to the vehicle-mounted apparatus 18 for charging or the like, and an erroneous wide-area network charging may be imposed at that time if it is also time for software update. If there is no such a mechanism for authenticating a communication apparatus 20 and software for updating happens to have been downloaded in a somebody else's communication apparatus 20 that has been brought in, update data may be automatically downloaded using the person's line for the communication apparatus 20 if the version of the software of the vehicle-mounted apparatus 18 is old.

When the owner ID's match each other and the communication apparatus 20 is confirmed to be personally owned by the owner, the authentication unit 148 transmits acknowledgement indicating that the authentication is OK to the communication apparatus 20. The acknowledgement indicating that the authentication is OK corresponds to permission for outputting the update data. If the owner ID's do not match each other, the authentication unit 148 transmits acknowledgement indicating that the authentication is NG to the communication apparatus 20. The output unit 142 outputs version information 144 stored in the vehicle-mounted apparatus memory unit 132 to the communication apparatus 20 to which the narrow-area communication unit 134 is connected and stores the version information 144 in the communication apparatus 20. The input unit 140 receives the update data after permission by the authentication unit 148 is granted. The same as described for the first and second embodiments applies to the inputting of the update data and the update of the software. Thus, the explanation thereof is omitted.

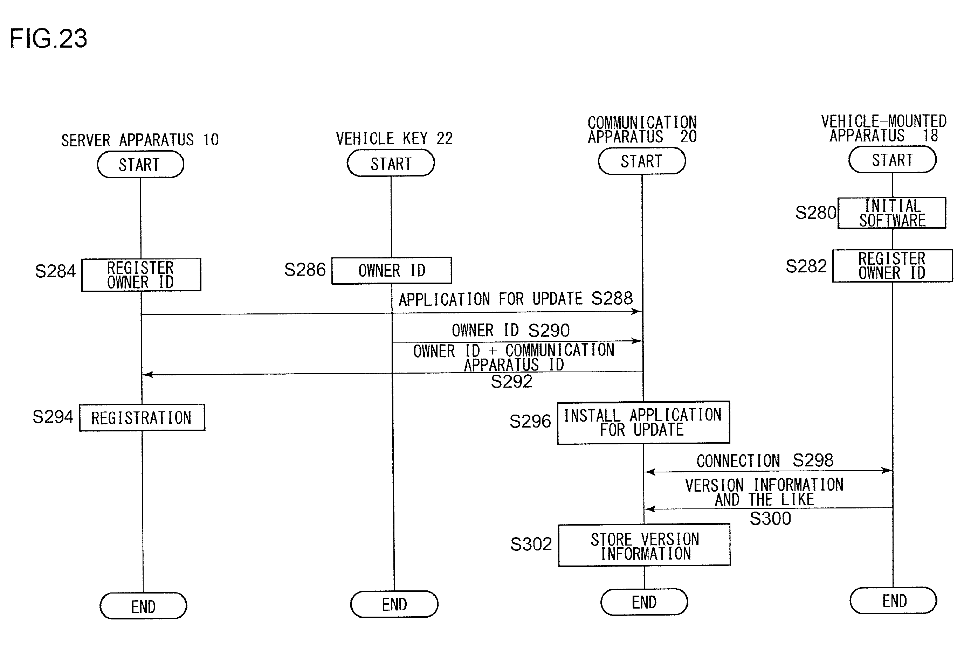

An explanation will be given of the operation of the communication system 100 having the above-stated structure. Fig. 23 is a sequence diagram illustrating a procedure of an initial process performed by the communication system 100. Initial software, which is software of an initial version, is stored in the vehicle-mounted apparatus 18 (S280), and the owner ID is also registered (S282). The owner ID is registered in the server apparatus 10 (S284). The owner ID is stored in the vehicle key 22 (S286). The server apparatus 10 transmits the application for update to the communication apparatus 20 (S288). The owner ID is transcribed from the vehicle key 22 to the communication apparatus 20 (S290). The communication apparatus 20 transmits the owner ID and the communication apparatus ID to the server apparatus 10 (S292). The server apparatus 10 registers the communication apparatus 20 (S294). The communication apparatus 20 installs the application for update (S296). After this, the communication apparatus 20 and the vehicle-mounted apparatus 18 become connected to each other (S298). The vehicle-mounted apparatus 18 transmits the version information to the communication apparatus 20 (S300). The communication apparatus 20 stores the version information (S302).

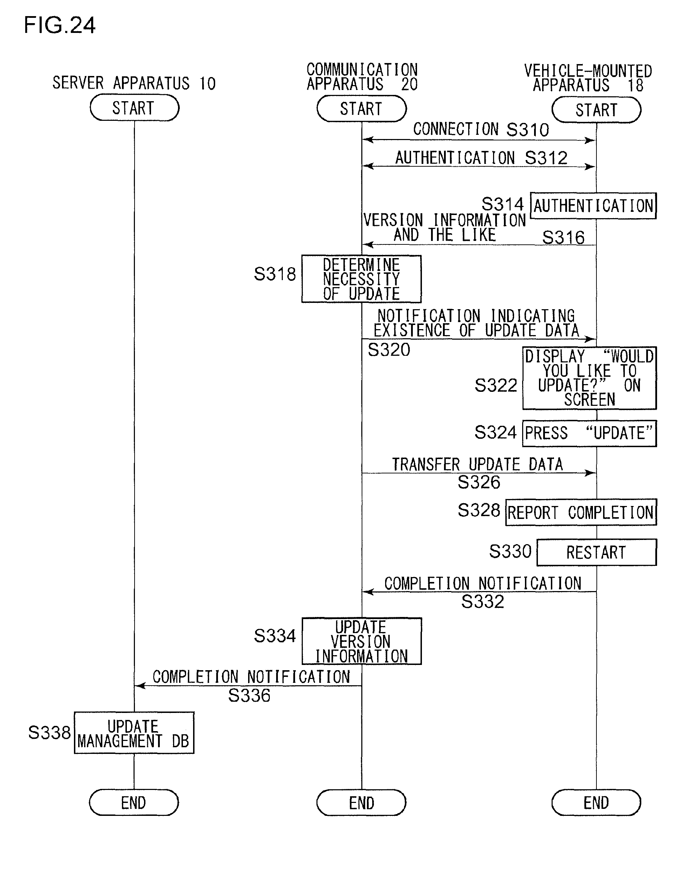

Fig. 24 is a sequence diagram illustrating a procedure of an update process performed by the communication system 100. The communication apparatus 20 and the vehicle-mounted apparatus 18 become connected to each other (S310), and an authentication process is also performed (S312). The authentication is confirmed to be OK in the vehicle-mounted apparatus 18 (S314). The vehicle-mounted apparatus 18 transmits the version information and the like to the communication apparatus 20 (S316). The communication apparatus 20 determines the necessity of update (S318). The communication apparatus 20 notifies the vehicle-mounted apparatus 18 of the existence of the update data (S320). The vehicle-mounted apparatus 18 displays "Would you like to update?" on the screen (S322). When the "update" button is pressed down (S324), the vehicle-mounted apparatus 18 receives the update data transferred from the communication apparatus 20 (S326). The vehicle-mounted apparatus 18 notifies the owner of the completion (S328), and the vehicle-mounted apparatus 18 is restarted (S330). The vehicle-mounted apparatus 18 transmits notification indicating the completion to the communication apparatus 20 (S332). The communication apparatus 20 updates the version information (S334). The communication apparatus 20 transmits notification indicating the completion to the server apparatus 10 (S336). The server apparatus 10 updates the management DB 34 (S338).

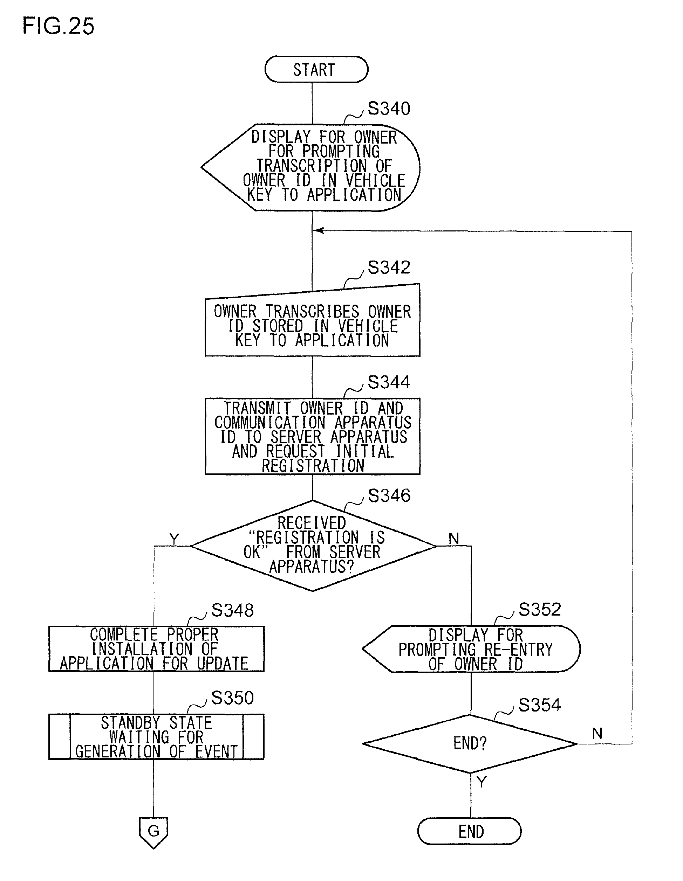

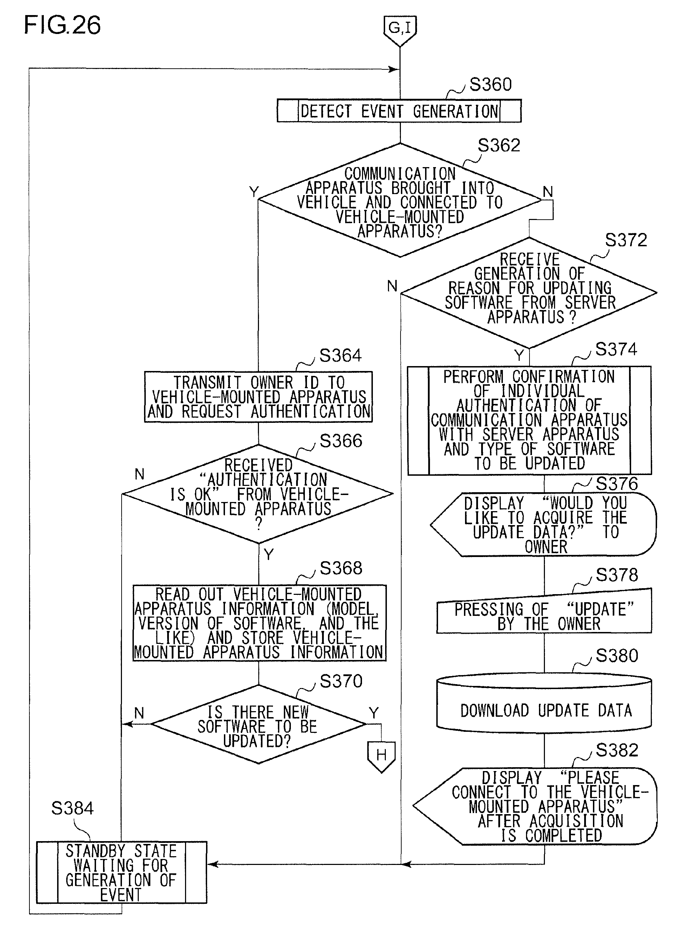

Fig. 25 is a flowchart illustrating a procedure of a communication process performed by the communication apparatus 20. The communication apparatus display unit 66 displays a message to the owner for prompting the transcription of the owner ID in the vehicle key 22 to the application (S340). The owner transcribes the owner ID stored in the vehicle key 22 to the application (S342). The request unit 94 transmits the owner ID and the communication apparatus ID to the server apparatus 10 and requests initial registration (S344). If the registration notification acquisition unit 96 receives notification indicating the registration is OK from the server apparatus 10 (Y in S346), the communication apparatus control unit 60 completes the proper installation of the application for update (S348). The communication apparatus 20 then becomes in a standby state waiting for the generation of an event (S350), and the step proceeds to step 360 shown in Fig. 26. If the registration notification acquisition unit 96 does not receive notification indicating the registration is OK from the server apparatus 10 (N in S346), the communication apparatus display unit 66 displays a message for prompting the re-entry of the owner ID (S352). If the process is not to be ended (N in S354), the step goes back to step S342. If the process is to be ended (Y in S354), the process is ended.

Fig. 26 is a flowchart illustrating a procedure of a communication process that follows that of Fig. 25. If the generation of an event is detected (S360) and the communication apparatus 20 is not brought into the vehicle 16 so as to be connected to the vehicle-mounted apparatus 18 (N in S362), the update data acquisition unit 76 performs, between the server apparatus 10 and the communication apparatus 20, the confirmation of the individual authentication of the communication apparatus 20 and the type of the software to be updated (S374) if the generation of a reason for updating the software is received from the server apparatus 10 (Y in S372). The communication apparatus display unit 66 displays a message stating "Would you like to acquire the update data?" to the owner (S376). When the communication apparatus input unit 64 receives the pressing of the "update" by the owner (S378), the update data acquisition unit 76 downloads the update data (S380). The communication apparatus display unit 66 displays a message stating "Please connect to the vehicle-mounted apparatus." after the acquisition is completed (S382). The communication apparatus 20 then becomes in a standby state waiting for the generation of an event (S384), and the step proceeds to step 360. If the generation of a reason for updating the software is not received from the server apparatus 10 (N in S372), the step proceeds to step 384.

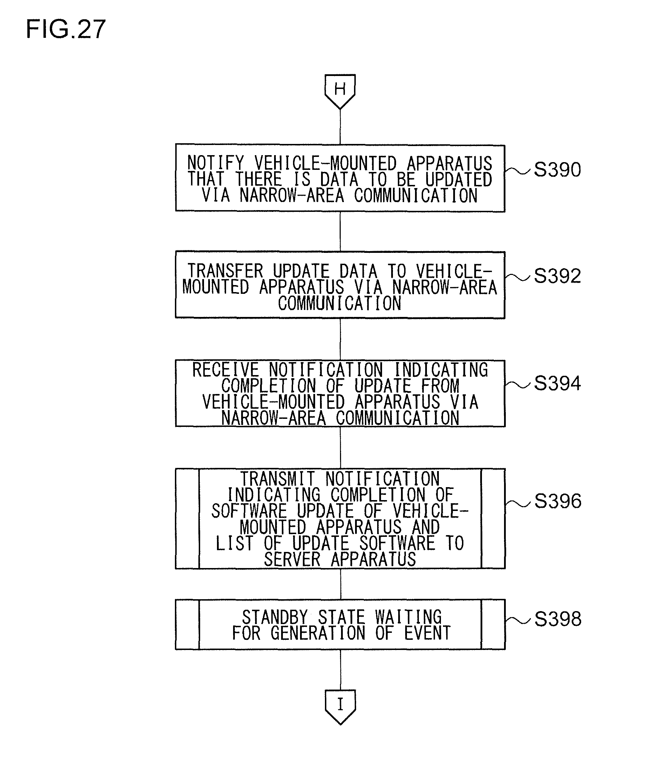

If the communication apparatus 20 is brought into the vehicle 16 and becomes connected to the vehicle-mounted apparatus 18 (Y in S362), the version information acquisition unit 80 transmits the owner ID to the vehicle-mounted apparatus 18 and requests authentication (S364). Upon receiving notification indicating that the authentication is OK from the vehicle-mounted apparatus 18 (Y in S366), the version information acquisition unit 80 reads out vehicle-mounted apparatus information (a model, the version of the software, and the like) and stores the vehicle-mounted apparatus information in the communication apparatus memory unit 62 (S368). If there is no new software to be updated (N in S370), the communication apparatus 20 becomes in the standby state waiting for the generation of an event (S384). If the notification indicating that the authentication is OK is not received from the vehicle-mounted apparatus 18 (N in S366), the step proceeds to step 384. If there is new software to be updated (Y in S370), the step proceeds to step 390 shown in Fig. 10. Also, there is a case where the step proceeds from step 398 shown in Fig. 27 to step 360.

Fig. 27 is a flowchart illustrating a procedure of a communication process that follows that of Fig. 26. The update unit 78 notifies the vehicle-mounted apparatus 18 that there is data to be updated via narrow-area communication (S390). The update unit 78 transfers the update data to the vehicle-mounted apparatus 18 via narrow-area communication (S392). The version information acquisition unit 80 receives notification indicating the completion of update from the vehicle-mounted apparatus 18 (S394). The update unit 78 transmits the notification indicating the completion of software update of the vehicle-mounted apparatus 18 and a list of update software to the server apparatus 10 (S396). The communication apparatus 20 becomes in a standby state waiting for the generation of an event (S398). After this, the step proceeds to step 360 shown in Fig. 26.

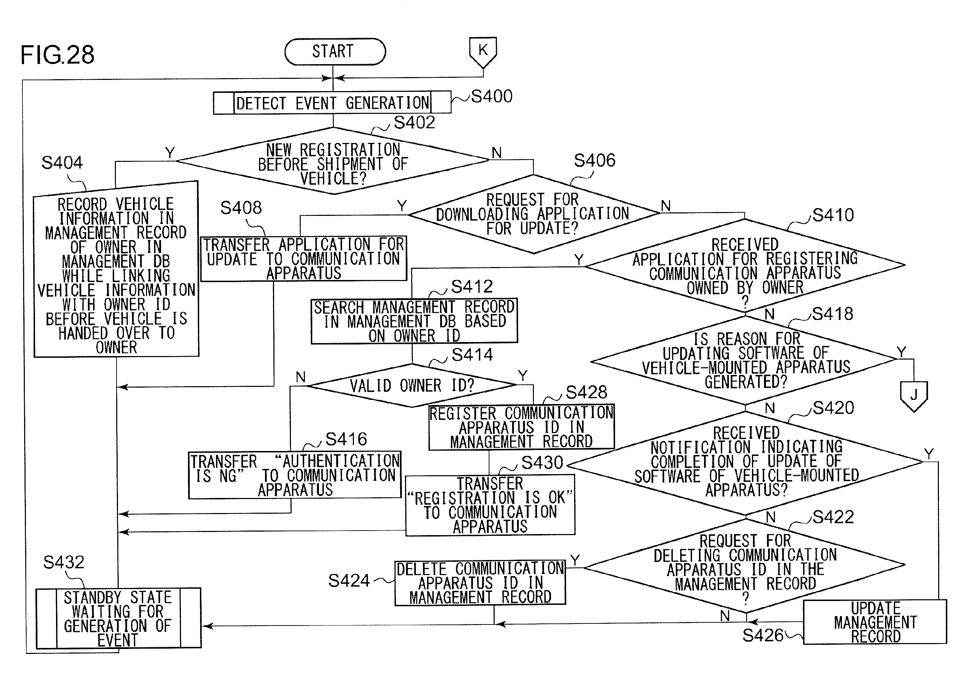

Fig. 28 is a flowchart illustrating a procedure of a communication process performed by the server apparatus 10. If the server apparatus 10 detects the generation of an event (S400) and the event is new registration before the shipment of the vehicle 16 (Y in S402), the server apparatus control unit 30 records the vehicle information in the management record 40 of the owner in the management DB 34 while linking the vehicle information with the owner ID before the vehicle 16 is handed over to the owner (S404). The server apparatus 10 then becomes in a standby state waiting for the generation of an event (S432), and the step proceeds to step 400. If the event is not new registration before the shipment of the vehicle 16 (N in S402) and is a request for downloading an application for update (Y in S406), the second output unit 48 transfers the application for update to the communication apparatus 20 (S408). After this, the step proceeds to step 432.

If the event is not a request for downloading an application for update (N in S406) and the reception unit 44 receives an application for registering the communication apparatus 20 owned by the owner (Y in S410), the server apparatus control unit 30 searches the management record 40 in the management DB 34 based on the owner ID (S412). If the owner ID is not a valid owner ID (N in S414), the first output unit 46 transfers notification indicating that the authentication is NG to the communication apparatus 20 (S416). After this, the step proceeds to step 432. If the owner ID is a valid owner ID (Y in S414), the server apparatus control unit 30 registers the communication apparatus ID in the management record 40 (S428), and the first output unit 46 transfers notification indicating that the registration is OK to the communication apparatus 20 (S430). After this, the step proceeds to step 432.

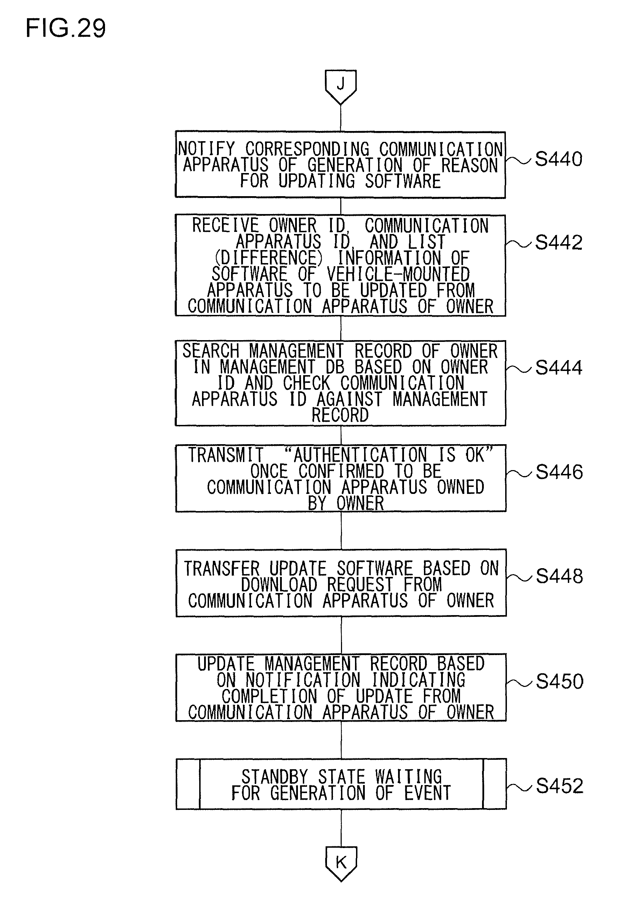

If the reception unit 44 does not receive an application for registering the communication apparatus 20 owned by the owner (N in S410), a reason for updating the software of the vehicle-mounted apparatus 18 is not generated (N in S418), and no notification indicating the completion of the update of the software of the vehicle-mounted apparatus 18 is received (N in S420), the step proceeds to step 432 if the event is not a request for deleting communication apparatus information in the management record 40 (N in S422). If the event is a request for deleting a communication apparatus ID in the management record 40 (Y in S422), the server apparatus control unit 30 deletes the communication apparatus ID in the management record 40 (S424), and the step proceeds to step 432. If the server apparatus 10 receives notification indicating the completion of software update of the vehicle-mounted apparatus 18 (Y in S420), the server apparatus control unit 30 updates the management record 40 (S426), and the step proceeds to step 432. If a reason for updating the software of the vehicle-mounted apparatus 18 is generated (Y in S418), the step proceeds to step 440 shown in Fig. 29. Also, there is a case where the step proceeds from step 452 shown in Fig. 29 to step 400.

Fig. 29 is a flowchart illustrating a procedure of a communication process that follows that of Fig. 8. The server apparatus control unit 30 notifies a corresponding communication apparatus 20 of the generation of a reason for updating the software (S440). The server apparatus control unit 30 receives the owner ID, the communication apparatus ID, and list (difference) information of software of the vehicle-mounted apparatus 18 to be updated from the communication apparatus 20 of the owner (S442). The server apparatus control unit 30 searches the management record 40 of the owner in the management DB 34 based on the owner ID and checks the communication apparatus ID against the management record 40 (S444). The first output unit 46 transmits notification indicating that the authentication is OK once the communication apparatus 20 is confirmed to be the communication apparatus 20 owned by the owner (S446). The second output unit 48 transfers update data based on a download request from the communication apparatus 20 of the owner (S448). The server apparatus control unit 30 updates the management record 40 based on notification indicating the completion of update from the communication apparatus 20 of the owner (S450). The server apparatus 10 becomes in a standby state waiting for the generation of an event (S452). After this, the step proceeds to step 400 shown in Fig. 28.

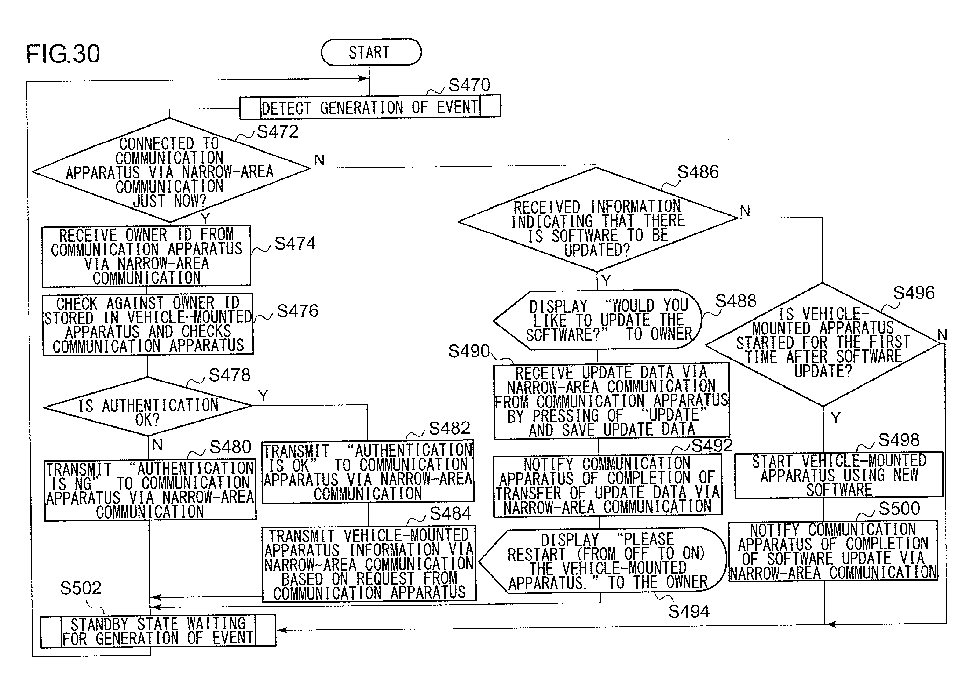

Fig. 30 is a flowchart illustrating a procedure of a communication process performed by the vehicle-mounted apparatus 18. If the vehicle-mounted apparatus 18 detects the generation of an event (S470) and the present moment is immediately after the vehicle-mounted apparatus 18 is connected to the communication apparatus 20 via the narrow-area communication (Y in S472), the input unit 140 receives the owner ID from the communication apparatus 20 via the narrow-area communication (S474). The authentication unit 148 checks the owner ID against the owner ID stored in the vehicle-mounted apparatus 18 and checks the communication apparatus 20 (S476). If the authentication is not OK (N in S478), the output unit 142 transmits notification indicating that the authentication is NG to the communication apparatus 20 via the narrow-area communication (S480). The vehicle-mounted apparatus 18 then becomes in a standby state waiting for the generation of an event (S502), and the step goes back to step 470. If the authentication is OK (Y in S478), the output unit 142 transmits notification indicating that the authentication is OK to the communication apparatus 20 via the narrow-area communication (S482). The output unit 142 transmits the vehicle-mounted apparatus information via the narrow-area communication based on a request from the communication apparatus 20 (S484). After this, the step proceeds to step 502.

If the present moment is not immediately after the vehicle-mounted apparatus 18 is connected to the communication apparatus 20 via the narrow-area communication (N in S472) and the input unit 140 receives, via the narrow-area communication, information indicating that there is software to be updated (Y in S486), the vehicle-mounted apparatus control unit 130 displays a message stating "Would you like to update the software?" to the owner (S488). The input unit 140 receives update data via the narrow-area communication from the communication apparatus 20 by the pressing of "update" and saves the update data in the vehicle-mounted apparatus memory unit 132 (S490). The output unit 142 notifies the communication apparatus 20 of the completion of the transfer of the update data via narrow-area communication (S492). The vehicle-mounted apparatus display unit 138 displays a message stating "Please restart (from OFF to ON) the vehicle-mounted apparatus." to the owner (S494). After this, the step proceeds to step 502.

If the input unit 140 does not receive information indicating that there is software to be updates (N in S486) and the vehicle-mounted apparatus 18 is started for the first time after software update (Y in S496), the vehicle-mounted apparatus display unit 138 starts the vehicle-mounted apparatus 18 using new software (S498). The output unit 142 notifies the communication apparatus 20 of the completion of the software update data via narrow-area communication (S500). After this, the step proceeds to step 502. If the vehicle-mounted apparatus 18 is not started for the first time after the software update (N in S496), steps 498 and 500 are skipped.

According to the embodiment of the present disclosure, update data is received from a server apparatus and is also output to a vehicle-mounted apparatus using an owner ID and a communication apparatus ID. Thus, the update data that has been received safely from the server apparatus can be easily output to the vehicle-mounted apparatus. Since an owner ID is acquired from a vehicle key, an owner ID that can be only personally known can be retained without fail. The version of software stored in a vehicle-mounted apparatus is stored, and update data from a server apparatus is received and is also output to the vehicle-mounted apparatus. Thus, the outputting to the vehicle-mounted apparatus can be facilitated. Further, the update data is output to the vehicle-mounted apparatus when permission for the outputting according to the owner ID is received. Thus, the safety for the outputting to the vehicle-mounted apparatus can be improved.

Also, since the update data is input to the communication apparatus from the server apparatus using the owner ID and the communication apparatus ID, the safety for the update data can be maintained. Further, the update data from the communication apparatus is input when outputting is permitted based on the owner ID. Thus, the safety for the inputting from the communication apparatus can be improved. Also, the update data is input from the server apparatus to the communication apparatus and is also output to the vehicle-mounted apparatus from the communication apparatus using the owner ID and the communication apparatus ID. Thus, the update data that has been input safely from the server apparatus to the communication apparatus can be easily output to the vehicle-mounted apparatus.

Further, by transcribing the owner ID from the vehicle key to the communication apparatus, the individual recognition of the personal communication apparatus of the owner of the vehicle and the extraction of information regarding the vehicle (for example, the type and version of software of the vehicle-mounted apparatus) can be facilitated from the server apparatus's perspective. Also, software to be changed can be efficiently delivered to the personal communication apparatus of the owner of the vehicle without error by a network when it becomes necessary to update the software of the vehicle-mounted apparatus.

### (Fourth embodiment)

Before a specific explanation of a fourth embodiment of the present disclosure is given, an explanation will be given regarding knowledge on which the fourth embodiment is based. A communication apparatus such as a mobile phone is provided with large-capacity memory and a wide-area communication function. Thus, there is a demand for allowing for the exchange of important data of a vehicle-mounted apparatus mounted in a vehicle using the memory and function. However, unrestricted access to the vehicle-mounted apparatus by a communication apparatus other than that of the owner of the vehicle is not desirable in terms of security. The important data in this case represents, for example, a program of the vehicle-mounted apparatus, important software for map data or the like, an address book registered in the vehicle-mounted apparatus, and personal data such as various customization settings.

One of the ways of dealing with such a situation is to manually input a passcode issued in advance by a car dealer to an authentication confirmation application that is downloaded to the mobile phone. Another way of dealing is to directly pass an authentication ticket produced by one terminal to the other terminal without going through a server apparatus by an action that is performed only between the terminals such as allowing terminals integrated with a non-contact IC and a reader/writer to come into contact with each other.

However, the first way of dealing comes with a risk where a copy of the passcode is made by a third person other than the owner of the vehicle due to leakage of the passcode and also comes with a risk where the passcode is forgotten over the years. In the second way of dealing, since the owner of the vehicle is able to freely choose a terminal to which the authentication ticket is provided without using the server apparatus, the use of the terminal cannot be promptly stopped from the server apparatus side in the case of an accident such as a case when the terminal is lost.

The fourth embodiment of the present disclosure relates to a communication system where, when a communication apparatus and a vehicle-mounted apparatus are connected so as to perform data communication, the data communication is permitted only to a communication apparatus that is personally owned by the owner. In the present embodiment, owner ID information for identifying the owner is stored in a vehicle kay, and the owner transcribes the owner ID to his/her own communication apparatus. The communication apparatus transmits the owner ID and a communication apparatus ID for identifying the communication apparatus to a server apparatus. The communication apparatus ID may be a personal electronic mail address of the owner. Based on this information, the server apparatus registers the communication apparatus and links the owner ID and the communication apparatus with each other on a one-to-one basis. After the registration, the server apparatus transmits a ticket associated with the owner ID to the communication apparatus. The ticket is for permitting the exchange of predetermined data with the vehicle-mounted apparatus. Only a communication apparatus that has this ticket is able to access important data of the vehicle-mounted apparatus. The communication system 100 according to the fourth embodiment is similar in type to that in Fig. 18. A description will be made mainly regarding differences thereof.

In the communication system 100 shown in Fig. 18, the server apparatus 10 stores a ticket for allowing connection to the vehicle-mounted apparatus 18 and an owner ID for identifying the vehicle-mounted apparatus 18. The communication apparatus 20 requests the server apparatus 10 to register the communication apparatus 20 by outputting the combination of the owner ID and the communication apparatus ID after acquiring the owner ID from the vehicle key 22 that stores the owner ID. The server apparatus 10 transmits the ticket to the communication apparatus 20 upon registering the communication apparatus 20. By using the ticket that has been acquired, the communication apparatus 20 connects to the vehicle-mounted apparatus 18 that stores the ticket.

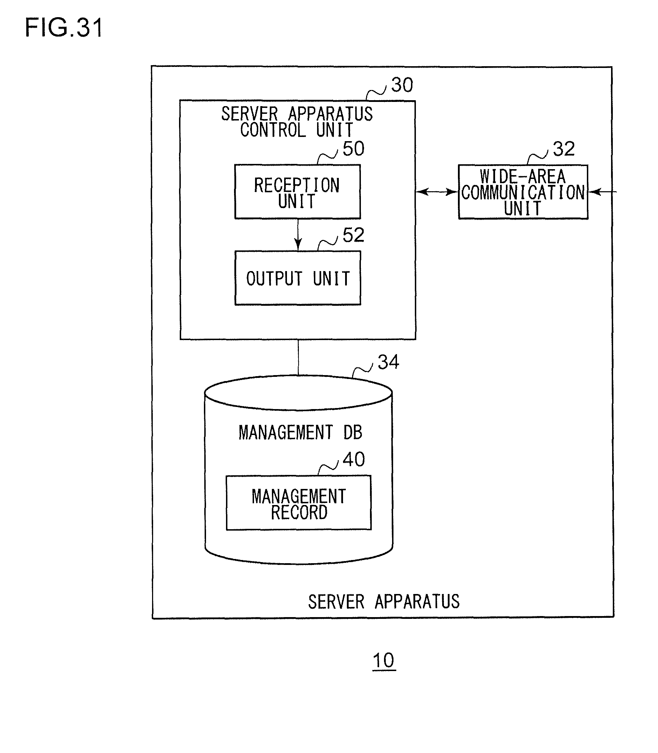

Fig. 31 illustrates the configuration of a server apparatus 10 according to the forth embodiment of the present disclosure. The server apparatus 10 includes a server apparatus control unit 30, a wide-area communication unit 32, and a management DB 34. The server apparatus control unit 30 includes a reception unit 50 and an output unit 52. The management DB 34 includes a management record 40. In the following, the configuration of the server apparatus 10 will be explained in the following order: (1) initial process; (2) access authority transfer process; (3) spoofing prevention process; and (4) deletion process.

### (1) Initial process

The initial process corresponds to a process for installing an application for accessing a vehicle-mounted apparatus (hereinafter, referred to as "application for access" or "authorization application") by registering the communication apparatus 20 in the server apparatus 10. The application for access is application software that is downloaded to the communication apparatus 20. By executing the application for access, the safe exchanging of data is performed between the vehicle-mounted apparatus 18 and the communication apparatus 20 via a narrow-area network. The application for access may be the application for update described previously. As described previously, when a person who is becoming the owner of a vehicle 16 makes a contract for purchasing the vehicle at a car dealer, a vehicle-mounted apparatus 18 that is specified in a contract document is mounted in the vehicle 16 at a car maker or the car dealer. Ticket information for checking the authority that allows for access to the vehicle-mounted apparatus 18 via the narrow-area network is registered in the vehicle-mounted apparatus 18 at that time. Then, a manager at the car maker or the car dealer links an owner ID with the ticket information. A ticket that permits access to the vehicle-mounted apparatus 18 may be something that is common for a large category of each model of a vehicle-mounted apparatus 18 (for example, a display audio having a model number of K is common, and the like) or may be uniquely defined and assigned for each vehicle 16. The security level varies depending on the setting of the ticket.

Next, when the vehicle 16 is handed over to the owner, the owner downloads an application for access onto a communication apparatus 20 from the server apparatus 10. In order to properly install the application for access that has been downloaded, the owner transcribes the owner ID stored in the vehicle key 22 to the communication apparatus 20. Thereby, the communication apparatus 20 acquires the owner ID from the vehicle key 22. When the owner ID is imported in the application for access, the communication apparatus 20 requests the server apparatus 10 to perform initial registration, using HTTP or HTTPS communication through a wide-area network.

As a result, even when the communication apparatus 20 is not connected to the vehicle-mounted apparatus 18, a reception unit 50 receives the combination of the owner ID and the communication apparatus ID from the communication apparatus 20 to which the wide-area communication unit 32 is connected. This corresponds to being requested for the registration of the communication apparatus 20. A server apparatus control unit 30 searches the management DB 34 and extracts a corresponding management record 40 based on the owner ID and stores the owner ID and the communication apparatus ID while linking the owner ID with the communication apparatus ID. This corresponds to the registration of the communication apparatus 20. As a response to the request, an output unit 52 outputs a ticket to the communication apparatus 20 to which the wide-area communication unit 32 is connected. This ticket is associated with the owner ID on a one-to-one basis in advance and is used when the communication apparatus 20 is connected to the vehicle-mounted apparatus 18. If the owner ID turns out to represent an abnormal value with no corresponding management record, the reception unit 50 notifies the communication apparatus 20 that the registration is NG.

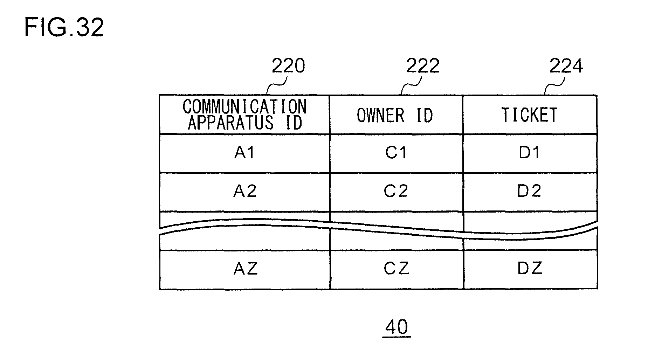

Fig. 32 illustrates a data structure of the management record 40. As illustrated in the figure, the data structure includes a communication apparatus ID column 220, an owner ID column 222, and a ticket column 224. The communication apparatus ID column 220 and the owner ID column 222 are the same as the communication apparatus ID column 210 and the owner ID column 212 shown in Fig. 20. Information regarding the ticket is registered in the ticket column 224. Fig. 31 is referred back.

### (2) Access authority transfer process

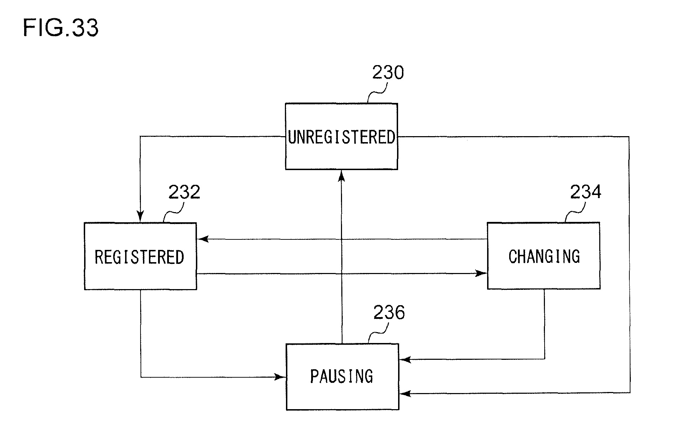

An access authority transfer process corresponds to transferring authority for accessing the vehicle-mounted apparatus 18 to a new communication apparatus 20 when the owner changes the model of the communication apparatus 20. Fig. 33 illustrates a state transition in the server apparatus 10. This corresponds to a state transition of the management record 40 in the management DB 34 shown in Fig. 31. As the states of the communication apparatus 20, an unregistered state 230, a registered state 232, a changing state 234, and a pausing state 236 are defined. Of these states, only the unregistered state 230 and the changing state 234 are the states where information such as communication ID can be registered in the management record 40. This corresponds to a situation where a registration request cannot be accepted during the registered state 232 and the pausing state 236. A state where the processes explained thus far are not being used is the pausing state 236, and serves as a starting point. A state after the vehicle 16 is manufactured at a factory and before the vehicle 16 is handed over to the owner is the pausing state 236. The pausing state 236 transitions to the unregistered state 230 in a situation where a person in charge at the car dealer meets the owner immediately before the vehicle 16 is handed over to the owner and the owner performs initial registration of his/her communication apparatus 20.

In general, the owner travels to a car dealer shop when the owner purchases and receives the vehicle 16. Thus, this operation allows for security guarantee. By immediately performing the initial registration of his/her communication apparatus 20, the state of the management record 40 transitions to the registered state 232. If the state is left as the unregistered state 230 without performing the initial registration, a registration procedure of a communication apparatus 20 of somebody else may be accepted. Thus, the state desirably goes back to the pausing state 236 within a specific period of time. In the case of changing the model of the communication apparatus 20, a transition of bringing back the state to the registered state 232 is made by allowing the management record 40 to transition from the registered state 232 to the changing state 234 once and performing a registration procedure by a new communication apparatus 20.

The original communication apparatus 20 used before changing the model requests the server apparatus 10 to perform "terminal change," with an attachment of an owner ID and a communication apparatus ID. Upon receiving the request for "terminal change" via the wide-area communication unit 32, the server apparatus control unit 30 changes the status in the management record 40 from the registered state 232 to the changing state 234 by referring to the owner ID and the communication apparatus ID. After the completion of the change, the server apparatus control unit 30 transmits notification indicating the completion to the original communication apparatus 20 via the wide-area communication unit 32. The original communication apparatus 20 that has received the notification indicating the completion is invalidated by discarding the owner ID and the ticket retained by the original communication apparatus 20. A new communication apparatus 20 subject to the model change downloads an application for access in the same way as in the processes described thus far. The new communication apparatus 20 requests the server apparatus 10 to perform "transfer," with an attachment of an owner ID and a communication apparatus ID.

Upon receiving the request for "transfer" via the wide-area communication unit 32, the server apparatus control unit 30 changes the status in the management record 40 from the changing state 234 to the registered state 232 by referring to the owner ID and the communication apparatus ID. In other words, after the reception unit 50 is requested for the change by the original communication apparatus 20 to which a ticket has already been output by the output unit 52, the reception unit 50 is requested for the registration of the new communication apparatus 20 by the new communication apparatus 20 to which the wide-area communication unit 32 is connected. At the time of the request for the registration, the reception unit 50 receives the combination of the owner ID and the communication apparatus ID for identifying the new communication apparatus 20. Information regarding the new communication apparatus 20 is registered in an overwriting manner in the management record 40 only during the unregistered state 230 and the changing state 234. The security at the time of the change is improved by allowing the owner to input an arbitrary passphrase and registering the passphrase in the management record 40 at the time of the request for "terminal change" made by the original communication apparatus 20 so that this passphrase is input at the time of request for "transfer" made by the new communication apparatus 20. After the completion of the change, the output unit 52 transmits a ticket to the new communication apparatus 20 via the wide-area communication unit 32.

### (3) Spoofing prevention process

A spoofing prevention process corresponds to a process for preventing "spoofing" performed by a communication apparatus 20 of somebody other than the owner, in regard to the server apparatus 10. The communication apparatus 20 of the owner is assumed to be in a state where the communication apparatus ID is already registered normally in the management record 40 of the server apparatus 10. In other words, the state is the registered state 232. Suppose that the owner loses the vehicle key 22 and the vehicle key 22 falls into the hands of a third person with malicious intention. The third person downloads the application for access to his/her own communication apparatus 20 and starts an "initial registration" or "transfer" command in the communication apparatus 20. The application for access requests the transcription of the owner ID of the vehicle key 22, and the owner transcribes the owner ID to the communication apparatus 20 in accordance with the request. The communication apparatus 20 applies for "initial registration" or "transfer" to the server apparatus 10, with an attachment of the owner ID and the communication apparatus ID.

However, the communication apparatus 20 is already in the registered state 232 in the management record 40. Thus, the output unit 52 returns acknowledgement indicating "registration violation." In other words, when the communication apparatus 20 is registered according to the combination of the owner ID and the communication apparatus ID, the output unit 52 does not output a ticket even when the reception unit 50 receives a request for registration. As a result, proper installation of the application for access to the communication apparatus 20 of the third person ends up failing. In case of a fraud, notification indicating the fraud that is issued from the server apparatus 10 to the communication apparatus 20 of the owner may lead to finding the third person with malicious intention.

### (4) Deletion process

In a case such as a case where the owner is selling the vehicle 16 as a used car or where the owner has lost the vehicle key 22 or the communication apparatus 20 that has been registered, the server apparatus control unit 30 deletes the registration related to the communication apparatus 20 of the owner from the management DB 34 for the purpose of security and returns the state of the communication apparatus 20 in the management record 40 to the pausing state 236. This process may be performed by a "registration deletion" command from the communication apparatus 20 or may be performed by a server manager upon a direct request from the owner to the car dealer.

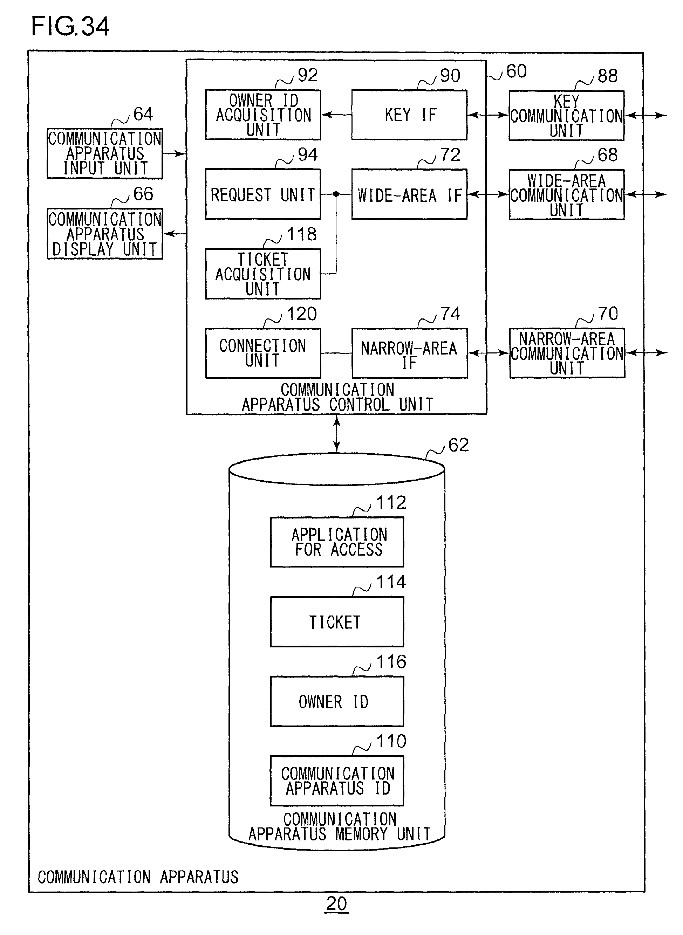

Fig. 34 illustrates the configuration of a communication apparatus 20 according to the fourth embodiment of the present disclosure. The communication apparatus 20 includes a communication apparatus control unit 60, a communication apparatus memory unit 62, a communication apparatus input unit 64, a communication apparatus display unit 66, a wide-area communication unit 68, a narrow-area communication unit 70, and a key communication unit 88. The communication apparatus control unit 60 includes a wide-area IF 72, a narrow-area IF 74, a key IF 90, an owner ID acquisition unit 92, a request unit 94, a ticket acquisition unit 118, and a connection unit 120. The communication apparatus memory unit 62 includes a communication apparatus ID 110, an application 112 for access, aa ticket 114, and an owner ID 116. In the following, the configuration of the communication apparatus 20 will be explained in the following order: (1) initial process; (2) access process; (3) spoofing prevention process; and (4) process of setting ticket validity period.

### (1) Initial process

The same applies to processes performed before the vehicle 16 is handed over to the owner. Thus, the explanation thereof is omitted. Next, a description will be made regarding a step that occurs after the vehicle 16 is handed over to the owner. First, the owner downloads software for access onto a communication apparatus 20 from a server apparatus 10. In order to properly install (activate) the software for access that has been downloaded, the owner inputs an "initial registration" command via the communication apparatus input unit 64. The communication apparatus display unit 66 displays information indicating "Please transcribe the owner ID of the key to the application.," and the owner transcribes the owner ID stored in the vehicle key 22 to the communication apparatus 20. As a result, the owner ID acquisition unit 92 acquires the owner ID from the vehicle key 22 that stores the owner ID in the same way as described thus far.

When the owner ID is imported in the application for access, the request unit 94 applies for initial registration to the server apparatus 10 using HTTPS communication via the wide-area communication unit 68. Explaining more specifically, the request unit 94 requests the server apparatus 10 to register the communication apparatus 20 by outputting the combination of the owner ID acquired by the owner ID acquisition unit 92 and the communication apparatus ID 110 stored in the communication apparatus memory unit 62 to the server apparatus 10. When the server apparatus 10 registers the communication apparatus 20 in response to this request, the ticket acquisition unit 118 acquires a ticket from the server apparatus 10 via the wide-area communication unit 68 and the wide-area IF 72 as a response to the request from the request unit 94. When the ticket acquisition unit 118 acquires the ticket, the communication apparatus control unit 60 completes the proper installation by storing this as the ticket 114 in the communication apparatus memory unit 62. After this, the communication apparatus control unit 60 ends SSL communication.

### (2) Access process

The access process corresponds to a procedure for transmitting and receiving important data such as personal information when the vehicle-mounted apparatus 18 and the communication apparatus 20 are connected via the narrow-area network. The access process may include the update process described thus far. When the communication apparatus 20 and the vehicle-mounted apparatus 18 are connected via a narrow-area network, the connection unit 120 establishes a secure communication path with the vehicle-mounted apparatus 18. As a result, communication data that occurs after this is less likely to be leaked to the outside. Then, the connection unit 120 outputs the ticket 114 stored in the communication apparatus memory unit 62 to the vehicle-mounted apparatus 18 via the narrow-area IF 74 and the narrow-area communication unit 70.

By comparing ticket information from the communication apparatus 20 with ticket information that is stored in advance, the vehicle-mounted apparatus 18 checks whether the communication apparatus 20 possesses a proper access permit. When the validity of the ticket is confirmed and the communication apparatus 20 is determined to be personally owned by the owner, the connection unit 120 receives acknowledgement indicating that the authentication is OK from the vehicle-mounted apparatus 18. On the other hand, when the communication apparatus 20 is not determined to be personally owned by the owner, the connection unit 120 receives acknowledgement indicating that the authentication is NG from the vehicle-mounted apparatus 18. Upon receiving the acknowledgement indicating that the authentication is OK, the communication apparatus control unit 60 performs transmission and reception of important information such as personal information to and from the vehicle-mounted apparatus 18. As described, by using the ticket that has been acquired, the connection unit 120 establishes a communication path for performing the exchange of predetermined data with the vehicle-mounted apparatus 18 that stores the ticket.

### (3) Spoofing prevention process

This is a process that corresponds to the spoofing prevention process in the server apparatus 10. A spoofing prevention process in the communication apparatus 20 is performed by the communication apparatus control unit 60 and particularly by the owner ID acquisition unit 92, the request unit 94, and the ticket acquisition unit 118.

### (4) Process of setting ticket validity period

A process of setting a ticket validity period corresponds to a process of providing a validity period to the ticket for access right in order to prevent a fraudulent activity and to prevent the deletion of the registration from being forgotten when the vehicle 16 is sold as a used car. In order to prevent operational interference from occurring, a simple procedure for extending the validity period of the ticket is provided here. A validity period is set to the ticket 114 stored in the communication apparatus memory unit 62. The validity period is defined to be, for example, a given period such as six months and is referred to as a first period. When the first period passes after the ticket is acquired, the communication apparatus control unit 60 displays a message stating "The valid period of the ticket has been expired. Please transcribe the owner ID of the key." on the communication apparatus display unit 66.

When the owner ID acquisition unit 92 acquires the owner ID within a given grace period, the communication apparatus control unit 60 resets the first period of the ticket 114 and recovers the access right. The same process is repeated thereafter. The given grace period is defined to be, for example, one week and is referred to as a second period. As described, the second period is defined to be shorter than the first period. In case the owner can be away during the time when the first period passes due to a lengthy trip or the like, the communication apparatus control unit 60 may provide a "validity period extension" command. The first period is extended actively by allowing the owner ID acquisition unit 92 to acquire the owner ID while the owner is invoking the "validity period extension" command via the communication apparatus input unit 64.

If the second period passes following the first period, the ticket cannot be restored. After this, the communication apparatus control unit 60 requests the server apparatus 10 to transition to the pausing state 236. When requested to transition to the pausing state 236, the server apparatus 10 allows the state to transition to the pausing state 236. The communication apparatus control unit 60 invalidates the own self by deleting the ticket 114 and the owner ID 116. In order to re-register the communication apparatus 20 in the server apparatus 10, it is necessary to start from the "initial registration" after the owner visits the car dealer and changes the state to the "unregistered" state.

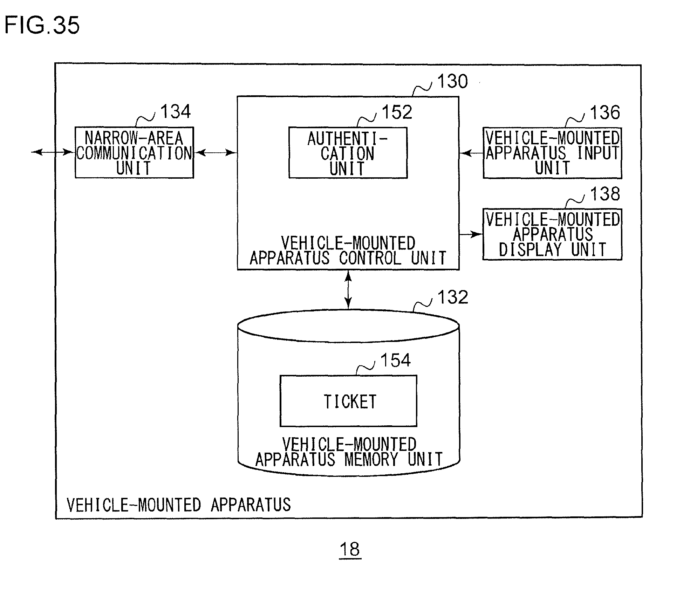

Fig. 35 illustrates the configuration of a vehicle-mounted apparatus 18 according to the fourth embodiment of the present disclosure. The vehicle-mounted apparatus 18 includes a vehicle-mounted apparatus control unit 130, a vehicle-mounted apparatus memory unit 132, a narrow-area communication unit 134, a vehicle-mounted apparatus input unit 136, and a vehicle-mounted apparatus display unit 138. The vehicle-mounted apparatus control unit 130 includes an authentication unit 152, and the vehicle-mounted apparatus memory unit 132 includes a ticket 154.

When the communication apparatus 20 and the narrow-area communication unit 134 are connected via a narrow-area network, the vehicle-mounted apparatus control unit 130 establishes a secure communication path with the communication apparatus 20. The authentication unit 152 acquires a ticket from the communication apparatus 20 via the narrow-area communication unit 134. The authentication unit 152 compares the ticket that has been acquired with the ticket 154 stored in the vehicle-mounted apparatus memory unit 132. If the tickets match each other, the authentication unit 152 determines that the communication apparatus 20 possesses a proper access permit. On the other hand, if the tickets do not match each other, the authentication unit 152 determines that the communication apparatus 20 does not possess a proper access permit. When the validity of the ticket is confirmed, the authentication unit 152 transmits acknowledgement indicating that the authentication is OK to the communication apparatus 20. If the validity of the ticket is not confirmed, the authentication unit 152 transmits acknowledgement indicating that the authentication is NG. If the authentication is OK, communication is performed between the narrow-area communication unit 134 and the communication apparatus 20.

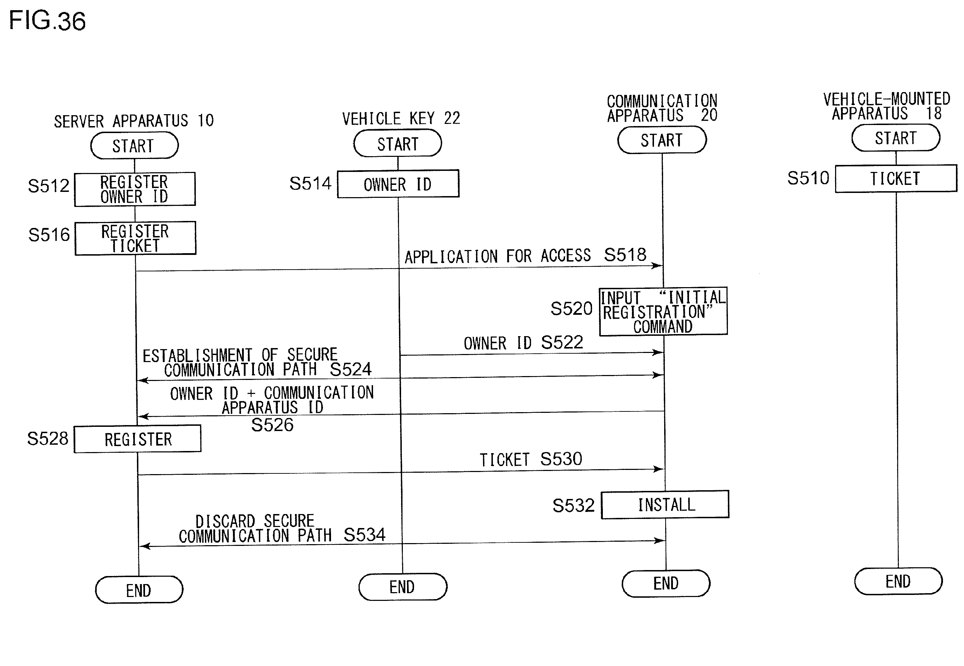

An explanation will be given of the operation of the communication system 100 having the above-stated structure. Fig. 36 is a sequence diagram illustrating a procedure of an initial process performed by the communication system 100 according to the fourth embodiment of the present disclosure. A ticket is stored in the vehicle-mounted apparatus 18 (S510). An owner ID is registered in the server apparatus 10 (S512). The owner ID is stored in the vehicle key 22 (S514). Further, the ticket is registered in association with the owner ID in the server apparatus 10 (S516). The server apparatus 10 transmits an application for access to the communication apparatus 20 (S518). An "initial registration" command is input to the communication apparatus 20 (S520). The owner ID is transcribed from the vehicle key 22 to the communication apparatus 20 (S522).

A secure communication path is established between the server apparatus 10 and the communication apparatus 20 (S524). The communication apparatus 20 transmits the owner ID and the communication apparatus ID to the server apparatus 10 (S526). The server apparatus 10 registers the communication apparatus 20 (S528). The server apparatus 10 transmits the ticket to the communication apparatus 20 (S30). The communication apparatus 20 installs the application for access (S532). The secure communication path between the server apparatus 10 and the communication apparatus 20 is discarded (S534).

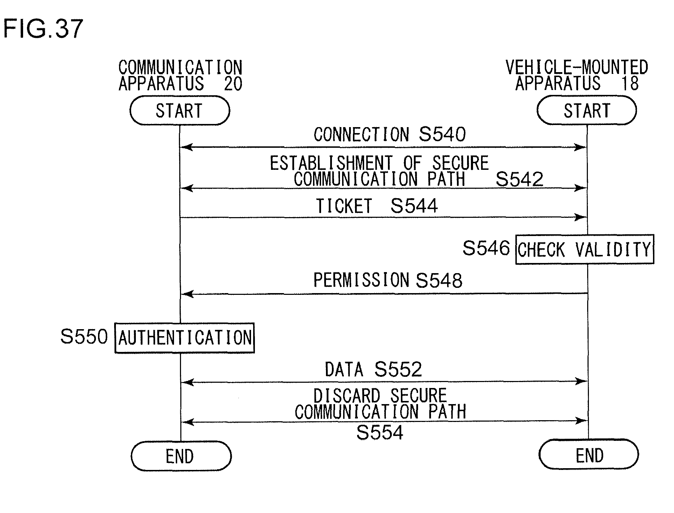

Fig. 37 is a sequence diagram illustrating a procedure of data communication performed by the communication system 100 according to the fourth embodiment of the present disclosure. The communication apparatus 20 and the vehicle-mounted apparatus 18 are connected to each other (S540). A secure communication path is established between the server apparatus 10 and the communication apparatus 20 (S542). The communication apparatus 20 transmits the ticket to the vehicle-mounted apparatus 18 (S544). The vehicle-mounted apparatus 18 checks the validity of the communication apparatus 20 (S546). The vehicle-mounted apparatus 18 transmits, to the communication apparatus 20, permission for access (S548). The authentication turns out to be OK in the communication apparatus 20 (S550). Data communication is performed between the communication apparatus 20 and the vehicle-mounted apparatus 18 (S552). The secure communication path between the communication apparatus 20 and the vehicle-mounted apparatus 18 is discarded (S554).

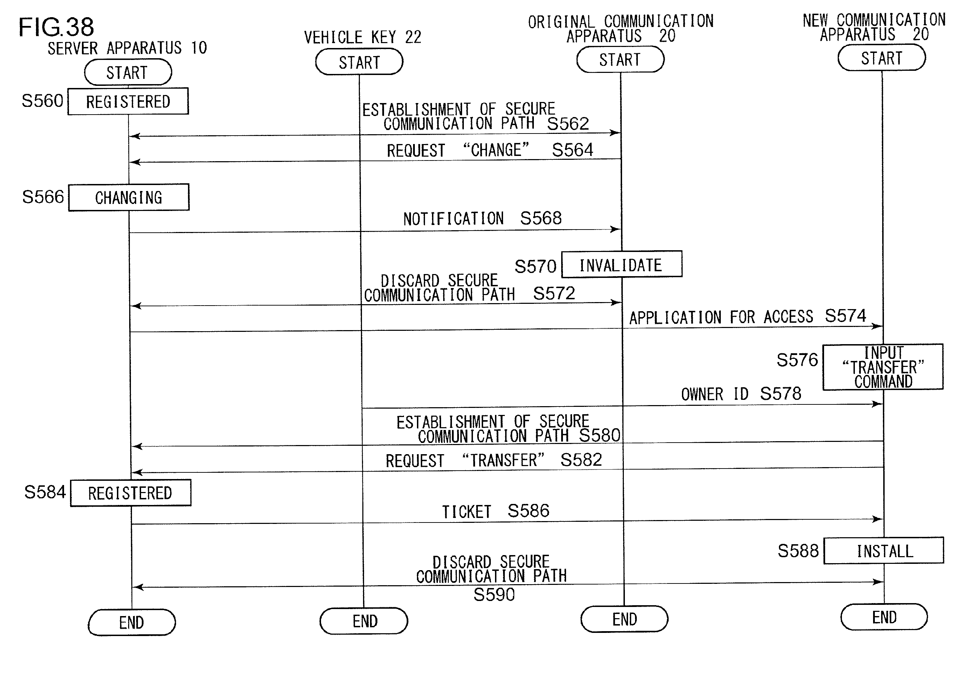

Fig. 38 is a sequence diagram illustrating a procedure of a communication apparatus changing process performed by the communication system 100 according to the forth embodiment of the present disclosure. In the server apparatus 10, an original communication apparatus 20 is registered as "registered" (S560). A secure communication path is established between the server apparatus 10 and the original communication apparatus 20 (S562). The original communication apparatus 20 requests the server apparatus 10 to perform "change" (S564). The server apparatus 10 registers "changing" for the communication apparatus 20 (S566). The server apparatus 10 notifies the original communication apparatus 20 of the registration information (S568). Invalidation is performed in the original communication apparatus 20 (S570). The secure communication path between the server apparatus 10 and the original communication apparatus 20 is discarded (S572).

The server apparatus 10 transmits an application for access to a new communication apparatus 20 (S574). A "transfer" command is input to the new communication apparatus 20 (S576). The owner ID is transcribed from the vehicle key 22 to the communication apparatus 20 (S578). A secure communication path is established between the server apparatus 10 and the new communication apparatus 20 (S580). The new communication apparatus 20 requests the server apparatus 10 to perform "transfer" (S582). The server apparatus 10 registers "registered" for the new communication apparatus 20 (S584). The server apparatus 10 transmits a ticket to the new communication apparatus 20 (S586). The new communication apparatus 20 installs the application for access (S588). The secure communication path between the server apparatus 10 and the new communication apparatus 20 is discarded (S590).

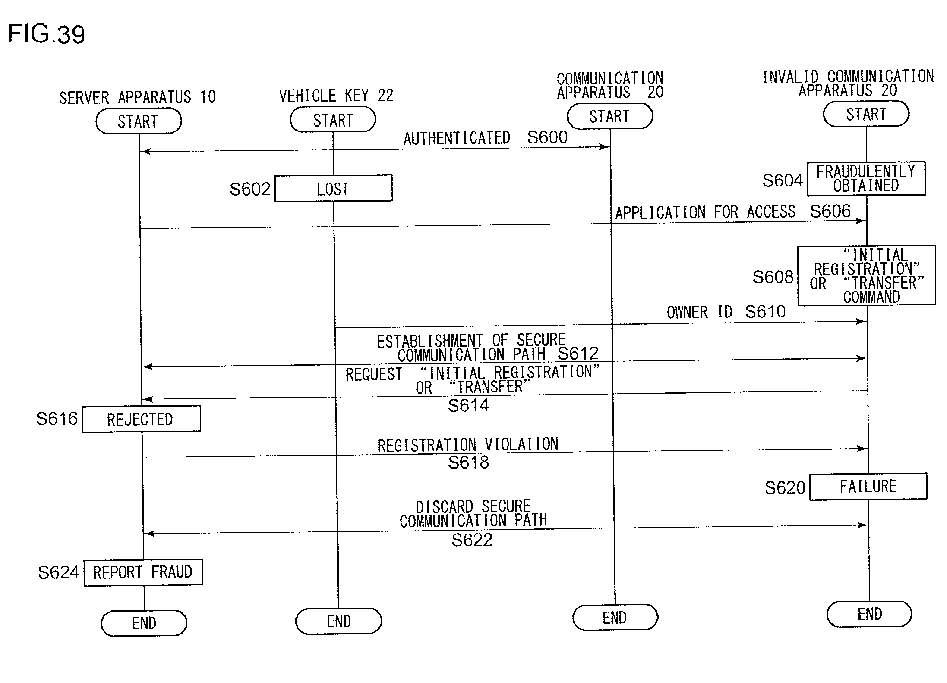

Fig. 39 is a sequence diagram illustrating a procedure of a process performed when a vehicle key is lost by the communication system 100 according to the forth embodiment of the present disclosure. Between the server apparatus 10 and the communication apparatus 20, the state is defined as an authenticated state (S600). The owner loses the vehicle key 22 (S602). A user who is different from the owner and who possesses an invalid communication apparatus 20 fraudulently obtains the vehicle key 22 (S604). The server apparatus 10 transmits an application for access to an invalid communication apparatus 20 (S606). An "initial registration" or "transfer" command is input to the invalid communication apparatus 20 (S608).

The owner ID is transcribed from the vehicle key 22 to the invalid communication apparatus 20 (S610). A secure communication path is established between the server apparatus 10 and the invalid communication apparatus 20 (S612). The invalid communication apparatus 20 requests the server apparatus 10 to perform "initial registration" or "transfer" (S614). The server apparatus 10 rejects the request (S616). The server apparatus 10 notifies the invalid communication apparatus 20 of registration violation (S618). The invalid communication apparatus 20 recognizes a failure (S620). The secure communication path is discarded between the server apparatus 10 and the invalid communication apparatus 20 (S622). The server apparatus 10 reports the fraud (S624).

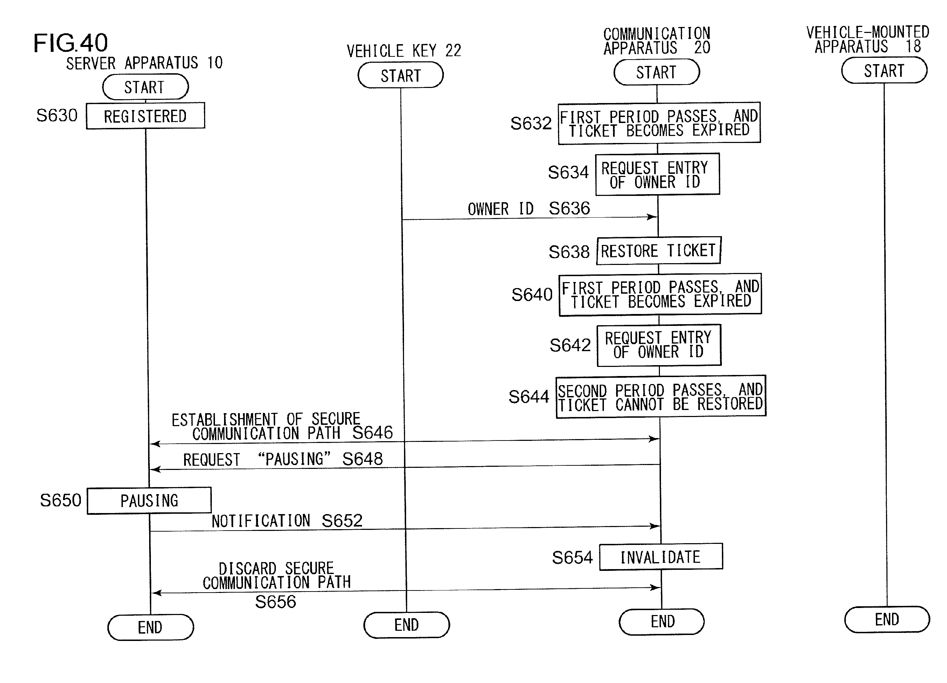

Fig. 40 is a sequence diagram illustrating a procedure of a ticket update process performed by the communication system 100 according to the fourth embodiment of the present disclosure. The communication apparatus 20 is already registered in the server apparatus 10 (S630). The first period passes, and the ticket becomes expired in the communication apparatus 20 (S632). The communication apparatus 20 requests the owner to input the owner ID (S634). The owner ID is transcribed from the vehicle key 22 to the communication apparatus 20 (S636). The communication apparatus 20 restores the ticket (S638). The first period passes again, and the ticket becomes expired in the communication apparatus 20 (S640). The communication apparatus 20 requests the owner to input the owner ID (S642). The second period passes, and the ticket cannot be restored in the communication apparatus 20 (S644).

A secure communication path is established between the server apparatus 10 and the communication apparatus 20 (S646). The communication apparatus 20 requests the server apparatus 10 to perform "pausing" (S648). The server apparatus 10 registers "pausing" for the communication apparatus 20 (S650). The server apparatus 10 reports the pausing of the communication apparatus 20 (S652). Invalidation is performed in the communication apparatus 20 (S654). The secure communication path between the server apparatus 10 and the communication apparatus 20 is discarded (S656).

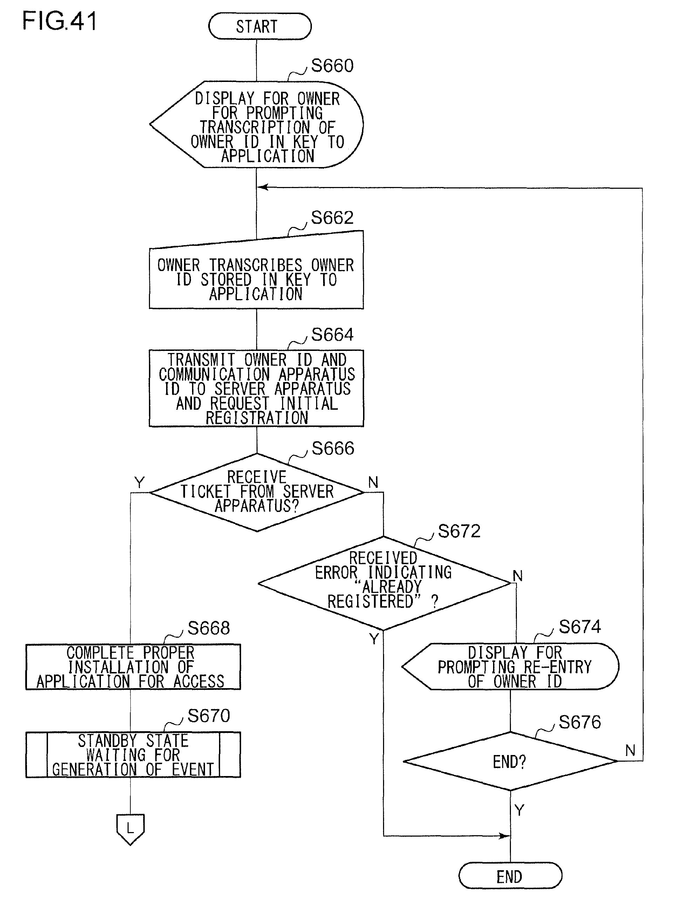

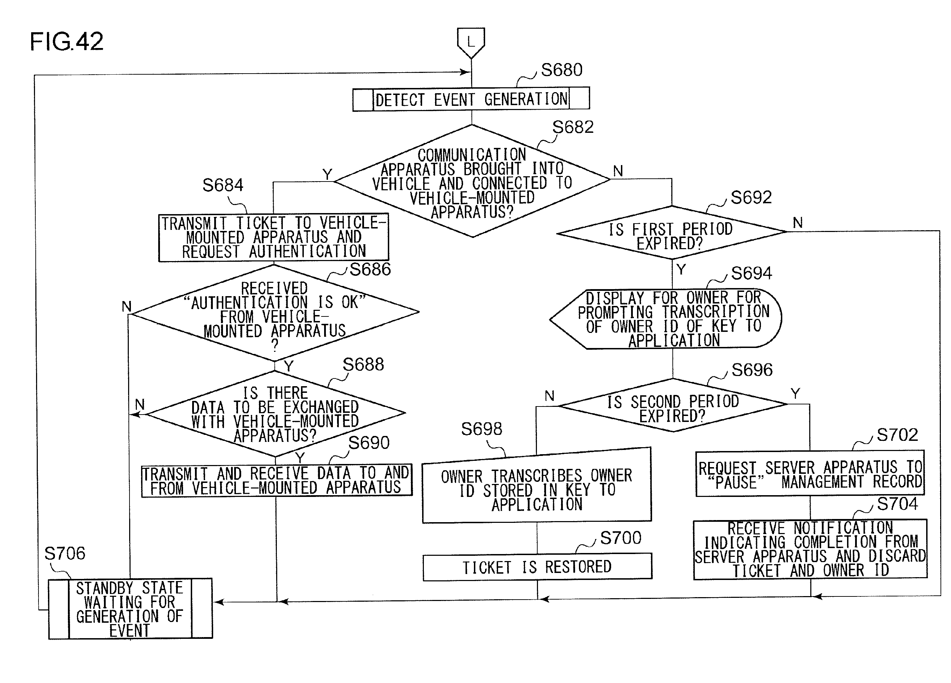

Fig. 41 is a flowchart illustrating a procedure of a communication process performed by the communication apparatus 20. The communication apparatus display unit 66 displays a message to the owner for prompting the transcription of the owner ID in the vehicle key 22 to the application (S660). The owner transcribes the owner ID stored in the vehicle key 22 to the application (S662). The request unit 94 transmits the owner ID and the communication apparatus ID to the server apparatus 10 and requests initial registration (S664). If the ticket acquisition unit 118 receives a ticket from the server apparatus 10 (Y in S666), the communication apparatus control unit 60 completes the proper installation of the application for access (S668). The communication apparatus 20 then becomes in a standby state waiting for the generation of an event (S670), and the step proceeds to step 680 shown in Fig. 42.

If the registration notification acquisition unit 96 does not receive the ticket from the server apparatus 10 (N in S666) and does not receive an error indicating "already registered" (N in S672), the communication apparatus display unit 66 displays a message for prompting the re-entry of the owner ID (S674). If the process is not to be ended (N in S676), the step goes back to step S662. If the process is to be ended (Y in S676), the process is ended. If the error indicating "already registered" is received (Y in S672), the process is ended.

Fig. 42 is a flowchart illustrating a procedure of a communication process that follows that of Fig. 41. If the generation of an event is detected (S680) and the communication apparatus 20 is not brought into the vehicle 16 so as to be connected to the vehicle-mounted apparatus 18 (N in S682), the communication apparatus display unit 66 displays to the owner a message for prompting the transcription of the owner ID of the vehicle key 22 to the application (S694) if the first period has been expired (Y in S692). If the second period has not been expired (N in S696), the owner transcribes the owner ID stored in the vehicle key 22 to the application (S698). The ticket is restored (S700), and the state becomes a standby state waiting for the generation of an event (S706). After this, the step proceeds to step 680. If the second period has been expired (Y in S696), the communication apparatus control unit 60 requests the server apparatus 10 to "pause" the management record 40 (S702). Upon receiving notification indicating the completion from the server apparatus 10, the communication apparatus control unit 60 discards the ticket and the owner ID (S704). After this, the step progresses to step 706. If the first period has not been expired (N in S692), the step proceeds to step 706.

If the communication apparatus 20 is brought into the vehicle 16 and becomes connected to the vehicle-mounted apparatus 18 (Y in S682), the ticket acquisition unit 118 transmits the ticket to the vehicle-mounted apparatus 18 and requests authentication (S684). If notification indicating that the authentication is OK is received from the vehicle-mounted apparatus 18 (Y in S686) and there is data to be exchanged with the vehicle-mounted apparatus 18 (Y in S688), the communication apparatus control unit 60 transmits and receives the data to and from the vehicle-mounted apparatus 18 (S690). After this, the step proceeds to step 706. If the notification indicating that the authentication is OK is not received from the vehicle-mounted apparatus 18 (N in S686), or if there is no data to be exchanged with the vehicle-mounted apparatus 18 (N in S688), the step proceeds to step 706.

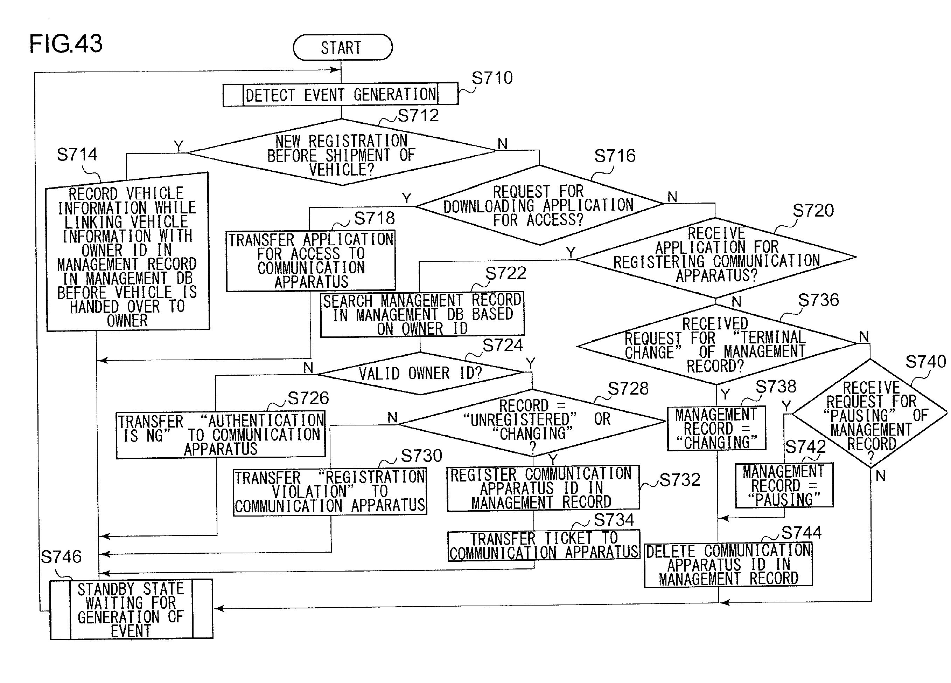

Fig. 43 is a flowchart illustrating a procedure of a communication process performed by the server apparatus 10. If the server apparatus 10 detects the generation of an event (S710) and the event is new registration before the shipment of the vehicle 16 (Y in S712), the server apparatus control unit 30 records the vehicle information while linking the vehicle information with the owner ID in the management record 40 of the owner in the management DB 34 before the vehicle 16 is handed over to the owner (S714). The server apparatus 10 then becomes in a standby state waiting for the generation of an event (S746), and the step proceeds to step 710. If the event is not new registration before the shipment of the vehicle 16 (N in S712) and is a request for downloading an application for access (Y in S716), the output unit 52 transfers the application for update to the communication apparatus 20 (S718). After this, the step proceeds to step 746.

If the event is not a request for downloading the application for access (N in S716) and the reception unit 50 receives an application for registering the communication apparatus 20 (Y in S720), the server apparatus control unit 30 searches the management record 40 in the management DB 34 based on the owner ID (S722). If the owner ID is not a valid owner ID (N in S724), the output unit 52 transfers notification indicating that the authentication is NG to the communication apparatus 20 (S726). After this, the step proceeds to step 746. If the owner ID is a valid owner ID (Y in S724) and the management record 40 is not "unregistered" or "changing" (N in S728), the output unit 52 transfers notification indicating "registration violation" to the communication apparatus 20 (S730), and the step proceeds to step 746. If the management record 40 is "unregistered" or "changing" (Y in S728), the server apparatus control unit 30 registers the communication apparatus ID in the management record 40 (S732). The output unit 52 transfers the ticket to the communication apparatus 20 (S734), and the step proceeds to step 746.

If the reception unit 50 does not receive the application for registering the communication apparatus 20 owned by the owner (N in S720) and receives a request for "terminal change" of the management record 40 (Y in S736), the server apparatus control unit 30 changes the management record 40 to "changing" (S738). The server apparatus control unit 30 deletes the communication apparatus ID in the management record 40 (S744), and the step proceeds to step 746. If the reception unit 50 does not receive the request for "terminal change" of the management record 40 (N in S736) and receives a request for "pausing" of the management record 40 (Y in S740), the server apparatus control unit 30 changes the management record 40 to "pausing" (S742). After this, the step proceeds to step 744. If the reception unit 50 does not receive the request for "pausing" of the management record 40 (N in S740), the step proceeds to step 746.

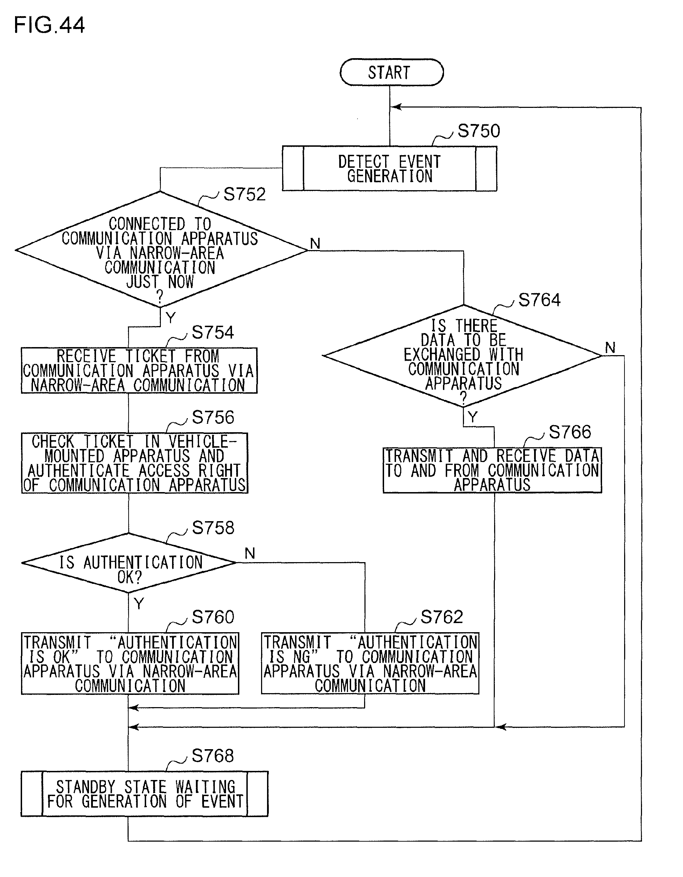

Fig. 44 is a flowchart illustrating a procedure of a communication process performed by the vehicle-mounted apparatus 18. If the vehicle-mounted apparatus 18 detects the generation of an event (S750) and the present moment is immediately after the vehicle-mounted apparatus 18 is connected to the communication apparatus 20 via narrow-area communication (Y in S752), the authentication unit 152 receives the ticket from the communication apparatus 20 via the narrow-area communication (S754). The authentication unit 152 checks the ticket in the vehicle-mounted apparatus 18 and checks the access right of the communication apparatus 20 (S756). If the authentication is not OK (N in S758), the authentication unit 152 transmits notification indicating that the authentication is NG to the communication apparatus 20 via the narrow-area communication (S762). The vehicle-mounted apparatus 18 then becomes in a standby state waiting for the generation of an event (S768), and the step goes back to step 750. If the authentication is OK (Y in S758), the authentication unit 152 transmits notification indicating that the authentication is OK to the communication apparatus 20 via the narrow-area communication (S760). After this, the step proceeds to step 768.

If the present moment is not immediately after the vehicle-mounted apparatus 18 is connected to the communication apparatus 20 via the narrow-area communication (N in S752) and there is data to be exchanged with the communication apparatus 20 (Y in S764), the vehicle-mounted apparatus control unit 130 transmits and receives the data to and from the communication apparatus 20 via the narrow-area communication (S766), and the step proceeds to step 768. If there is no data to be exchanged with the communication apparatus 20 (N in S764), the step proceeds to step 768.

According to the embodiment of the present disclosure, communication between a communication apparatus and a vehicle-mounted apparatus is performed using a ticket acquired from a server apparatus based on an owner ID and a communication apparatus ID. Thus, access to the vehicle-mounted apparatus can be performed safely and easily. The use of a ticket allows for a secure communication path to be set, and the safety can thus be improved. Since the communication between the communication apparatus and the vehicle-mounted apparatus is performed using the ticket acquired by the communication apparatus from the server apparatus based on the owner ID and the communication apparatus ID. Thus, access to the vehicle-mounted apparatus can be performed safely and easily.

Also, since another communication apparatus is registered after a change is requested, changing of a communication apparatus to be registered can be performed safely. Further, when a communication apparatus is registered, a ticket is not output even when another registration is received. Thus, access from an invalid communication apparatus can be prevented. Since a first period is set for a ticket, the safety of the ticket can be improved. Even after the first period has passed, the ticket can be restored within a second period. Thus, the user-friendliness for the owner can be improved. After the second period has passed, the ticket cannot be restored. Thus, the safety can be improved. Further, by transcribing the owner ID from the vehicle key to the communication apparatus, the communication apparatus personally owned by the owner and the vehicle can be easily linked to each other from the server apparatus's perspective, and the exchange of important data with the vehicle-mounted apparatus can be permitted only to the communication apparatus personally owned by the owner.

### (Fifth embodiment)

The fifth embodiment of the present disclosure also relates to a communication system where, when a communication apparatus and a vehicle-mounted apparatus are connected so as to perform data communication, the data communication is permitted only to a communication apparatus that is personally owned by the owner, as in the case of the previous embodiments. In the fourth embodiment, the combination of an owner ID and a communication apparatus ID is transmitted from a server apparatus to a communication apparatus in order to acquire a ticket from the server apparatus. In the fifth embodiment, the combination of an owner ID and an electronic mail address is transmitted instead of the combination of an owner ID and a communication apparatus ID. A communication system 100, a server apparatus 10, a communication apparatus 20, and a vehicle-mounted apparatus 18 according to the fifth embodiment are similar in type to those in Figs. 18, 31, 34, and 35. A description will be made mainly regarding the difference from the previous explanations.

A communication apparatus memory unit 62 shown in Fig. 34 stores a personal electronic mail address of the owner of the vehicle 16. A request unit 94 applies for initial registration to the server apparatus 10 using HTTP or HTTPS communication via a wide-area communication unit 68. Explaining more specifically, the request unit 94 requests the server apparatus 10 to register the communication apparatus 20 by outputting the combination of an owner ID acquired by an owner ID acquisition unit 92 and the electronic mail address stored in the communication apparatus memory unit 62 to the server apparatus 10. In general, one address is assigned for one contract for line, and the address is uniquely linked to the communication apparatus 20 that is owned in an electronic mail system operated by a mobile phone carrier.

When the reception unit 50 in Fig. 31 receives the combination of the owner ID and the electronic mail address from the communication apparatus 20 via the wide-area communication unit 32, the server apparatus control unit 30 registers the communication apparatus 20 in the management record 40. Hereinafter, a message is transmitted and/or received via an electronic mail between the communication apparatus 20 and the server apparatus 10. The output unit 52 writes, in a message that is transmitted to the communication apparatus 20 via the wide-area communication unit 32, an URL for acquiring a ticket that permits access to the vehicle-mounted apparatus 18 and a Java Script (registered trademark) file from the server apparatus 10. When the communication apparatus 20 receives the message, the owner clicks the URL using the communication apparatus input unit 64. By the clicking, an application for access is started by Java Script (registered trademark), and the application for access performs a series of operations for importing the ticket into the communication apparatus memory unit 62.

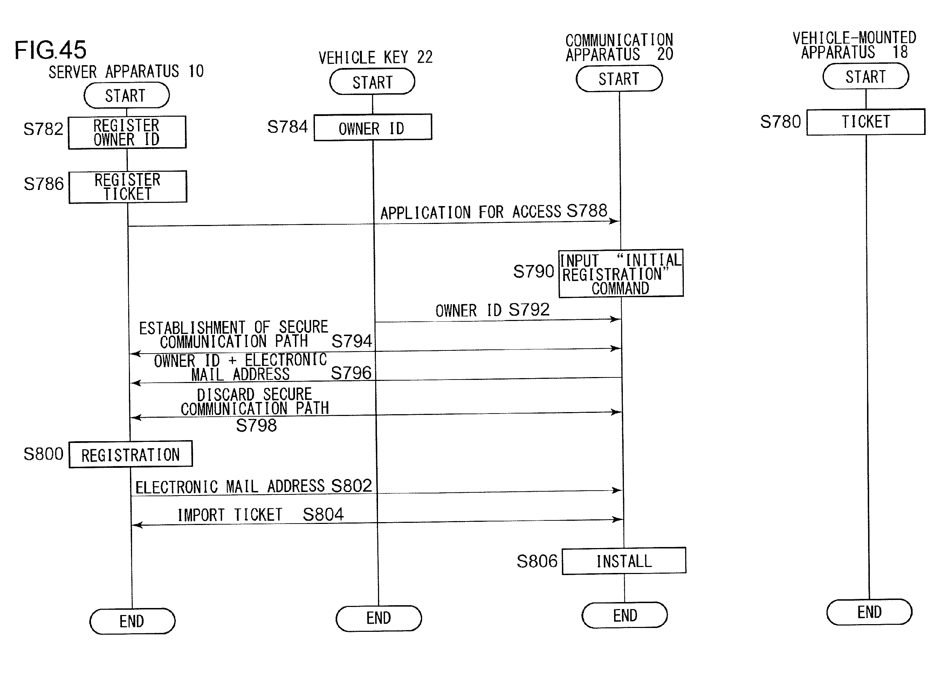

An explanation will be given of the operation of the communication system 100 having the above-stated structure. Fig. 45 is a sequence diagram illustrating a procedure of an initial process performed by the communication system 100 according to the fifth embodiment of the present disclosure. A ticket is stored in the vehicle-mounted apparatus 18 (S780). An owner ID is registered in the server apparatus 10 (S782). The owner ID is stored in the vehicle key 22 (S784). Further, the ticket is registered in association with the owner ID in the server apparatus 10 (S786). The server apparatus 10 transmits an application for access to the communication apparatus 20 (S788). An "initial registration" command is input to the communication apparatus 20 (S790). The owner ID is transcribed from the vehicle key 22 to the communication apparatus 20 (S792).

A secure communication path is established between the server apparatus 10 and the communication apparatus 20 (S794). The communication apparatus 20 transmits the owner ID and an electronic mail address to the server apparatus 10 (S796). The secure communication path between the server apparatus 10 and the communication apparatus 20 is discarded (S798). The server apparatus 10 registers the communication apparatus 20 (S800). The server apparatus 10 transmits an electronic mail to the communication apparatus 20 (S802). The server apparatus 10 and the communication apparatus 20 perform the importing of the ticket (S804). The communication apparatus 20 installs the application for access (S806).

According to the embodiment of the present disclosure, even when a communication apparatus has been changed, identification information for identifying the communication apparatus does not need to be changed since an electronic mail address is used instead of a communication apparatus ID. Since the identification information does not need to be changed, user-friendliness for the owner can be improved.

### (Exemplary variation of first or second embodiment)

An exemplary variation is shown in the following for the processes related to a passcode and features related to the processes according to the first and second embodiments. In both the first and second embodiments, a communication apparatus 20 is confirmed to be a personal possession of the owner of a vehicle by inputting a passcode through a communication apparatus input unit 64 and transmitting the passcode to a vehicle-mounted apparatus 18 via a narrow-area network when the communication apparatus 20 is connected to the vehicle-mounted apparatus 18 via the narrow-area network for the first time after software for updating is installed in the communication apparatus 20. The exemplary variation discloses another method for confirming that a communication apparatus 20 is a personal possession of the owner. In the exemplary variation, a vehicle-mounted apparatus 18 confirms that a communication apparatus 20 is a personal possession of the owner, using a short-distance wireless communication function such as NFC. A communication system 100 and a server apparatus 10 according to the exemplary variation are similar in type (equivalent) to those shown in Figs. 1 and 2.

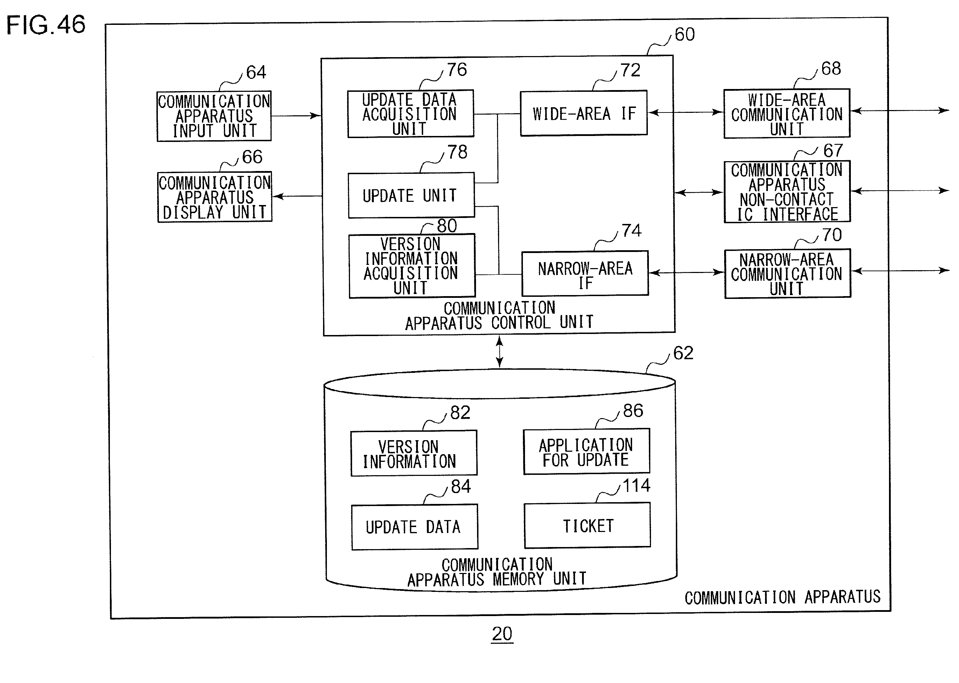

The configuration of a communication apparatus 20 in the exemplary variation is shown in Fig. 46. The difference between the communication apparatus 20 in the exemplary variation and the communication apparatus 20 explained in the first and second embodiments (see Fig. 4) lies in that the communication apparatus 20 in the exemplary variation is provided with a communication apparatus non-contact IC interface 67 and a ticket 114. In Fig. 46, the communication apparatus non-contact IC interface 67 is an antenna, a protocol processing IC, or the like for performing short-distance wireless communication between a communication apparatus 20 and a vehicle-mounted apparatus 18 using an electromagnetic induction effect such as near field communication (NFC). The ticket 114 is a memory area for storing a ticket for access permission that is issued by a vehicle-mounted apparatus or is the ticket that is stored.

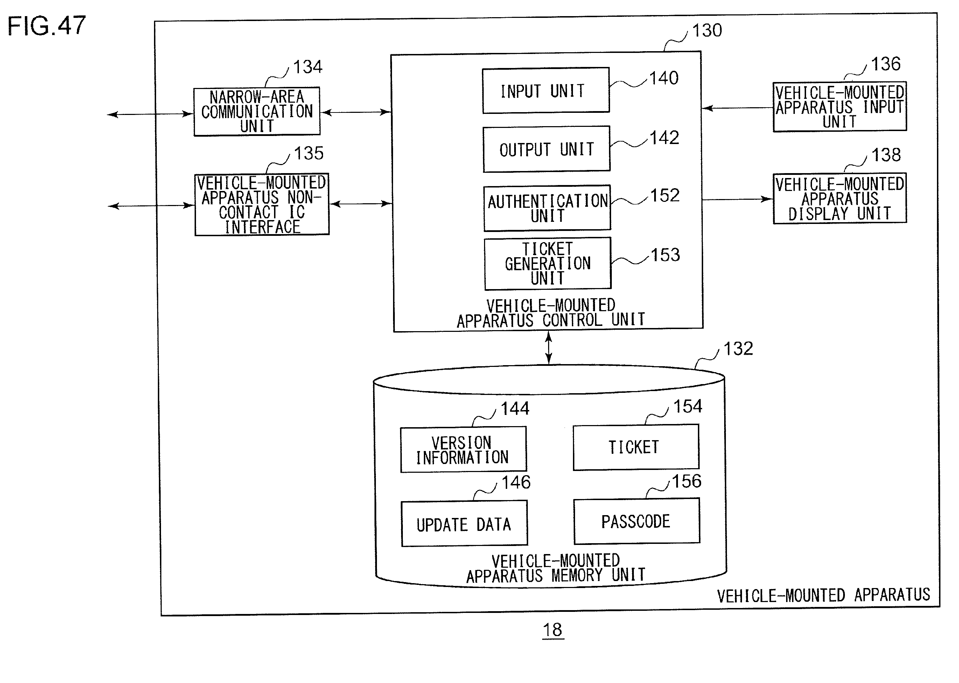

The configuration of a vehicle-mounted apparatus 18 in the exemplary variation is shown in Fig. 47. The difference between the vehicle-mounted apparatus 18 in the exemplary variation and the vehicle-mounted apparatus 18 explained in the first and second embodiments (see Fig. 5) lies in that the vehicle-mounted apparatus 18 in the exemplary variation is provided with a vehicle-mounted apparatus non-contact IC interface 135, a ticket generation unit 153, and a ticket 154. In Fig. 47, the vehicle-mounted apparatus non-contact IC interface 135 is an antenna, a protocol processing IC, or the like for performing short-distance wireless communication that is the same kind as the communication apparatus non-contact IC interface 67. The ticket generation unit 153 is a block for generating, for a communication apparatus, a ticket for access permission. The ticket 154 is a memory area for storing the ticket that is generated or is the ticket that is stored.

When an application for update is installed in the communication apparatus 20 shown in Fig. 46, the communication apparatus control unit 60 displays a message indicating "Please register this communication apparatus in the vehicle-mounted apparatus." on the communication apparatus display unit 66. Upon confirming this display, the owner of the vehicle who is the owner of the communication apparatus 20 brings the communication apparatus 20 inside the vehicle 16, starts the software of the vehicle-mounted apparatus 18 shown in Fig. 47, and operates the vehicle-mounted apparatus input unit 136 to enable a "communication apparatus registration mode." It is safer to employ a feature that prompts the owner to input a passcode when changing a mode to this mode. When the software of the vehicle-mounted apparatus 18 is turned to the communication apparatus registration mode, a message indicating "Please bring the non-contact ID of the communication apparatus into contact with the vehicle-mounted apparatus." on the vehicle-mounted apparatus display unit 138. When the owner of the vehicle brings the communication apparatus non-contact IC interface 67 into contact with the vehicle-mounted apparatus non-contact IC interface 135, the ticket generation unit 153 of the vehicle-mounted apparatus 18 transmits an access permit (ticket) issued by the ticket generation unit 153 to the communication apparatus 20 and stores the ticket in the ticket 154. The communication apparatus 20 stores the access permit (ticket) that has been acquired in the ticket 114. Although the strength of the security will be lowered, a ticket does not always need to be generated one after another (the ticket generation unit 153 is deleted), and a method may be employed where only one ticket is stored in advance in the ticket 154 and is used all the time.

Hereinafter, when the communication apparatus 20 becomes connected to the vehicle-mounted apparatus 18 via the narrow-area network, the communication apparatus 20 is confirmed to be a possession of the owner by transmitting this ticket via the narrow-area network. The same as in the first and second embodiments basically applies to the subsequent operations. An example where the exchange of a ticket is performed by a proximity wireless transmission and reception function by a non-contact IC is shown here. Alternatively, if a narrow-area network is a USB, a feature may be employed where the exchange of a ticket is performed when a vehicle-mounted apparatus 18 becomes physically connected to a communication apparatus 20 when the vehicle-mounted apparatus 18 is in the "communication apparatus registration mode."

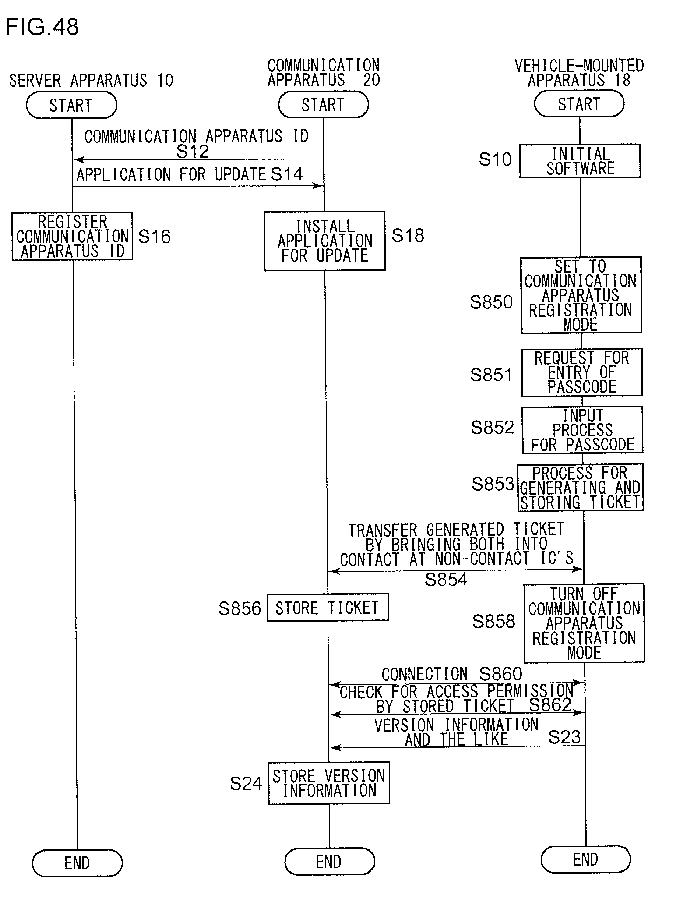

With regard to the operation of the communication system 100 cording to the exemplary variation that is formed as described above, a description will be made mainly regarding the difference from the first and second embodiments. Fig. 48 is a sequence diagram illustrating a procedure of an initial process performed by the communication system 100. Processes before a step (S18) for installing an application for update in the communication apparatus 20 are the same as those in the first and second embodiments (the same as in Fig. 6). Thus, the explanation thereof is omitted. If the application for update is installed in the communication apparatus 20 in step S18 and the owner recognizes that the application has been installed, the owner sets the vehicle-mounted apparatus 18 to the communication apparatus registration mode via the vehicle-mounted apparatus input unit 136 (S850). Then, the vehicle-mounted apparatus 18 displays a request for inputting a passcode on the vehicle-mounted apparatus display unit 138 (S851). When the owner inputs the passcode to the vehicle-mounted apparatus 18, the vehicle-mounted apparatus 18 performs an input process for the passcode (S852).

The vehicle-mounted apparatus 18 checks the validity of the passcode. If the validity of the passcode is confirmed, the vehicle-mounted apparatus 18 generates a ticket and stores the ticket in the ticket 154 (S853). After that, the vehicle-mounted apparatus 18 requests the owner to bring the non-contact IC of the communication apparatus 20 into contact with the non-contact IC of the vehicle-mounted apparatus 18. When the owner performs an operation of bringing the communication apparatus 20 into contact with the vehicle-mounted apparatus 18, the ticket that is generated is transferred from the vehicle-mounted apparatus 18 to the communication apparatus 20 (S854). When the ticket is transferred to the communication apparatus 20, the vehicle-mounted apparatus 18 turns off the communication apparatus registration mode (S858). At the same time, the communication apparatus 20 stores the ticket acquired from the vehicle-mounted apparatus 18 in the ticket 114 (S856). The owner is asked to connect the communication apparatus 20 to the vehicle-mounted apparatus 18 via the narrow-area network after this. Thus, the owner connects the communication apparatus 20 to the vehicle-mounted apparatus 18 (S860). Then, the communication apparatus 20 transmits the ticket that is stored to the vehicle-mounted apparatus 18 so that the vehicle-mounted apparatus 18 recognizes that the communication apparatus 20 has a valid access right (S862). The same as described for the first and second embodiments applies to processes in and after a step (S23) for reading out the version information and the like of the software of the vehicle-mounted apparatus 18. Thus, the explanation thereof is omitted.

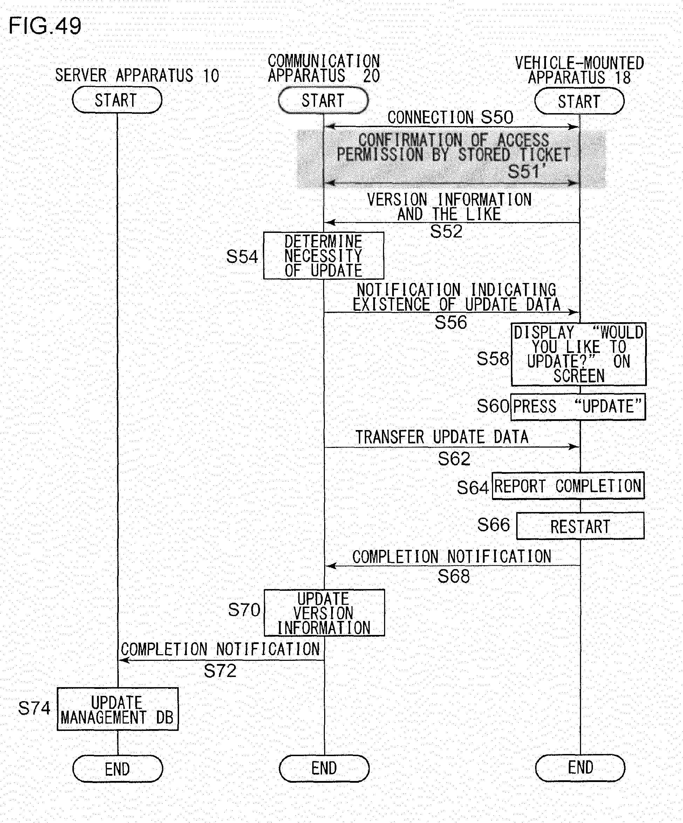

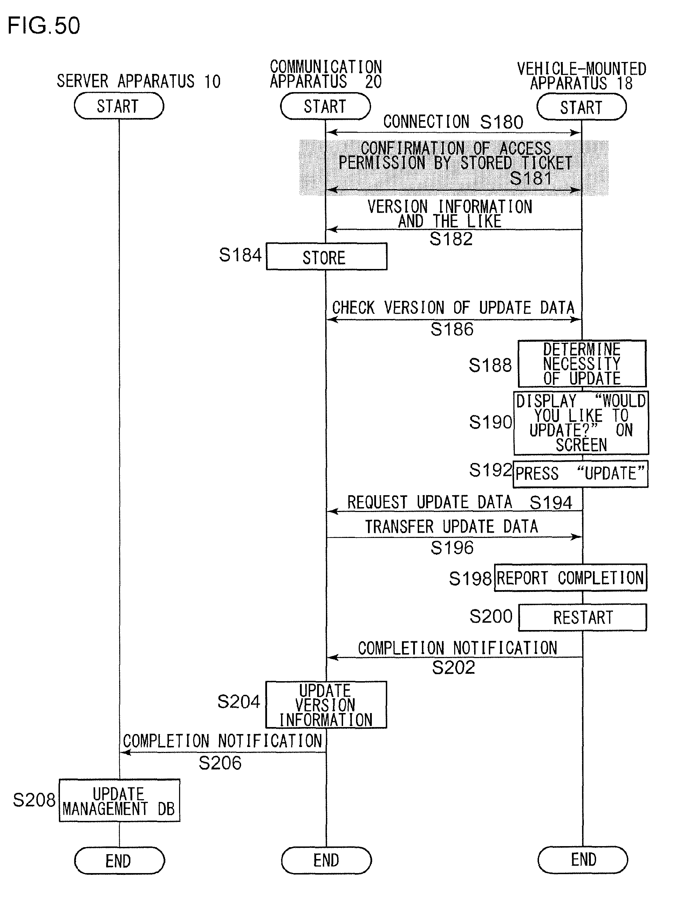

Figs. 49 and 50 respectively show changes made in the sequences (shown in Figs. 8 and 14, respectively) for the procedures of the update processes disclosed in the first or second embodiment when the method for confirming the owner of a communication apparatus 20 in the exemplary variation is employed (parts that are hatched in grey in the respective figures). A difference lies only in that the process where the confirmation of the owner of a communication apparatus is performed by a passcode in the passcode 87 (S51 and S181, respectively) in the first or second embodiments is changed to a process where confirmation of an access right is performed by a ticket in the ticket 114 (S51' and S181', respectively), and the rest are the same.

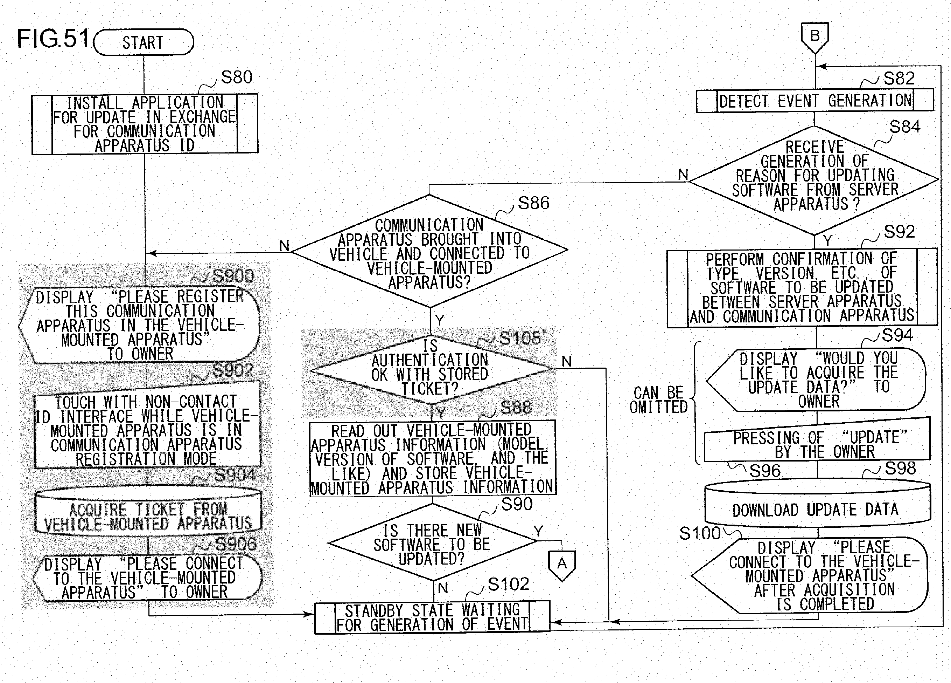

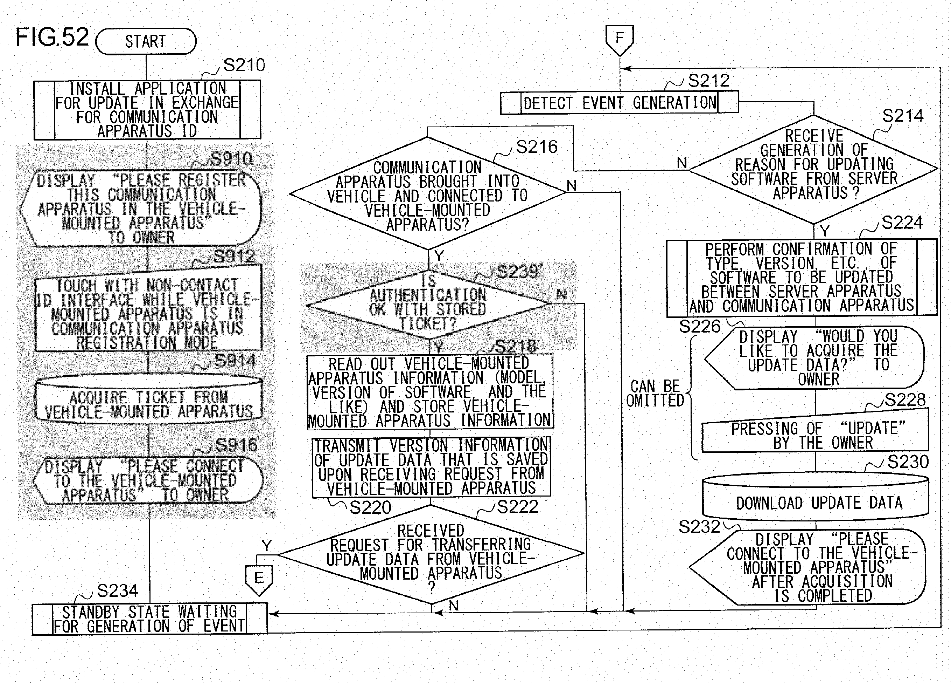

Figs. 51 and 52 respectively show changes made in the flowcharts (shown in Figs. 9 and 15, respectively) of a communication apparatus 20 disclosed in the first or second embodiment when the method for confirming the owner of a communication apparatus 20 in the exemplary variation is employed (parts that are hatched in grey in the respective figures). Differences lie in that a series of operations for obtaining a ticket from a vehicle-mounted apparatus by the touching of a non-contact IC are newly added in the exemplary variation instead of performing confirmation in a vehicle-mounted apparatus by the inputting of a passcode through a communication apparatus by the owner after an application for update is installed in exchange for a communication apparatus ID in the first or second embodiment (S80 and S210, respectively) and in that the process where the confirmation of the owner of a communication apparatus 20 is performed by a passcode stored in a vehicle-mounted apparatus 18 and the communication apparatus 20 in the first or second embodiment (S108 and S239, respectively) is changed to a process where confirmation of an access right is performed by a ticket stored in a vehicle-mounted apparatus 18 and a communication apparatus 20 (S108' and S239', respectively) in the exemplary variation, and the rest are the same.

Speaking more specifically regarding the former operation, after the application for update is installed (S80 and S210, respectively), information indicating "Please register this communication apparatus in the vehicle-mounted apparatus." is displayed on a communication apparatus display unit 66 (S900 and S910, respectively). When the owner brings the communication apparatus 20 into the vehicle, the owner sets the vehicle-mounted apparatus 18 to the communication apparatus registration mode and brings the communication apparatus non-contact IC interface 67 into contact with the vehicle-mounted apparatus non-contact IC interface 135 (S902 and S912, respectively). Thereby the owner receives a ticket for access permission from the vehicle-mounted apparatus 18 and stores the ticket in the ticket 114 (S904 and S914, respectively). After that, the communication apparatus 20 displays, to the owner, information indicating "Please connect this communication terminal to the vehicle-mounted apparatus via a narrow-area network." on the communication apparatus display unit 66 (S906 and S916, respectively), and the communication apparatus 20 becomes in a standby state waiting for the generation of an event (S102 and S234, respectively).

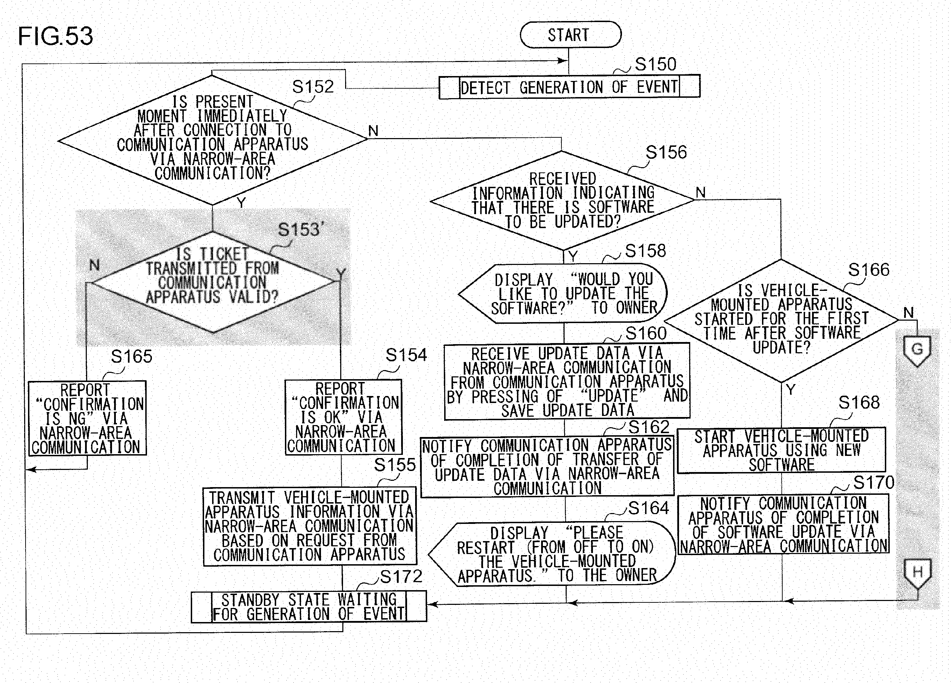

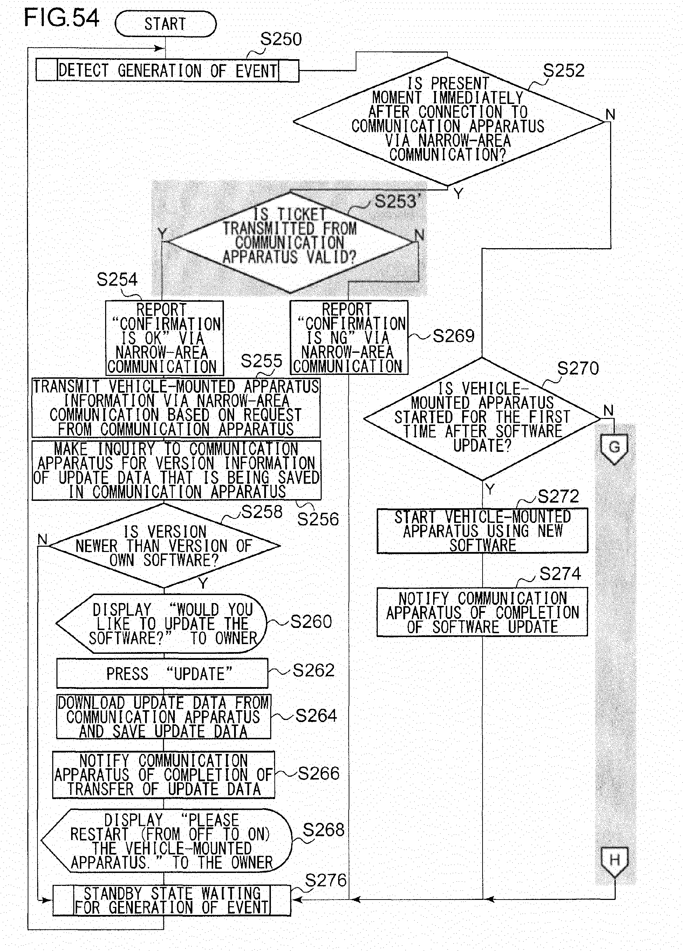

Figs. 53 and 54 respectively show changes made in the flowcharts (shown in Figs. 13 and 17, respectively) of a vehicle-mounted apparatus disclosed in the first or second embodiment when the method for confirming the owner of a communication apparatus 20 in the exemplary variation is employed (parts that are hatched in grey in the respective figures). Differences lie in that the process where the confirmation of the owner is performed by the authentication of a passcode transmitted to a vehicle-mounted apparatus 18 from a communication apparatus 20 in the first or second embodiment is changed to a process where confirmation of the validity of a ticket transmitted to a vehicle-mounted apparatus 18 from a communication apparatus 20 is performed (S153' and S253', respectively) in the exemplary variation and in that a series of operations for generating a ticket for access permission and transmitting the ticket to a communication apparatus by the touching of a non-contact IC when the vehicle-mounted apparatus 18 is set to the "communication apparatus registration mode" are newly added (parts that are from a terminal G to a terminal H in Figs. 53 and 54) in the exemplary variation, and the rest are the same.

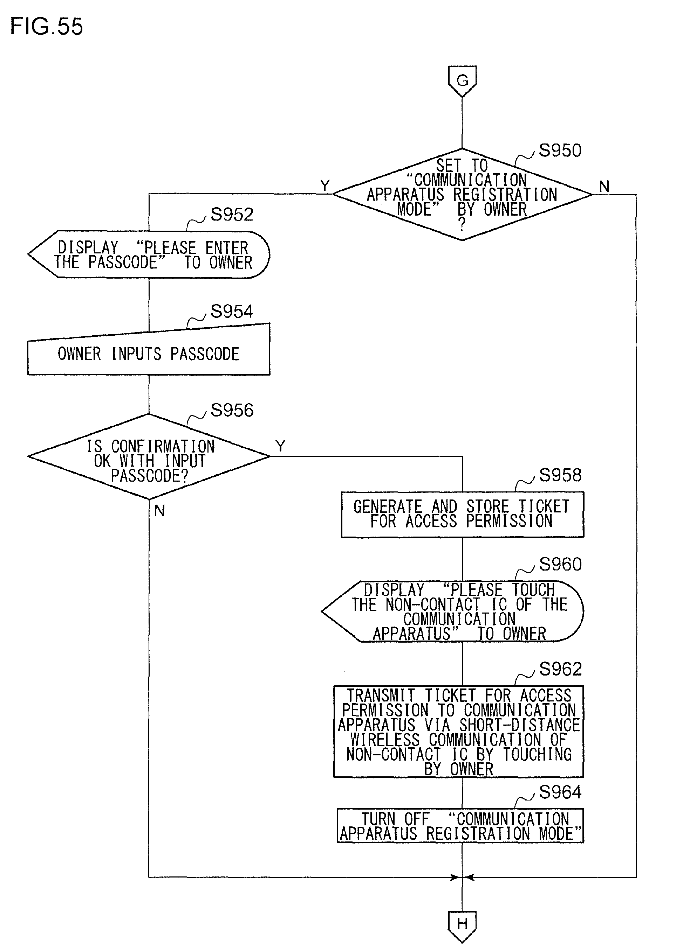

The operations performed in the parts from the terminal G to the terminal H will be described in detail using Fig. 55. When the owner sets the "communication apparatus registration mode" by operating the vehicle-mounted apparatus input unit 136 (Y in S950), a display indicating "Please enter the passcode." is displayed on the vehicle-mounted apparatus display unit 138 (S952). Then, the owner inputs a passcode that is unique to the vehicle-mounted apparatus 18 to the vehicle-mounted apparatus 18 (S954). If the passcode is correct, the operator is confirmed to be the owner (or a specified individual) (Y in S956), and the vehicle-mounted apparatus 18 generates a ticket for access permission by the ticket generation unit 153 and stores the ticket in the ticket 154 (S958). After that, display indicating "Please bring the non-contact IC of the communication apparatus into contact with the vehicle-mounted apparatus." is displayed on the vehicle-mounted apparatus display unit 138 (S960).

The owner brings the communication apparatus non-contact IC interface 67 into contact with the vehicle-mounted apparatus non-contact IC interface 135, and the vehicle-mounted apparatus 18 transmits a ticket that is generated to the communication apparatus 20 via short-distance wireless communication (S962). When the transmission of the ticket to the communication apparatus 20 is completed, the vehicle-mounted apparatus 18 turns off the "communication apparatus registration mode" for the purpose of the security protection (S964), and the terminal H is reached. If the passcode that is input is invalid (N in S956), the operator is determined not to be the owner, and the terminal H is directly reached without doing anything. The passcode saved in the passcode 156 may be designed such that an initial value provided by the car dealer can be changed later by the owner using the vehicle-mounted apparatus input unit 136. If the owner does not set the "communication apparatus registration mode" by operating the vehicle-mounted apparatus input unit 136 (N in S950), the terminal H is reached.

Described above is an explanation based on the embodiments of the present disclosure. These embodiments are intended to be illustrative only, and it will be obvious to those skilled in the art that various modifications to constituting elements or processes could be developed and that such modifications are also within the scope of the present disclosure.

The first through fifth embodiments and the exemplary variation may be arbitrarily combined. According to the exemplary variation, effects obtained by arbitrarily combining the first through fifth embodiments can be obtained.

In the first through fifth embodiments, a vehicle-mounted apparatus 18 mounted in a vehicle 16 is used. However, without limiting thereto, for example, an electronic device may be used instead of a vehicle-mounted apparatus 18. According to the exemplary variation, the scope of application of the present disclosure can be increased.

In the first through third embodiments, a communication apparatus 20 downloads update data upon receiving an instruction for downloading from the owner after notification indicating the generation of a difference from a server apparatus 10 is received. However, without limiting thereto, for example, to "always fully install the update data" may be set to be a precondition. Based on such a precondition, the communication apparatus 20 always stores all the new update data when the communication apparatus 20 receives notification indicating the generation of a difference from the server apparatus 10. Further, when the communication apparatus 20 and the vehicle-mounted apparatus 18 are connected via a narrow-area network, the communication apparatus 20 reads out information such as a model name, the version of software that is mounted, and the like from the vehicle-mounted apparatus 18. The communication apparatus 20 compares version information 82 stored in the communication apparatus memory unit 62 with the information that has been read out. If the version of the former is newer, the communication apparatus 20 delivers the update data to the vehicle-mounted apparatus 18 as a background process, and the vehicle-mounted apparatus 18 installs the update data. According to the exemplary variation, since the downloading is performed automatically, user-friendliness for the owner can be improved.

In the first through third embodiments, the update unit 78 outputs the update data to the vehicle-mounted apparatus 18. If the outputting of the update data is interrupted due to the cutting of the narrow-area network or the like, the update unit 78 may resume the outputting of the update data from halfway. The update unit 78 monitors the communication status of the narrow-area network via the narrow-area communication unit 70 and the narrow-area IF 74 and, in case of interruption, specifies a part of the update data that has already been output. Then, when the outputting of the update data is resumed, the update unit 78 outputs the update data from the specified part or from a part that is before the specified part. According to the exemplary variation, since a portion that has not been output is output when the outputting of the update data is resumed, the update data can be efficiently output. If the outputting of the update data is interrupted, the update unit 78 may resume the outputting of the update data from the beginning. According to the exemplary variation, the process can be facilitated.

The embodiments of the present disclosure may be characterized by the following items.

### (Item 1-1)

A communication apparatus comprising:
a first interface that is connectable, via a first network, to an electronic device that stores software subject to update;
a second interface that is connectable, via a second network that is different from the first network, to a server apparatus that stores update data for updating the software stored in the electronic device to which the first interface is connectable;
a first acquisition unit that acquires information regarding the version of the software stored in the electronic device from the electronic device to which the first interface is connected and stores the information regarding the version in a memory;
a second acquisition unit that acquires the update data from the server apparatus to which the second interface is connected based on the information regarding the version stored in the memory even when the first interface is not connected to the electronic device and stores the update data in the memory; and
an update unit that outputs the update data stored in the memory to the electronic device to which the first interface is connected even when the second interface is not connected to the server apparatus.

In this case, the communication apparatus receives the update data from the server apparatus even when the communication apparatus is not connected to the electronic device, and the communication apparatus outputs the update data to the electronic device even when the communication apparatus is not connected to the server apparatus. Thus, the outputting to the electronic device can be facilitated.

### (Item 1-2)

The communication apparatus according to Item 1-1, wherein the update unit determines the necessity of outputting the update data by comparing the information regarding the version of the software acquired from the electronic device to which the first interface is connected with the version of the update data stored in the memory.

In this case, the necessity of outputting the update data is determined by checking the version. Thus, unnecessary outputting can be omitted.

### (Item 1-3)

The communication apparatus according to Item 1-1, wherein the update unit allows the electronic device to determine the necessity of outputting the update data by outputting the information regarding the version of the update data stored in the memory to the electronic device to which the first interface is connected.

In this case, since the electronic device is allowed to determine the necessity of outputting the update data, a process can be facilitated.

### (Item 1-4)

The communication apparatus according to any one of Item 1-1 through Item 1-3, wherein, if the outputting of the update data is interrupted, the update unit resumes the outputting of the update data from halfway.

In this case, since the outputting of the update data is resumed from halfway, the outputting can be efficiently performed.

### (Item 1-5)

The communication apparatus according to any one of Item 1-1 through Item 1-3, wherein, if the outputting of the update data is interrupted, the update unit resumes the outputting of the update data from the beginning.

In this case, since the update data is output from the beginning, the outputting can be facilitated.

### (Item 1-6)

An electronic device that stores software subject to update, comprising:
a communication unit that is connectable to a communication apparatus that is connectable to the electronic device via a first network and is also connectable, via a second network that is different from the first network, to a server apparatus that stores update data for updating the software stored in the electronic device;
an output unit that outputs information regarding the version of the software stored in the electronic device to the communication apparatus to which the communication unit is connected; and
an input unit that receives the update data from the communication apparatus to which the communication unit is connected even when the communication apparatus is not connected to the server apparatus, given that the update data is acquired from the server apparatus in the communication apparatus based on the information regarding the version that is stored even when the communication unit is not connected to the communication apparatus,
wherein, when the software is updated by the update data received by the input unit, the output unit outputs the information regarding the version of the software stored in the electronic device to the communication apparatus to which the communication unit is connected.

In this case, the update data is input from the server apparatus to the communication apparatus even when the communication apparatus is not connected to the electronic device, and the update data is output to the electronic device from the communication apparatus even when the communication apparatus is not connected to the server apparatus. Thus, the outputting to the electronic device can be facilitated.

### (Item 1-7)

A server apparatus that stores update data for updating software stored in an electronic device, comprising:
a communication unit that is connectable to a communication apparatus that is connectable, via a first network, to the electronic device that stores the software subject to update and is also connectable, via a second network that is different from the first network, to the server apparatus; and
an output unit that outputs the update data to the communication apparatus to which the communication unit is connected based on information regarding the version of the software stored in the communication apparatus even when the communication apparatus is not connected to the electronic device, given that the information regarding the version of the software stored in the electronic device is acquired in the communication apparatus even when the communication unit is not connected to the communication apparatus,
wherein the update data is output to the electronic device from the communication apparatus even when the communication unit is not connected to the communication apparatus by the update data output by the output unit and, when the software in the electronic device is updated by the update data, the information regarding the version of the software stored in the electronic device is output to the communication apparatus from the electronic device.

In this case, the update data is input from the server apparatus to the communication apparatus even when the communication apparatus is not connected to the electronic device, and the update data is output to the electronic device from the communication apparatus even when the communication apparatus is not connected to the server apparatus. Thus, the outputting to the electronic device can be facilitated.

### (Item 1-8)

A communication system comprising:
an electronic device that stores software subject to update;
a communication apparatus that is connectable to the electronic device via a first network; and
a server apparatus that stores update data for updating the software stored in the electronic device and that is connectable, via a second network that is different from the first network, to the communication apparatus,
wherein the communication apparatus includes:
a first acquisition unit that acquires information regarding the version of the software stored in the electronic device from the electronic device to which the communication apparatus is connected and stores the information regarding the version in a memory;
a second acquisition unit that acquires the update data from the server apparatus to which the communication apparatus is connected based on the information regarding the version stored in the memory even when the communication apparatus is not connected to the electronic device and stores the update data in the memory; and
an update unit that outputs the update data stored in the memory to the electronic device to which the communication apparatus is connected even when the communication apparatus is not connected to the server apparatus.

(Item 1-9)

A communication method comprising:
by connecting via a first network to an electronic device that stores software subject to update, acquiring information regarding the version of the software stored in the electronic device from the electronic device and storing the information regarding the version in a memory;
by connecting, via a second network that is different from the first network, to a server apparatus that stores update data for updating the software stored in the electronic device based on the information regarding the version stored in the memory even when not connected to the electronic device, acquiring the update data from the server apparatus and storing the update data in the memory; and
outputting the update data stored in the memory to the electronic device that is connected even when not connected to the server apparatus.

### (Item 2-1)

A communication apparatus that is connectable, via a network, to a server apparatus that stores update data for updating software stored in an electronic device that is mountable in a vehicle and first identification information for identifying the electronic device, comprising:
a first acquisition unit that acquires the first identification information from a key for a vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires registration notification from the server apparatus as a response to the request from the request unit; and
a third acquisition unit that acquires the update data from the server apparatus and stores the update data in a memory when the second acquisition unit acquires the registration notification.

In this case, since the update data is input from the server apparatus using the first identification information and the second identification information, the update data to be output to the electronic device can be safely input.

### (Item 2-2)

The communication apparatus according to Item 2-1, further comprising:
a fourth acquisition unit that acquires, via a network that is different from the network for connecting to the server apparatus, information regarding the version of the software stored in the electronic device from the electronic device and stores the information regarding the version in the memory; and
an update unit that outputs the update data stored in the memory to the electronic device that is connected even when the communication apparatus is not connected to the server apparatus, given that the update data is stored in the memory by the third acquisition unit based on the information regarding the version stored in the memory even when the communication apparatus is not connected to the electronic device.

In this case, the communication apparatus receives the update data from the server apparatus even when the communication apparatus is not connected to the electronic device, and the communication apparatus outputs the update data to the electronic device even when the communication apparatus is not connected to the server apparatus. Thus, the outputting to the electronic device can be facilitated.

### (Item 2-3)

The communication apparatus according to Item 2-2, wherein the update unit outputs the update data stored in the memory when the update unit receives permission for outputting the update data from the electronic device by outputting the first identification information to the electronic device.

In this case, since the update data is output to the electronic device when permission for the outputting according to the first identification information is received. Thus, the safety for the outputting to the electronic device can be improved.

### (Item 2-4)

An electronic device that is mountable in a vehicle, comprising:
a communication unit that is connectable to a communication apparatus that is connectable to the electronic device via a first network and is also connectable, via a second network that is different from the first network, to a server apparatus that stores update data for updating software stored in the electronic device and first identification information for identifying the electronic device; and
an input unit that receives the update data from the communication apparatus to which the communication unit is connected even when the communication apparatus is not connected to the server apparatus, given that, in the communication apparatus, (1) first identification information is acquired from a key for a vehicle that stores the first identification information, (2) the server apparatus is requested to register the communication apparatus by the outputting of a combination of second identification information for identifying the communication apparatus and the first identification information to the server apparatus, and (3) the update data from the server apparatus is stored based on registration notification acquired from the server apparatus, even when the communication unit is not connected to the communication apparatus.

In this case, the update data is output to the communication apparatus from the server apparatus and is also output to the electronic device from the communication apparatus, using the first identification information and the second identification information. Thus, the update data that has been input safely from the server apparatus to the communication apparatus can be easily input to the electronic device.

### (Item 2-5)

The electronic device according to Item 2-4, further comprising:
an authentication unit that receives the first identification information from the communication apparatus to which the communication unit is connected and permits the communication apparatus to output the update data based on the first identification information,
wherein the input unit receives the update data after the permission is provided by the authentication unit.

In this case, the update data from the communication apparatus is input when the outputting is permitted based on the first identification information. Thus, the safety for the inputting from the communication apparatus can be improved.

### (Item 2-6)

A server apparatus that stores update data for updating software stored in an electronic device and first identification information for identifying the electronic device, comprising:
a communication unit that is connectable to a communication apparatus that is connectable, via a first network, to the electronic device that is mountable in a vehicle and is also connectable, via a second network that is different from the first network, to the server apparatus;
a reception unit that is requested to register the communication apparatus by receiving a combination of second identification information for identifying the communication apparatus and the first identification information from the communication apparatus to which the communication unit is connected even when the communication apparatus is not connected to the electronic device, given that the first identification information is acquired from a key for the vehicle that stores the first identification information in the communication apparatus even when the communication unit is not connected to the communication apparatus;
a first output unit that outputs registration notification to the communication apparatus to which the communication unit is connected as a response to the request in the reception unit; and
a second output unit that outputs the update data to the communication apparatus to which the communication unit is connected when the first output unit outputs the registration notification.

In this case, the update data is output to the communication apparatus from the server apparatus and is also input to the electronic device from the communication apparatus, using the first identification information and the second identification information. Thus, the update data that has been input safely from the server apparatus to the communication apparatus can be easily output to the electronic device.

### (Item 2-7)

A communication system comprising:
an electronic device that is mountable in a vehicle;
a communication apparatus that is connectable to the electronic device via a first network; and
a server apparatus that stores update data for updating software stored in the electronic device and first identification information for identifying the electronic device and that is connectable, via a second network that is different from the first network, to the communication apparatus,
wherein the communication apparatus includes:
a first acquisition unit that acquires the first identification information from a key for the vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires registration notification from the server apparatus as a response to the request from the request unit;
a third acquisition unit that acquires the update data from the server apparatus and stores the update data in a memory when the second acquisition unit acquires the registration notification; and
an update unit that outputs the update data stored in the memory to the electronic device to which the communication apparatus is connected even when the communication apparatus is not connected to the server apparatus.

### (Item 2-8)

A communication method comprising:
acquiring first identification information from a key for a vehicle that stores the first identification information for identifying an electronic device that is mountable in the vehicle;
requesting, by outputting a combination of the first identification information that has been acquired and second identification information for identifying a communication apparatus to a server apparatus that stores update data for updating software stored in the electronic device and the first identification information, the server apparatus to register the communication apparatus;
acquiring registration notification from the server apparatus as a response to the request; and
acquiring the update data from the server apparatus and storing the update data in a memory when the registration notification is acquired.

### (Item 3-1)

A communication apparatus that is connectable, via a network, to a server apparatus that stores a ticket for allowing for the exchange of predetermined data with an electronic device that is mountable in a vehicle and first identification information for identifying the electronic device, comprising:
a first acquisition unit that acquires the first identification information from a key for the vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires the ticket from the server apparatus as a response to the request from the request unit; and
a connection unit that establishes a communication path for performing the exchange of the predetermined data with the electronic device that stores the ticket, via a network that is different from a network for connecting to the server apparatus by using the ticket that is acquired by the second acquisition unit.

In this case, communication between the communication apparatus and the electronic device is performed using the ticket acquired from the server apparatus based on the first identification information and the second identification information. Thus, access to the electronic device can be performed safely and easily.

### (Item 3-2)

An electronic device that is mountable in a vehicle, comprising:
a communication unit that is connectable to a communication apparatus that is connectable to the electronic device via a first network and is also connectable, via a second network that is different from the first network, to a server apparatus that stores a ticket for allowing for the exchange of predetermined data with the electronic device and first identification information for identifying the electronic device; and
an authentication unit that establishes a communication path for performing the exchange of the predetermined data with the communication apparatus based on the ticket from the communication apparatus even when the communication apparatus is not connected to the server apparatus, given that, in the communication apparatus, (1) first identification information is acquired from a key for the vehicle that stores the first identification information, (2) the server apparatus is requested to register the communication apparatus by the outputting of a combination of second identification information for identifying the communication apparatus and the first identification information to the server apparatus, and (3) the ticket is acquired from the server apparatus as a response to the request, even when the communication unit is not connected to the communication apparatus.

In this case, communication between the communication apparatus and the electronic device is performed using the ticket acquired by the communication apparatus from the server apparatus based on the first identification information and the second identification information. Thus, access to the electronic device can be performed safely and easily.

### (Item 3-3)

A server apparatus that stores a ticket for allowing for the exchange of predetermined data with an electronic device and first identification information for identifying the electronic device, comprising:
a communication unit that is connectable to a communication apparatus that is connectable, via a first network, to the electronic device that is mountable in a vehicle and is also connectable, via a second network that is different from the first network, to the server apparatus; and
a reception unit that is requested to register the communication apparatus by receiving a combination of second identification information for identifying the communication apparatus and the first identification information from the communication apparatus to which the communication unit is connected even when the communication apparatus is not connected to the electronic device, given that the first identification information is acquired from a key for the vehicle that stores the first identification information in the communication apparatus even when the communication unit is not connected to the communication apparatus; and
an output unit that outputs a ticket to the communication apparatus to which the communication unit is connected as a response to the request in the reception unit,
wherein the ticket that has been output by the output unit is used when a communication path for performing the exchange of the predetermined data is established between the communication apparatus and the electronic device.

In this case, communication between the communication apparatus and the electronic device is performed using the ticket that has been output to the communication apparatus based on the first identification information and the second identification information. Thus, access to the electronic device from the communication apparatus can be performed safely and easily.

### (Item 3-4)

The server apparatus according to Item 3-3,
wherein, by receiving from another communication apparatus to which the communication unit is connected a combination of second identification information for identifying the other communication apparatus and the first identification information, the reception unit is requested to register the other communication apparatus after being requested for a change by the communication apparatus to which the output unit has output the ticket, and
wherein the output unit outputs the ticket to the other communication apparatus to which the communication unit is connected as a response to the request in the reception unit.

In this case, since the other communication apparatus is registered after the change is requested, changing of the communication apparatus to be registered can be performed safely.

### (Item 3-5)

The server apparatus according to Item 3-3, wherein, when the communication apparatus is registered according to the combination of the second identification information and the first identification information, the output unit does not output the ticket even when the reception unit receives a request for registration.

In this case, when the communication apparatus is registered, the ticket is not output even when another registration is received. Thus, access from an invalid communication apparatus can be prevented.

### (Item 3-6)

A key for a vehicle that stores first identification information for identifying an electronic device that is mountable in the vehicle,
wherein, when a server apparatus is requested to register a communication apparatus by the outputting of a combination of the first identification information and second identification information for identifying the communication apparatus after the first identification information is acquired by the communication apparatus, a ticket for allowing for the exchange of predetermined data with the electronic device is output from the server apparatus to the communication apparatus, and a communication path for performing the exchange of the predetermined data is established between the communication apparatus and the electronic device by using the ticket.

### (Item 3-7)

A communication system comprising:
an electronic device that is mountable in a vehicle;
a communication apparatus that is connectable to the electronic device via a first network; and
a server apparatus that stores update data ticket for allowing for the exchange of predetermined data with the electronic device and first identification information for identifying the electronic device and that is connectable, via a second network that is different from the first network, to the communication apparatus,
wherein the communication apparatus includes:
a first acquisition unit that acquires the first identification information from a key for the vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires the ticket from the server apparatus as a response to the request from the request unit; and
a connection unit that establishes a communication path for performing the exchange of the predetermined data with the electronic device that stores the ticket by using the ticket that is acquired by the second acquisition unit.

### (Item 3-8)

A communication method comprising:
acquiring first identification information from a key for a vehicle that stores the first identification information for identifying an electronic device that is mountable in the vehicle;
requesting, by outputting a combination of the first identification information that has been acquired and second identification information for identifying a communication apparatus to a server apparatus that stores a ticket for allowing for the exchange of predetermined data with the electronic device and the first identification information, the server apparatus to register the communication apparatus;
acquiring the ticket from the server apparatus as a response to the request; and
establishing a communication path for performing the exchange of the predetermined data with the electronic device that stores the ticket, via a network that is different from a network for connecting to the server apparatus by using the ticket.

### [DESCRIPTION OF THE REFERENCE NUMERALS]

10 server apparatus, 12 network, 14 base station apparatus, 16 vehicle, 18 vehicle-mounted apparatus, 20 communication apparatus, 30 server apparatus control unit, 32 wide-area communication unit, 34 management DB, 36 update data DB, 38 output unit, 40 management record, 42 update data, 60 communication apparatus control unit, 62 communication apparatus memory unit, 64 communication apparatus input unit, 66 communication apparatus display unit, 68 wide-area communication unit, 70 narrow-area communication unit, 72 wide-area IF, 74 narrow-area IF, 76 update data acquisition unit, 78 update unit, 80 version information acquisition unit, 82 version information, 84update data, 86 application for update, 87 passcode, 100 communication system, 130 vehicle-mounted apparatus control unit, 132 vehicle-mounted apparatus memory unit, 134 narrow-area communication unit, 136 vehicle-mounted apparatus input unit, 138 vehicle-mounted apparatus display unit, 140 input unit, 142 output unit, 144 version information, 146 update data, 152 authentication unit, 156 passcode

### [INDUSTRIAL APPLICABILITY]

According to the present disclosure, access to an electronic device can be facilitated.

## Claims

1. A communication apparatus comprising:
a first interface that is connectable, via a first network, to an electronic device that stores software subject to update;
a second interface that is connectable, via a second network that is different from the first network, to a server apparatus that stores update data for updating the software stored in the electronic device to which the first interface is connectable;
a first acquisition unit that acquires information regarding the version of the software stored in the electronic device from the electronic device to which the first interface is connected and stores the information regarding the version in a memory;
a second acquisition unit that acquires the update data from the server apparatus to which the second interface is connected based on the information regarding the version stored in the memory even when the first interface is not connected to the electronic device and stores the update data in the memory; and
an update unit that outputs the update data stored in the memory to the electronic device to which the first interface is connected even when the second interface is not connected to the server apparatus.

2. The communication apparatus according to claim 1, wherein the update unit determines the necessity of outputting the update data by comparing the information regarding the version of the software acquired from the electronic device to which the first interface is connected with the version of the update data stored in the memory.

3. The communication apparatus according to claim 1, wherein the update unit allows the electronic device to determine the necessity of outputting the update data by outputting the information regarding the version of the update data stored in the memory to the electronic device to which the first interface is connected.

4. A communication apparatus that is connectable, via a network, to a server apparatus that stores update data for updating software stored in an electronic device that is mountable in a vehicle and first identification information for identifying the electronic device, comprising:
a first acquisition unit that acquires the first identification information from a key for the vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires registration notification from the server apparatus as a response to the request from the request unit; and
a third acquisition unit that acquires the update data from the server apparatus and stores the update data in a memory when the second acquisition unit acquires the registration notification.

5. The communication apparatus according to claim 4, further comprising:
a fourth acquisition unit that acquires, via a network that is different from the network for connecting to the server apparatus, information regarding the version of the software stored in the electronic device from the electronic device and stores the information regarding the version in the memory; and
an update unit that outputs the update data stored in the memory to the electronic device that is connected even when the communication apparatus is not connected to the server apparatus, given that the update data is stored in the memory by the third acquisition unit based on the information regarding the version stored in the memory even when the communication apparatus is not connected to the electronic device.

6. A communication apparatus that is connectable, via a network, to a server apparatus that stores a ticket for allowing for the exchange of predetermined data with an electronic device that is mountable in a vehicle and first identification information for identifying the electronic device, comprising:
a first acquisition unit that acquires the first identification information from a key for the vehicle that stores the first identification information;
a request unit that requests the server apparatus to register the communication apparatus by outputting a combination of the first identification information acquired by the first acquisition unit and second identification information for identifying the communication apparatus to the server apparatus;
a second acquisition unit that acquires the ticket from the server apparatus as a response to the request from the request unit; and
a connection unit that establishes a communication path for performing the exchange of the predetermined data with the electronic device that stores the ticket, via a network that is different from a network for connecting to the server apparatus by using the ticket that is acquired by the second acquisition unit.

7. An electronic device that stores software subject to update, comprising:
a communication unit that is connectable to a communication apparatus that is connectable to the electronic device via a first network and is also connectable, via a second network that is different from the first network, to a server apparatus that stores update data for updating the software stored in the electronic device;
an output unit that outputs information regarding the version of the software stored in the electronic device to the communication apparatus to which the communication unit is connected; and
an input unit that receives the update data from the communication apparatus to which the communication unit is connected even when the communication apparatus is not connected to the server apparatus, given that the update data is acquired from the server apparatus in the communication apparatus based on the information regarding the version that is stored even when the communication unit is not connected to the communication apparatus,
wherein, when the software is updated by the update data received by the input unit, the output unit outputs the information regarding the version of the software stored in the electronic device to the communication apparatus to which the communication unit is connected.

8. An electronic device that is mountable in a vehicle, comprising:
a communication unit that is connectable to a communication apparatus that is connectable to the electronic device via a first network and is also connectable, via a second network that is different from the first network, to a server apparatus that stores update data for updating software stored in the electronic device and first identification information for identifying the electronic device; and
an input unit that receives the update data from the communication apparatus to which the communication unit is connected even when the communication apparatus is not connected to the server apparatus, given that, in the communication apparatus, (1) first identification information is acquired from a key for the vehicle that stores the first identification information, (2) the server apparatus is requested to register the communication apparatus by the outputting of a combination of second identification information for identifying the communication apparatus and the first identification information to the server apparatus, and (3) the update data from the server apparatus is stored based on registration notification acquired from the server apparatus, even when the communication unit is not connected to the communication apparatus.

9. An electronic device that is mountable in a vehicle, comprising:
a communication unit that is connectable to a communication apparatus that is connectable to the electronic device via a first network and is also connectable, via a second network that is different from the first network, to a server apparatus that stores a ticket for allowing for the exchange of predetermined data with the electronic device and first identification information for identifying the electronic device; and
an authentication unit that establishes a communication path for performing the exchange of the predetermined data with the communication apparatus based on the ticket from the communication apparatus even when the communication apparatus is not connected to the server apparatus, given that, in the communication apparatus, (1) first identification information is acquired from a key for the vehicle that stores the first identification information, (2) the server apparatus is requested to register the communication apparatus by the outputting of a combination of second identification information for identifying the communication apparatus and the first identification information to the server apparatus, and (3) the ticket is acquired from the server apparatus as a response to the request, even when the communication unit is not connected to the communication apparatus.

10. A communication method comprising:
by connecting via a first network to an electronic device that stores software subject to update, acquiring information regarding the version of the software stored in the electronic device from the electronic device and storing the information regarding the version in a memory;
by connecting, via a second network that is different from the first network, to a server apparatus that stores update data for updating the software stored in the electronic device based on the information regarding the version stored in the memory even when not connected to the electronic device, acquiring the update data from the server apparatus and storing the update data in the memory; and
outputting the update data stored in the memory to the electronic device that is connected even when not connected to the server apparatus.

11. A communication method comprising:
acquiring first identification information from a key for a vehicle that stores the first identification information for identifying an electronic device that is mountable in the vehicle;
requesting, by outputting a combination of the first identification information that has been acquired and second identification information for identifying a communication apparatus to a server apparatus that stores update data for updating software stored in the electronic device and the first identification information, the server apparatus to register the communication apparatus;
acquiring registration notification from the server apparatus as a response to the request; and
acquiring the update data from the server apparatus and storing the update data in a memory when the registration notification is acquired.

12. A communication method comprising:
acquiring first identification information from a key for a vehicle that stores the first identification information for identifying an electronic device that is mountable in the vehicle;
requesting, by outputting a combination of the first identification information that has been acquired and second identification information for identifying a communication apparatus to a server apparatus that stores a ticket for allowing for the exchange of predetermined data with the electronic device and the first identification information, the server apparatus to register the communication apparatus;
acquiring the ticket from the server apparatus as a response to the request; and
establishing a communication path for performing the exchange of the predetermined data with the electronic device that stores the ticket, via a network that is different from a network for connecting to the server apparatus by using the ticket.

13. A key for a vehicle that stores first identification information for identifying an electronic device that is mountable in the vehicle,
wherein, when a server apparatus is requested to register a communication apparatus by the outputting of a combination of the first identification information and second identification information for identifying the communication apparatus after the first identification information is acquired by the communication apparatus, a ticket for allowing for the exchange of predetermined data with the electronic device is output from the server apparatus to the communication apparatus, and a communication path for performing the exchange of the predetermined data is established between the communication apparatus and the electronic device by using the ticket.
